# EUROPÄISCHE PATENTSCHRIFT

(11) **EP 3 207 047 B1**
(45) Veröffentlichungstag und Bekanntmachung des Hinweises auf die Patenterteilung: **12.09.2018**
(21) Anmeldenummer: 15770807.4
(22) Anmeldetag: 25.09.2015
(51) Int. Cl.: B01J 20/10, B01J 20/22, B01J 20/28, B01J 20/30, B01J 20/32, B01J 41/04, B01J 41/13, C07F 9/53, C08F 112/14, C08F 261/06, C22B 3/24, C22B 59/00, C07F 9/30, C22B 3/38

(54) **ALKENYL(PERFLUORALKYL)PHOSPHINSÄURE**
ALKENYL (PERFLUOROALKYL) PHOSPHINIC ACID
ACIDE ALCÉNYL(PERFLUOROALKYL)PHOSPHINIQUE

(30) Priorität: 17.10.2014 EP 14003549
(43) Veröffentlichungstag der Anmeldung: 23.08.2017
(73) Patentinhaber: Merck Patent GmbH, 64293 Darmstadt (DE)
(72) Erfinder: IGNATYEV, Nikolai (Mykola), 47058 Duisburg (DE); SCHULTE, Michael, 65474 Bischofsheim (DE); KOPPE, Karsten, 45768 Marl-Polsum (DE); BILIR, Vural, 40591 Duesseldorf (DE); FRANK, Walter, 42329 Wuppertal (DE)
(86) Internationale Anmeldenummer: PCT/EP2015/001911
(87) Internationale Veröffentlichungsnummer: WO 2016/058668

(56) Entgegenhaltungen:
- US-A- 4 647 438

## Beschreibung

Die Erfindung betrifft Alkenyl(perfluoralkyl)phosphinsäuren, deren Herstellung und Zwischenprodukte, deren Verwendung als Monomere zur Herstellung von Oligomeren und/oder Polymeren, die entsprechenden Oligomere/Polymere sowie deren Verwendung als Ionenaustauscher, Katalysatoren, Extraktionsmedien und die entsprechenden Salze.

Es ist eine Vielzahl symmetrischer Bis(perfluoralkyl)phosphinsäuren bekannt für vielfältige Verwendungen. In Peppard, D.F. et al, Journal of Inorganic and Nuclear Chemistry 1965, 27(9), 2065-73 ist beispielsweise die Verwendung von Bis(n-octyl)phosphinsäure als selektiver Extraktant für metallische Kationen beschrieben.

Die einzigen Beispiele von Klassen unsymmetrischer Phosphinsäuren mit perfluorierten Gruppen sind Aryl(perfluoralkyl)phosphinsäuren, R^{F}(Aryl)P(O)OH(Aryl = 3-C₆H₄F, 4-C₆H₄F oder C₆H₅ und R^{F} = C₃F₇[L. M. Yagupol'skii, N. V. Pavlenko, N. V. Ignat'ev, G. I. Matyushecheva, V. Y. Semenii, J. Gen. Chem. U.S.S.R. Engl. Transl. 1984, 54, 297-302] oder Aryl = C₆H₅ and R^{F} = CₙF₂ₙ₊₁ (n = 2, 4, 6, oder 8) [A. I. Hosein, A. J. M. Caffyn, Dalton Trans. 2012, 41, 13504 - 13508]) oder unsymmetrische Phosphinsäuren mit zwei unterschiedlichen Perfluoralkylgruppen [WO 2003/082884].

Für die Herstellung der Aryl(perfluoralkyl)phosphinsäuren ist eine mehrstufige Vorschrift angewendet worden. Aryl(heptafluorpropyl)phosphinsäuren wurden durch Hydrolyse von Aryl[bis(heptafluorpropyl)]phosphinoxiden mit wässriger Natriumcarbonatlösung erhalten. Die Aryl[bis(heptafluorpropyl)]phosphinoxide selbst wurden mit einer mehrstufigen Vorschrift beginnend mit der Reaktion von Bis(heptafluorpropyl)chlorphosphin, (C₃F₇)₂PCl (einer nichtkommerziell erhältlichen Substanz), mit Arylmagnesiumbromiden, gefolgt von der Chlorierung zu XC₆H₄(C₃F₇)₂PCl₂ und Hydrolyse mit Ameisensäure zu XC₆H₄(C₃F₇)₂P=O (X= H oder F) hergestellt. Diese aufwendige Verfahrensweise ist für die Herstellung großer Mengen von Aryl(perfluoralkyl)phosphinsäuren nicht geeignet.
Die gemischtsubstituierten Phosphinoxide des Typs R(CF₃)₂P=O wurden über eine Arbusov-Typ Umlagerung von Bis(trifluormethyl)phosphinigsäureestern, (CF₃)₂P-OR, unter Einwirkung von CH₃l erhalten [J. F. Griffiths, A. B. Burg, J. Am. Chem. Soc. 1962, 84, 3442 - 3450].

WO 2003/082884 beschreibt die Herstellung der unsymmetrischen Bis(perfluoralkyl)phosphinsäuren durch Reaktion eines Perfluoralkylphosphonsäuredichlorids (R_{f}P(O)Cl₂) mit Perfluoralkylmagnesiumbromid zu einem unsymmetrisch substituierten Bis(perfluoralkyl)phosphinsäurechlorid und anschließender Hydrolyse zur Säure.

Entsprechende unsymmetrische Alkenyl-perfluoralkylphosphinsäuren sind dagegen keine bekannten Verbindungen, und dies, obwohl nicht-fluorierte unsymmetrische Phosphinoxide und unsymmetrische Dialkylphosphinsäuren und Dialkylphosphinsäurederivate typische Reagenzien (Liganden) für die asymmetrische Synthese sind [L. D. Quin, G. S. Quin, A Guide To Organophosphorus Chemistry, Wiley-Interscience, 2000, 282 - 306].

US 4,647,438 beschreibt ein Verfahren zur Flüssig-Flüssig-Extraktion von Seltenerdmetallen aus wässrigen Lösungen durch ein Extraktionsmedium enthaltend eine organische Phosphinsäure der Formel R1(R2)P(O)(OX), wobei R1 und R2 identisch oder verschieden sein können und unsubstituiertes oder substituiertes Alkyl, Cycloalkyl, Alkoxyalkyl oder Alkylcycloalkyl bedeuten und X H oder ein Kation bedeutet. Als mögliche Substituenten der Alkylgruppe werden OH oder Halogenatome beschrieben, beispielsweise F oder Cl. R1 und R2 werden bevorzugt als lineare oder verzweigte Alkylgruppe mit mindestens 6 C-Atomen oder als Cycloalkylgruppe mit mindestens 6 C-Atomen beschrieben. Als unsymmetrische Phosphinsäure wird 2,4,4-trimethylpentylcyclohexylphosphinsäure erwähnt. Es werden keine fluorierten oder perfluorierten Phosphinsäuren beschrieben. In den Beispielen wird Bis(2,4,4-trimethylpentyl)phosphinsäure verwendet.

US 7,691,478 beschreibt dünne Filme enthaltend beispielsweise eine Phosphinsäure, wobei die Phosphinsäure über die Säurefunktion an das Substrat gebunden ist. Diphenylphosphinsäure, Phenylphosphinsäure und Bis(perfluorheptyl)phosphinsäure werden als repräsentativ beschrieben. In Beispiel 1 wird keine Phosphinsäure verwendet.

Die Aufgabe der Erfindung war die Erweiterung des dem Fachmann zur Verfügung stehenden Spektrums an polymerisierbaren Monomeren, die sich zur Herstellung von Oligomeren und Polymeren eignen, und die die Funktionalität einer starken Brønsted-Säure besitzen. Sowohl die Monomere als auch die entsprechenden Oligomere/Polymere eignen sich deshalb als Ionenaustauscher oder als Extraktionsmedium oder als Brønsted-Säure Katalysatoren und können mit einem geeigneten Trägermaterial kombiniert werden. Weitere Vorteile der vorliegenden Erfindung ergeben sich für den Fachmann aus der folgenden Offenbarung.

Überraschenderweise lösen die erfindungsgemäßen Alkenyl(perfluoralkyl)phosphinsäuren der Formel I die gestellte Aufgabe hervorragend.

Ein erster Gegenstand der Erfindung sind demzufolge die Verbindungen der Formel I, 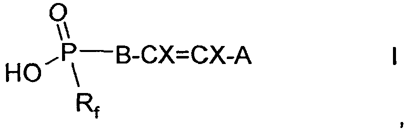 wobei
R_{f} eine geradkettige oder verzweigte Perfluoralkylgruppe mit 1 bis 12 C-Atomen bedeutet,
A H, F, Cl oder eine geradkettige oder verzweigte Alkylgruppe mit 1 bis 12 C-Atomen bedeutet,
B -(CR₁R₂)ₙ-, [-(CR₁R₂)ₘ-O-(CR₁R₂)ₘ₁-]ₘ₂, Arylen oder substituiertes Arylen bedeutet,
X H, F und/oder Cl bedeutet,
n eine ganze Zahl von 0 bis 20 bedeutet,
m eine ganze Zahl von 1 bis 20 bedeutet,
m₁ eine ganze Zahl von 0 bis 8 bedeutet,
m₂ eine ganze Zahl von 1 bis 20 bedeutet und
R₁ oder R₂ jeweils unabhängig voneinander H, F, Cl oder eine geradkettige oder verzweigte Alkylgruppe mit 1 bis 12 C-Atomen bedeuten.

R₁ und R₂ können verschieden oder gleich sein. Besonders bevorzugt sind R₁ und R₂ gleich.

Geradkettige oder verzweigte Perfluoralkylgruppen mit 1 bis 12 C-Atomen entsprechen der Formel CₘF₂ₘ₊₁ mit m = 1, 2, 3, 4, 5, 6, 7, 8, 9, 10, 11 oder 12. Bevorzugte Perfluoralkylgruppen sind geradkettige oder verzweigte Perfluoralkylgruppen mit 1 bis 8 C-Atomen.
Bevorzugt steht der Substituent Rf für Trifluormethyl, Pentafluorethyl, Heptafluorpropyl, geradkettiges oder verzweigtes Nonafluorbutyl, geradkettiges Perfluorhexyl oder geradkettiges Perfluoroctyl. Besonders bevorzugt steht der Substituent R_{f} für Pentafluorethyl, Heptafluorpropyl, lineares oder verzweigtes Nonafluorbutyl. Ganz besonders bevorzugt steht der Substituent R_{f} für Pentafluorethyl oder Nonafluorbutyl.

Geradkettige oder verzweigte Alkylgruppen mit 1 bis 4, 1 bis 6, 1 bis 8 oder 1 bis 12 C-Atomen entsprechen der Formel CₚH₂ₚ₊₁ mit p = 1, 2, 3 oder 4, oder 1, 2, 3, 4, 5 oder 6, oder 1, 2, 3, 4, 5, 6, 7 oder 8, oder 1, 2, 3, 4, 5, 6, 7, 8, 9, 10, 11 oder 12, beispielsweise Methyl, Ethyl, i-Propyl, Propyl, Butyl, i-Butyl oder tert-Butyl, ferner auch Pentyl, 1-, 2- oder 3-Methylbutyl, 1,1-, 1,2- oder 2,2-Dimethylpropyl, 1-Ethylpropyl oder Hexyl, Heptyl, Octyl, ferner auch Nonyl, Decyl, Undecyl oder Dodecyl.
Wird eine Alkylgruppe nicht näher bezeichnet, so handelt es sich um eine geradkettige Alkylgruppe.

Ein unsubstituiertes oder substituiertes Arylen leitet sich von einer Arylgruppe mit 6 bis 12 C-Atomen ab, beispielsweise von Phenyl, Naphthyl oder Anthryl. Bevorzugt entspricht das unsubstituierte oder substituierte Arylen dem unsubstituierten oder substituierten Phenylen.

Substituiertes Arylen bedeutet durch C₁- bis C₆-Alkyl, C₂- bis C₆-Alkenyl, F Cl, Br, OH, nicht fluoriertes, teilweise fluoriertes oder perfluoriertes C₁-C₆-Alkoxy substituiertes Arylen, wobei die Substituenten jeweils unabhängig voneinander ausgewählt werden. Ein bevorzugtes substituiertes Arylen ist Tetrafluorophenylen, Tetrachlorphenylen oder Trifluormethylphenylen.

Die Variable n steht bevorzugt für eine ganze Zahl von 1 bis 12.
Die Variable m steht bevorzugt für eine ganze Zahl von 1 bis 12.
Die Variable m₁ steht bevorzugt für eine ganze Zahl von 1 bis 3, besonders bevorzugt für 2.
Die Variable m₂ steht bevorzugt für eine ganze Zahl von 1 bis 3.

R₁ und/oder R₂ stehen bevorzugt für H, F oder Cl.

In Verbindungen der Formel I ist Rf bevorzugt eine geradkettige oder verzweigte Perfluoralkylgruppe mit 1 bis 8 C-Atomen.

Demzufolge sind Verbindungen der Formel I bevorzugt Gegenstand der Erfindung, wie zuvor beschrieben, wobei Rf eine geradkettige oder verzweigte Perfluoralkylgruppe mit 1 bis 8 C-Atomen bedeutet. Besonders bevorzugt ist Rf eine geradkettige oder verzweigte Perfluoralkylgruppe mit 1 bis 4 C-Atomen. Ganz besonders bevorzugt is Rf Pentafluorethyl.

In Verbindungen der Formel I ist B bevorzugt -(CR₁R₂)ₙ-, Arylen oder substituiertes Arylen, wobei R₁, R₂, Arylen und substituiertes Arylen eine zuvor angegebene Bedeutung haben.

Demzufolge sind Verbindungen der Formel I bevorzugt Gegenstand der Erfindung, wie zuvor beschrieben oder als bevorzugt beschrieben, wobei B -(CR₁R₂)ₙ-, Arylen oder substituiertes Arylen bedeutet und wobei R₁, R₂, Arylen und substituiertes Arylen eine zuvor angegebene Bedeutung haben.

In einer Ausführungsform der Erfindung sind Verbindungen der Formel I bevorzugt, wenn A und X die gleiche Bedeutung haben. In dieser Ausführungsform sind A und X bevorzugt H, F oder Cl, besonders bevorzugt H oder F, ganz besonders bevorzugt F.
Demzufolge sind Verbindungen der Formel I bevorzugt Gegenstand der Erfindung, wie zuvor beschrieben oder als bevorzugt beschrieben, wobei A und X gleich sind.
In dieser Ausführungsform, wenn A und X gleich sind, ist B bevorzugt-(CR₁R₂)ₙ-, Arylen oder substituiertes Arylen, wie zuvor beschrieben. In dieser Ausführungsform sind R₁ und R₂ bevorzugt gleich und entsprechen H, F oder Cl, besonders bevorzugt H oder F, ganz besonders bevorzugt H. Sind A und X bevorzugt H und B bedeutet -(CR₁R₂)ₙ-, so sind R₁ und R₂ bevorzugt H. Sind A und X bevorzugt F und B bedeutet -(CR₁R₂)ₙ-, so sind R₁ und R₂ bevorzugt F oder H, besonders bevorzugt H. Sind A und X bevorzugt H und B bedeutet Arylen, so wird das entsprechende Arylen bevorzugt unsbustituiert eingesetzt. Sind A und X bevorzugt F und B bedeutet Arylen, so wird das entsprechende durch F substituierte oder unsubstituierte Arylen bevorzugt eingesetzt. Sind A und X bevorzugt Cl und B bedeutet Arylen, so wird das entsprechende unsubstituierte Arylen bevorzugt eingesetzt.

In einer anderen Ausführungsform der Erfindung sind Verbindungen der Formel I bevorzugt, wenn A einer geradkettigen oder verzweigten Alkylgruppe mit 1 bis 12 C-Atomen entspricht.
Demzufolge sind Verbindungen der Formel I ebenfalls ein Gegenstand der Erfindung, wie zuvor beschrieben oder als bevorzugt beschrieben, wobei A eine geradkettige oder verzweigte Alkylgruppe mit 1 bis 12 C-Atomen bedeutet. In dieser Ausführungsform sind A und X nicht gleich.

In dieser Ausführungsform, wenn A und X nicht gleich sind, ist A bevorzugt Methyl oder Ethyl und X, R₁ und R₂ sind bevorzugt unabhängig voneinander H, F oder Cl. In dieser Ausführungsform ist A besonders bevorzugt Methyl und X, R₁ und R₂ sind besonders bevorzugt H, F oder Cl, ganz besonders bevorzugt H oder F und ganz besonders bevorzugt H. In dieser Ausführungsform ist B bevorzugt -(CR₁R₂)ₙ-, Arylen oder substituiertes Arylen, wie zuvor beschrieben. Ist X bevorzugt H und B bedeutet Arylen, so wird das entsprechende Arylen bevorzugt unsubstituiert eingesetzt. Ist X bevorzugt F und B bedeutet Arylen, so wird das entsprechende durch F substituierte oder unsubstituierte Arylen bevorzugt eingesetzt. Ist X bevorzugt Cl und B bedeutet Arylen, so wird das entsprechende unsubstituierte Arylen bevorzugt eingesetzt.

In einer Ausführungsform der Erfindung sind Verbindungen der Formel I besonders bevorzugt, wie zuvor beschrieben, in denen B -(CR₁R₂)ₙ-bedeutet. In besonders bevorzugte Verbindungen dieser Ausführungsform steht die Variable n für 1, 2, 4 oder 9.

Ganz besonders bevorzugte Verbindungen der Formel I sind Allylpentafluorethylphosphinsäure, Allylnonafluorbutylphosphinsäure, Pentafluorethyl(but-3-en-1-yl)phosphinsäure, Nonafluorbutyl(but-3-en-1-yl)phosphinsäure, Pentafluorethyl(undec-10-en-1-yl)phosphinsäure, Nonafluorbutyl(undec-10-en-1-ylphosphinsäure, Pentafluorethyl-4-styrylphosphinsäure, Nonafluorbutyl-4-styrylphosphinsäure, Pentafluorethyl(3,4,4-Trifluorbut-3-en-1-yl)phosphinsäure Nonafluorbutyl(3,4,4-Trifluorbut-3-en-1-yl)phosphinsäure, Nonafluorbutyl(1 ,2,2-trifluorvinyl)phosphinsäure, Pentafluorethyl(1,2,2-trifluorvinyl)phosphinsäure.

Ebenfalls Gegenstand der vorliegenden Erfindung sind Verfahren zur Herstellung von Verbindungen der Formel I, wie zuvor beschrieben oder als bevorzugt beschrieben.

Ein Gegenstand der Erfindung ist daher ein Verfahren zur Herstellung von Verbindungen der Formel I, wie zuvor beschrieben oder als bevorzugt beschrieben, dadurch gekennzeichnet, dass
a) eine Verbindung der Formel II

   (F)ₓ(R_{f})₄₋ₓP-B-CX=CX-A II,

   wobei R_{f}, A, B und X eine der zuvor angegebenen oder als bevorzugt angegebenen Bedeutungen haben und x 1 oder 2 bedeutet, hydrolysiert wird, wobei eine Zwischenverbindung der Formel lila intermediär entsteht, 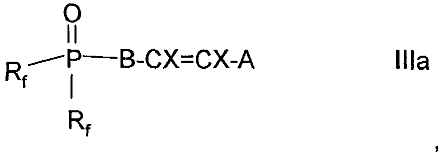 wobei R_{f}, A, B und X eine in Formel II angegebene Bedeutung haben, oder
b) eine Verbindung der Formel II

   (F)ₓ(R_{f})₄₋ₓP-B-CX=CX-A II,

   wobei R_{f}, A, B und X eine der zuvor angegebenen oder als bevorzugt angegebenen Bedeutungen haben und x 1, 2 oder 3 bedeutet, mit einem Hexaalkyldisiloxan ohne oder in Gegenwart einer katalytischen Menge Wasser umgesetzt wird,
   wobei die Alkylgruppen des Hexaalkyldisiloxans jeweils unabhängig voneinander eine geradkettige oder verzweigte Alkylgrupe mit 1 bis 4 C-Atomen bedeuten, so dass eine Zwischenverbindung der Formel III, 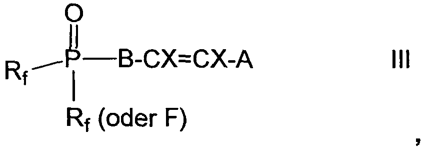 entsteht, wobei R_{f}, A, B und X eine in Formel II angegebene Bedeutung haben, die anschließend hydrolysiert wird.

Die Verbindungen der Formel II, wie zuvor beschrieben, können beispielsweise hergestellt werden, in dem ein Phosphoran, ausgewählt aus der Gruppe Difluortris(perfluoralkyl)phosphoran, Trifluorbis(perfluoralkyl)phosporan oder Tetrafluor(perfluoralkyl)phosphoran, unter Inertgasbedingungen mit einem Alkenylmagnesiumbromid (A-CX=CX-B-MgBr) oder einem Alkenylmagnesiumchlorid (A-CX=CX-B-MgCl) oder einem Alkenyllithium (A-CX=CX-B-Li) oder mit Di(alkenyl)zink [(A-CX=CX-B)₂Zn] oder mit Alkenylzinkchlorid (A-CX=CX-B-ZnCl) umgesetzt wird.
Die Perfluoralkylgruppe, A, X und B in den angegebenen Formeln haben eine Bedeutung, wie zuvor für die Formel I beschrieben.

Die Auswahl der benötigten organischen Metallverbindung richtet sich nach der Reaktivität, Stabilität und sterischen Hinderung der verwendeten Alkenylgruppe A-CX=CX-B-, wie zuvor beschrieben. Inertgasbedingungen bedeuten im Sinn der Erfindung, dass unter Anwesenheit eines Inertgases, beispielsweise Stickstoff, getrocknetem Stickstoff, getrocknetem Argon oder Argon, gearbeitet wird.

Die Synthese der Phosphorane über eine elektrochemische Fluorierung ist beispielsweise in WO 00/21969 beschrieben. Alternativ kann beispielsweise ein Bis(perfluoralkyl)trifluorphosphoran durch Reaktion von Tetrafluor-bis(perfluoralkyl)phosphat-Salzen mit SbF₅ oder SbCl₅ hergestellt werden, wie in WO 2005/049628 beschrieben.

Hexaalkyldisiloxane sind teilweise kommerziell erhältlich oder können nach bekannten Verfahren analog hergestellt werden. Geeignete Alkylgruppen sind bevorzugt gleich und werden bevorzugt ausgewählt aus Methyl, Ethyl, Propyl oder Butyl. Bevorzugt wird Hexamethyldisiloxan verwendet.

Die Hydrolyse der Verbindungen der Formel II, wie zuvor als Verfahrensvariante a) beschrieben, findet vorzugsweise bei einer Temperatur von 0°C bis 100°C statt. Die Reaktion kann exotherm sein. Die Endtemperatur zur vollständigen Umsetzung ist bevorzugt 60 bis 80°C. Die Schnelligkeit der Hydrolyse ist von der Länge der Perfluoroalkylgruppe R_{f} und der sterischen Größe der Alkenylgruppe -B-CX=CXA im Phosphoran der Formel II abhängig.

Die alternative Umsetzung der Verbindungen der Formel II, wie zuvor beschrieben, mit einem Hexaalkyldisiloxan, in der Verfahrensvariante b) wie zuvor beschrieben, findet vorzugsweise ohne Lösungsmittel bei Temperaturen von 0°C bis 120°C statt, besonders bevorzugt bei 80°C bis 100°C, wenn X H bedeutet und besonders bevorzugt bei 0°C bis 60°C, wenn X F bedeutet.
Alternativ kann auch in Gegenwart eines Lösungsmittels umgesetzt werden. Geeignete Lösungsmittel sind n-Hexan, 1,4-Dioxan, Benzol oder Toluol.

Sowohl bei der Hydrolyse als auch bei der Umsetzung mit einem Hexaalkyldisiloxan zu den Verbindungen der Formel I, entstehen als Zwischenverbindungen die entsprechenden Alkenyl-bis(perfluoralkyl)phosphinoxide der Formel III bzw. lila, 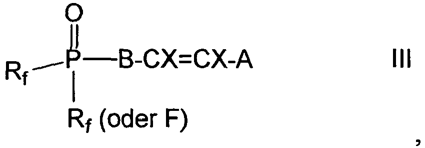 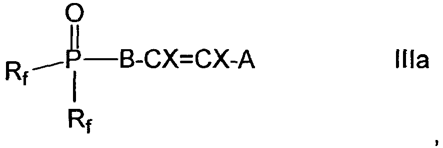 wobei R_{f}, A, B und X eine zuvor angegebene Bedeutung oder bevorzugt angegebene Bedeutung haben.
Eine Isolierung der intermediär entstehenden Verbindung der Formel III wird aufgrund deren Reaktivität in der Regel nicht durchgeführt. Eine Isolierung ist jedoch möglich, wenn man die spezielle Verbindung der Formel IIIa, 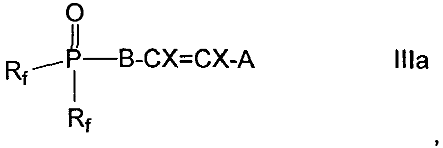 charakterisieren will. Geeignete Maßnahmen wären Extraktion und/oder destillative Trennung.

In der Verfahrensvariante b) kann die entstehende Zwischenverbindung der Formel III, falls diese der Formel lila entspricht, wie zuvor beschrieben, isoliert und gereinigt werden, bevor die weitere Hydrolyse stattfindet. Dies ist jedoch ebenfalls nicht zwingend notwendig. Die Verfahrensvariante b) kann auch als Eintopfvariante ausgeführt werden, in dem beide Reaktionsschritte hintereinander ausgeführt werden.

Die Hydrolyse der Verbindungen der Formel III bzw. der Formel IIIa, wie zuvor beschrieben, findet vorzugsweise bei Temperaturen von 30 bis 100°C statt, besonders bevorzugt bei 40°C bis 60°C statt, mit einer Reaktionsdauer von mehreren Stunden. Die Hydrolyse kann alternativ vorzugsweise bei Temperaturen von 80°C bis 120°C, vorzugsweise bei 100°C, mit einer Reaktionsdauer von 1 bis 10 Stunden durchgeführt werden.
Die Hydrolyse kann alternativ auch in Gegenwart eines Lösungsmittels stattfinden. Geeignete Lösungsmittel sind Acetonitril, Propionitril, Dioxan, Dimethoxyethan, Dimethylsulfoxid, Dimethylformamid, oder Alkohole, beispielsweise Methanol, Ethanol oder Isopropanol oder Mischungen der genannten Lösemittel.

Ein weiterer Gegenstand der Erfindung sind demzufolge auch die Verbindungen der Fromel IIIa, 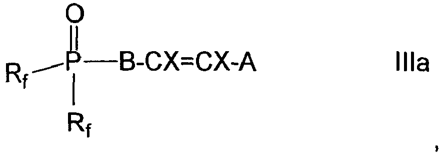 wobei
R_{f} eine geradkettige oder verzweigte Perfluoralkylgruppe mit 1 bis 12 C-Atomen bedeutet,
A H, F, Cl oder eine geradkettige oder verzweigte Alkylgruppe mit 1 bis 12 C-Atomen bedeutet,
B -(CR₁R₂)ₙ-, [-(CR₁R₂)ₘ-O-(CR₁R₂)ₘ₁-]ₘ₂, Arylen oder substituiertes Arylen bedeutet,
X H, F und/oder Cl bedeutet,
n eine ganze Zahl von 0 bis 20 bedeutet,
m eine ganze Zahl von 1 bis 20 bedeutet,
m₁ eine ganze Zahl von 0 bis 8 bedeutet,
m₂ eine ganze Zahl von 1 bis 20 bedeutet und
R₁ oder R₂ jeweils unabhängig voneinander H, F, Cl oder eine geradkettige oder verzweigte Alkylgruppe mit 1 bis 12 C-Atomen bedeuten.

Die Beschreibung der Bedeutungen oder der bevorzugten Bedeutungen von R_{f}, A, B und X in Verbindungen der Formel I, gilt entsprechend auch für die Zwischenverbindungen der Formel III bzw. der Zwischenverbindungen der Formel IIIa.

Ein weiterer Gegenstand der Erfindung ist demzufolge ebenfalls ein Verfahren zur Herstellung von Verbindungen der Formel IIIa, wie zuvor beschrieben, dadurch gekennzeichnet, dass eine Verbindung der Formel II

(F)ₓ(R_{f})₄₋ₓP-B-CX=CX-A II,

wobei R_{f}, A, B und X eine der zuvor angegebenen oder als bevorzugt angegebenen Bedeutungen haben und x 1 oder 2 bedeutet, durch Reaktion mit Wasser in einem organischen Lösemittel hydrolysiert wird.

Geeignete Lösemittel sind beispielsweise Acetonitril, Propionitril, Dioxan, Dimethoxyethan, Dimethylsulfoxid, Dimethylformamid, oder Alkohole, beispielsweise Methanol, Ethanol oder Isopropanol oder Mischungen der genannten Lösemittel.

Die Ausbeute an Verbindungen der Formel IIIa ist von dem verwendeten Lösemittel und der Menge an Wasser abhängig.

Ein weiterer Gegenstand der Erfindung ist ebenfalls ein Verfahren zur Herstellung von Verbindungen der Formel IIIa, wie zuvor beschrieben, dadurch gekennzeichnet, dass eine Verbindung der Formel II

(F)ₓ(R_{f})₄₋ₓP-B-CX=CX-A II,

wobei R_{f}, A, B und X eine der zuvor angegebenen oder als bevorzugt angegebenen Bedeutungen haben und x 1 oder 2 bedeutet, mit Erdalkalimetalloxiden, Erdalkalimetallcarbonaten, Zinkoxid, Kupfer(I)oxid, Kupfer(II)oxid, Silberoxid, Quecksilber(II)oxid, Cadmiumoxid oder Cadmiumcarbonat umgesetzt wird.

Prinzipiell können alle Erdalkalimetalloxide oder Erdalkalimetallcarbonate in dem erfindungsgemäßen Verfahren eingesetzt werden. Erdalkalimetalle sind bekanntlich Magnesium, Calcium, Strontium und Barium. Wirtschaftlich interessante Erdalkalimetalloxide oder Erdalkalimetallcarbonate sind beispielsweise Calciumoxid (CaO), Calciumcarbonat (CaCO₃), Magnesiumoxid (MgO) oder Bariumcarbonat (BaCO₃). Die genannten Metalloxide- oder Metallcarbonate, wie zuvor beschrieben, können in equimolarer Menge oder bis zum doppelten Überschuss verwendet werden.

Für die Synthese der Verbindungen der Formel lila, wie zuvor beschrieben, ist eine Ausführungsform der Erfindung bevorzugt, bei der Erdalkalimetalloxide oder Erdalkalimetallcarbonate eingesetzt werden.
Ein Gegenstand der Erfindung ist daher ein Verfahren, wie zuvor beschrieben, dadurch gekennzeichnet, dass Erdalkalimetalloxide oder Erdalkalimetallcarbonate verwendet werden. Bevorzugt werden diese ausgewählt werden aus CaO, CaCO₃, MgO oder BaCO₃.

Ganz besonders bevorzugt wird Calciumoxid verwendet.

Die im erfindungsgemäßen Verfahren eingesetzten Feststoffe sollten vorzugsweise in vermahlenem Zustand eingesetzt werden, damit eine möglichst große Oberfläche zur Reaktion vorhanden ist.

Jede Art der Vermahlung ist möglich, beispielsweise die Vermahlung mittels einer Kugelmühle.

Eine andere Alternative ist die Verwendung von Metalloxiden in Form feiner Partikel mit einem Durchmesser von 10 nm bis 0.1 mm, die vorzugsweise frisch hergestellt in dem erfindungsgemäßen Verfahren eingesetzt werden. Die Herstellung derartig hochaktiver Metalloxide aus entsprechenden Precursormaterialien ist dem Fachmann bekannt und kann nach Methoden erfolgen, die in der Literatur bekannt sind. Beispielsweise können derartige hochaktiven Metalloxide durch Sol-Gel-Verfahren hergestellt werden, in denen eine geeignete Precursorverbindung, beispielsweise ein entsprechendes Metallacetat in Alkohol oder einem Alkohol-WasserGemisch hydrolysiert wird.

Im Falle der Erdalkalimetalloxide oder Erdalkalimetallcarbonate ist es bevorzugt, die Feststoffe vorher zu trocknen. In der Regel wird jedoch ein Anteil von maximal 10 mol-% Wasser in dem erfindungsgemäßen Verfahren toleriert. In Ausnahmefällen, wie beispielsweise bei Einsatz von Kupfer(I)oxid, führt der beschriebene Anteil von Wasser sogar zu einer Beschleunigung der Reaktion.

Die Reaktion kann grundsätzlich bei Temperaturen zwischen 15°C und 200°C stattfinden. Werden niedrige Reaktionstemperaturen gewählt, so ist die entsprechende Reaktionszeit länger.
Ein Gegenstand der Erfindung ist daher auch ein Verfahren, wie zuvor beschrieben, dadurch gekennzeichnet, dass die Reaktion bei Temperaturen zwischen 15°C und 200°C stattfindet.

Bevorzugt wird bei Raumtemperatur gearbeitet, wenn lange Reaktionszeiten in der Größenordnung von Tagen gewünscht sind.

Bevorzugt erfolgt die Umsetzung bei Reaktionstemperaturen von 50°C bis 150°C, besonders bevorzugt bei Reaktionstemperaturen von 70°C bis 130°C.

Die Reaktion kann in einer Glasapparatur oder in einer Apparatur aus Kunststoff (wie z.B. Teflon) oder Stahl durchgeführt werden.
Die Reaktion in der Kunststoffapparatur oder in der Stahlapparatur dauert in der Regel länger
Bevorzugt wird ohne Lösungsmittel gearbeitet. Es ist jedoch auch möglich, in Gegenwart von Lösungsmitteln zu arbeiten, die inert gegenüber den eingesetzten Verbindungen sind, beispielsweise Dialkylether mit Alkylgruppen von 2 bis 4 C-Atomen, beispielsweise Diethylether, Diisopropylether, Dipropylether, Dibutylether.
Die entstehenden Metallfluoride sind nahezu unlöslich und können beispielsweise einfach durch Filtration oder Dekantation abgetrennt werden.

Die Reaktionsbedingungen werden in dieser Ausführungsform abgeleitet von den Reaktionsbedingungen, die in WO 2011/110281 beschrieben sind, insbesondere aus den Beispielen 1 bis 5.

Ein weiterer Gegenstand der Erfindung ist ebenfalls ein Verfahren zur Herstellung von Verbindungen der Formel IIIa, wie zuvor beschrieben, dadurch gekennzeichnet, dass eine Verbindung der Formel II

(F)ₓ(R_{f})₄₋ₓP-B-CX=CX-A II,

wobei R_{f}, A, B und X eine der zuvor angegebenen oder als bevorzugt angegebenen Bedeutungen haben und x 1 oder 2 bedeutet, mit Nichtmetalloxiden, Halbmetalloxiden oder organischen Verbindungen mit basischen Sauerstoffresten umgesetzt wird.

Prinzipiell können alle Nichtmetalloxide, Halbmetalloxide oder organische Verbindungen mit basischen Sauerstoffresten in dem erfindungsgemäßen Verfahren zur Herstellung der Verbindungen der Formel IIIa eingesetzt werden. Nichtmetalloxide sind bekanntlich Oxide von Kohlenstoff, Stickstoff, Phosphor oder Schwefel aber auch Selen, Halbmetalloxiden sind Oxide von Bor, Silizium, Arsen oder Tellur. Wirtschaftlich interessante Nichtmetalloxofluoride sind COF₂, P(O)F₃, S(O)F₂ Die genannten organischen Oxoverbindungen, sowie die Nichtmetall- oder Halbmetalloxide, wie zuvor beschrieben, können in equimolarer Menge oder großem Überschuss verwendet werden.

Bevorzugt verwendete Nichtmetalloxiden sind SO₂, POCl₃, P₄O₁₀, CO₂, SeO₂, insbesondere sind SO₂, CO₂ und SeO₂.

Ein bevorzugt verwendetes Halbmetalloxid ist SiO₂.

Bevorzugt verwendete organische Verbindungen mit basischen Sauerstoffresten sind Triphenylphoshinoxid (Ph₃PO), Ethylencarbonat oder Dimethylcarbonat, insbesondere Ethylencarbonat.

Für die Synthese der Verbindungen der Formel IIIa, wie zuvor beschrieben, ist eine Ausführungsform der Erfindung bevorzugt, bei der Nichtmetalloxide und Halbmetalloxide eingesetzt werden, insbesondere die als bevorzugt genannten Verbindungen. Ein Gegenstand der Erfindung ist daher ein Verfahren, wie zuvor beschrieben, dadurch gekennzeichnet, dass Nichtmetalloxide und Halbmetalloxide verwendet werden. Besonders bevorzugt zu verwenden sind Siliziumdioxid, Selendioxid oder Schwefeldioxid.

Die Reaktionszeiten können deutlich reduziert werden, wenn geringe Mengen Wasser zugegeben werden. Dabei kann Wasser in einem Stoffmengenanteil von 0.01 bis 0.8 Äquivalenten zugegeben werden. Bevorzugt werden 0.1 bis 0.5 Äquivalente Wasser zugegeben. Durch die Zugabe größerer Mengen Wasser, bevorzugt 0.5 bis 1.0 Äquivalente Wasser, reagiert ein Teil des Produktes weiter zu den entsprechenden Phosphinsäuren der Formel I und freigesetztes HF bildet mit einem Teil des Eduktes das entsprechende (Perfluoralkyl)fluorophosphat.

Die in diesem Verfahren eingesetzten Feststoffe sollten vorzugsweise in vermahlenem Zustand eingesetzt werden, damit eine möglichst große Oberfläche zur Reaktion vorhanden ist. Jede Art der Vermahlung ist möglich, beispielsweise die Vermahlung mittels einer Kugelmühle.

Die Feststoffe benötigen keine Art der Trocknung. In der Regel führt der beschriebene Anteil von Wasser zu einer Beschleunigung der Reaktion.

Die Reaktion kann grundsätzlich bei Temperaturen zwischen 80°C und 200°C stattfinden. Werden niedrige Reaktionstemperaturen gewählt, so ist die entsprechende Reaktionszeit länger. Ein Gegenstand der Erfindung ist daher auch ein Verfahren, wie zuvor beschrieben, dadurch gekennzeichnet, dass die Reaktion bei Temperaturen zwischen 25°C und 200°C stattfindet.

Bevorzugt wird bei Raumtemperatur gearbeitet, wenn lange Reaktionszeiten in der Größenordnung von Tagen gewünscht sind.

Bevorzugt erfolgt die Umsetzung bei Reaktionstemperaturen von 50°C bis 180°C, besonders bevorzugt bei Reaktionstemperaturen von 80°C bis 150°C.

Die Reaktion kann in einer Glasapparatur oder in einer Apparatur aus Kunststoff (wie z.B. Teflon) oder Stahl durchgeführt werden.
Die Reaktion in der Kunststoffapparatur oder in der Stahlapparatur dauert in der Regel länger
Bevorzugt wird ohne Lösungsmittel gearbeitet. Es ist jedoch auch möglich, in Gegenwart von Lösungsmitteln zu arbeiten, die inert gegenüber den eingesetzten Verbindungen sind, beispielsweise Dialkylether mit Alkylgruppen von 2 bis 4 C-Atomen, beispielsweise Diethylether, Diisopropylether, Dipropylether, Methylbutylether.

Die entstehenden Nebenprodukte sind gasförmig und können leicht abgetrennt werden. Reaktionen, in denen Feststoffe zum Einsatz kamen, können beispielsweise einfach durch Filtration oder Dekantation abgetrennt werden oder im Vakuum abkondensiert oder abdestilliert werden.

Die Isolierung der Produkte ist bei den gasförmigen Reaktanden nicht nötig. Die Nebenprodukte werden bei Verwendung einer Kühlung oberhalb des Siedepunktes der Nebenprodukte stetig ausgetragen. Der Rückstand ist hauptsächlich Produkt.
Die Verbindungen der Formel IIIa oder I können jedoch auch durch Kondensation oder Destillation von entstehenden festen Nebenprodukten abgetrennt werden.

Die Reaktionsbedingungen werden in dieser Ausführungsform abgeleitet von den Reaktionsbedingungen, die in WO 2014/005668 beschrieben sind, insbesondere aus den Beispielen 1 bis 9.

Ein weiterer Gegenstand der Erfindung ist ebenfalls ein Verfahren zur Herstellung von Verbindungen der Formel lila, wie zuvor beschrieben, dadurch gekennzeichnet, dass eine Verbindung der Formel II

(F)ₓ(R_{f})₄₋ₓP-B-CX=CX-A II,

wobei R_{f}, A, B und X eine der zuvor angegebenen oder als bevorzugt angegebenen Bedeutungen haben und x 1 oder 2 bedeutet, mit einem Hexaalkyldisiloxan ohne oder in Gegenwart einer katalytischen Menge Wasser umgesetzt wird,
wobei die Alkylgruppen des Hexaalkyldisiloxans jeweils unabhängig voneinander eine geradkettige oder verzweigte Alkylgrupe mit 1 bis 4 C-Atomen bedeuten.

Die Verbindungen der Formel I, wie zuvor beschrieben, können alternativ durch Hydrolyse der Zwischenverbindungen der Formel III hergestellt werden, wenn die Zwischenverbindungen der Formel III auf einem anderen Wege als über die Umsetzung einer Verbindung der Formel II, wie zuvor beschrieben, zugängig werden.

Ein weiterer Gegenstand der Erfindung ist demzufolge ebenfalls ein Verfahren zur Herstellung von Verbindungen der Formel I, wie zuvor beschrieben oder bevorzugt beschrieben, dadurch gekennzeichnet, dass eine Verbindung der Formel III hydrolysiert wird, 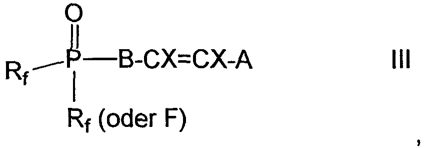 wobei R_{f}, A, B und X eine der zuvor angegebenen Bedeutungen oder bevorzugten Bedeutungen haben.

Vorzugsweise wird die nach den genannten Verfahren hergestellte Verbindung der Formel I nach herkömmlichen Methoden gereinigt. Geeignete Aufreinigungsschritte umfassen das Abtrennen von leicht flüchtigen Komponenten durch Destillation oder Kondensation, eine Extraktion mit einem organischen Lösungsmittel oder eine Kombination dieser Methoden. Jede bekannte Trennmethode kann hierfür verwendet oder kombiniert werden.

Ein weiterer Gegenstand der Erfindung ist die Verwendung der Verbindungen der Formel I, wie zuvor beschrieben oder als bevorzugt beschrieben, zur Herstellung von Oligomeren oder Polymeren.

Mit dem Begriff "Polymer" wird allgemein ein Molekül mit hoher relativer Molekülmasse bezeichnet, dessen Struktur im Wesentlichen die mehrfache Wiederholung von Einheiten umfasst, die tatsächlich oder vom Konzept her von Molekülen mit geringer relativer Molekülmasse abgeleitet sind (PAC, 1996, 68, 2291). Mit dem Begriff "Oligomer" wird allgemein ein Molekül mit mittlerer relativer Molekülmasse bezeichnet, dessen Struktur im Wesentlichen eine kleine Anzahl von Einheiten umfasst, die tatsächlich oder vom Konzept her von Molekülen mit geringerer relativer Molekülmasse abgeleitet sind (PAC, 1996, 68, 2291). In einer bevorzugten Bedeutung gemäß der vorliegenden Erfindung bezeichnet ein Polymer eine Verbindung mit > 1, vorzugsweise ≥ 5 Wiederholungseinheiten, und ein Oligomer bezeichnet eine Verbindung mit > 1 und < 10, vorzugsweise < 5 Wiederholungseinheiten. Die Anzahl der Monomereinheiten in einem Makromolekül wird auch als Polymerisationsgrad bezeichnet.

Wenn nicht anders angegeben, ist als Molekulargewicht das zahlenmittlere Molekulargewicht Mₙ oder gewichtsmittlere Molekulargewicht Mw angegeben, das durch Gelpermeationschromatographie (GPC) gegen Polystyrolstandards in eluierenden Lösungsmitteln wie Tetrahydrofuran, Trichlormethan (TCM, Chloroform), Chlorbenzol oder 1,2,4-Trichlorbenzol bestimmt wird. Der Polymerisationsgrad (n) bezeichnet den zahlenmittleren Polymerisationsgrad, gegeben durch
n = Mₙ/Mu, worin Mu das Molekulargewicht der einzelnen Wiederholungseinheit ist, wie in J. M. G. Cowie, Polymers: Chemistry & Physics of Modern Materials, Blackie, Glasgow, 1991, beschrieben.

Die Begriffe "Wiederholungseinheit" und "Monomereinheit" bezeichnen die zu Grunde liegende Wiederholungseinheit (constitutional repeating unit - CRU), bei der es sich um die kleinste zu Grunde liegende Einheit handelt, deren Wiederholung ein reguläres Makromolekül, ein reguläres Oligomermolekül, einen regulären Block oder eine reguläre Kette darstellt (PAC, 1996, 68, 2291). Der Begriff "Einheit" bezeichnet eine Struktureinheit, welche selbst eine Wiederholungseinheit sein kann oder zusammen mit anderen Einheiten eine Wiederholungseinheit bilden kann.

Das Oligomer oder Polymer, wie zuvor beschrieben, kann neben den polymerisierten Verbindungen der Formel I, wie zuvor beschrieben oder als bevorzugt beschrieben, noch alternative polymerisierte Monomereinheiten enthalten. In einer bevorzugten Ausführungsform der Erfindung handelt es sich um Homopolymere. Bei einem Homopolymer besteht das Polymer aus den polymerisierten Verbindungen der Formel I, wie zuvor beschrieben, als Monomereinheit.

Ein weiterer Gegenstand der Erfindung ist demzufolge ein Oligomer oder ein Polymer enthaltend die polymerisierten Verbindungen der Formel I, wie zuvor beschrieben oder als bevorzugt beschrieben, als Monomereinheit.

Ein weiterer Gegenstand der Erfindung ist demzufolge ein Oligomer oder ein Polymer bestehend aus polymerisierten Verbindungen der Formel I, wie zuvor beschrieben oder als bevorzugt beschrieben, als Monomereinheit.

Ein weiterer Gegenstand der Erfindung ist demzufolge ein Homooligomer oder ein Homopolymer bestehend aus polymerisierten Verbindungen der Formel I, wie zuvor beschrieben oder als bevorzugt beschrieben, als Monomereinheit.

Die Oligomere oder Polymere bzw. Homooligomere oder Homopolymere, wie zuvor beschrieben, können weiterhin linear oder vernetzt sein.

Die Wahl der Vernetzungsmittel oder des Vernetzungsmittels ist hierbei nicht eingeschränkt. Geeignete Vernetzungsmittel sind dem Fachmann auf dem Gebiet der Polymerchemie bekannt und werden nachfolgend beschrieben.

Ein weiterer Gegenstand der Erfindung ist ein Verfahren zur Herstellung von Oligomeren oder Polymeren, wie zuvor beschrieben, dadurch gekennzeichnet, dass Verbindungen der Formel I, wie zuvor beschrieben oder als bevorzugt beschrieben, gegebenenfalls zusammen mit weiteren Monomeren und gegebenenfalls in Anwesenheit eines Vernetzungsmittels, polymerisiert werden.

Ein weiterer Gegenstand der Erfindung ist ein Verfahren zur Herstellung von Homooligomeren oder Homopolymeren, wie zuvor beschrieben, dadurch gekennzeichnet, dass Verbindungen der Formel I, wie zuvor beschrieben oder als bevorzugt beschrieben, gegebenenfalls in Anwesenheit eines Vernetzungsmittels, polymerisiert werden. Bevorzugt wird ein Homopolymer hergestellt.

Die Art der Polymerisation ist nicht eingeschränkt. Es kann anionisch, kationisch oder radikalisch polymerisiert werden. Auch eine lebende Polymerisation ist geeignet. Auch eine Pfropfpolymerisation auf ein Trägermaterial ist geeignet.

Im Fall einer Propfpolymerisation wird erfindungsgemäß mit Hilfe von Cer(IV)-ionen polymerisiert.
Ein weiterer Gegenstand der Erfindung ist das Verfahren zur Herstellung von Oligomeren oder Polymeren, wie zuvor beschrieben, wobei die Pfropfpolymerisation mit Hilfe von Cer(IV)-ionen durchgeführt wird.

Bevorzugt wird erfindungsgemäß radikalisch polymerisiert.
Ein weiterer Gegenstand der Erfindung ist das Verfahren zur Herstellung von Oligomeren oder Polymeren, wie zuvor beschrieben, wobei die Polymerisation radikalisch durchgeführt wird.

Bevorzugt wird die radikalische Polymerisation unter Ausschluß von Sauerstoff durchgeführt.

Die radikalische Polymerisation kann durch einen Radikalstarter, beispielsweise durch AIBN (2,2'-azobis(2-methylpropionitril)) oder V65 (2,2'-azobis(2,4-dimethylvaleronitril)), oder durch einen Fotoinitiator gestartet werden.

Der Radikalstarter wird beispielsweise in 0,01 bis 15 Gew.% eingesetzt, bezogen auf die Gesamtheit an Monomeren. Bevorzugt wird der Radikalstarter in 0,1 bis 5 Gew.% eingesetzt.

Bei einem Fotopolymerisationsinitiator wird der Polymerisationsprozess durch Bestrahlung des Initiator-Monomeren-Gemisches gestartet, wobei hierfür Energiestrahlen von Licht, Elektronen oder γ-Strahten verwendet werden können. Die Fotopolimerisaton führt in der Regel zu einem schnell vernetzten Endprodukt.
Bevorzugt wird mit UV-Licht bestrahlt.

Die Wahl des Fotoinitiators ist nicht eingeschränkt.
Geeignete Fotoinitiatoren für die Bestrahlung mit UV-Licht sind beispielsweise 2-Hydroxy-2-methyl-1-phenyl-propan-1-on, vermarktet unter dem Handelsnamen Darocur® 1173 der Firma BASF, oder 1-Hydroxycylohexylphenylketon, vermarktet beispielsweise unter dem Handelsnamen Irgacure® 184 von der Firma BASF (Ciba).

Ein Fotoinitiator wird beispielsweise in 0,1 bis 5 Gew.% eingesetzt, bezogen auf die Gesamtheit an Monomeren. Bevorzugt wird ein Fotoinitiator in 1 Gew.% eingesetzt.

Bei der Pfropfpolymerisation wird der Polymerisationsprozess durch Cer(IV)-ionen gestartet, wobei vorzugsweise die Verbindung [NH₄]₂Cer[NO₃]₆ in einer wässrigen HNO₃-Lösung verwendet wird.

In einer Ausführungsform der Erfindung werden die Monomere der Formel I oder ein Monomerengemisch enthaltend eine Verbindung der Formel I, wie zuvor beschrieben, in Gegenwart eines Vernetzungsmittels radikalisch polymerisiert.
Geeignete Vernetzungsmittel sind beispielsweise Hexadioldiacrylat, Divinylbenzol, Tripropylenglycoldiacrylat, Butandioldiacrylat, Trimethylolpropantriacrylat, Dipropylenglycoldiacrylat oder Mischungen davon. Bevorzugt wird als Vernetzungsmittel Tripropylenglycoldiacrylat (TPGDA) verwendet.

Die oder das Vernetzungsmittel wird bevorzugt in einer Menge von 3 bis 10 mol%, besonders bevorzugt in 5 mol% eingesetzt, bezogen auf die Gesamtheit an Monomeren.

In einer bevorzugten Ausführungsform der Erfindung wird ohne Vernetzungsmittel polymerisiert.

Ein weiterer Gegenstand der Erfindung ist demzufolge ein Verfahren zur Herstellung von Oligomeren oder Polymeren bzw. Homooligomeren oder Homopolymeren, wie zuvor beschrieben, dadurch gekennzeichnet, dass ohne Vernetzungsmittel polymerisiert wird.

In einer alternativen bevorzugten Ausführungsform der Erfindung wird mit Vernetzungsmittel polymerisiert.

In einer weiteren bevorzugten Ausführungsform der Erfindung, insbesondere für die industrielle Verwendung, wie nachfolgend ausgeführt, wird die Polymerisation in, auf oder an einem Trägermaterial durchgeführt.

Ein weiterer Gegenstand der Erfindung ist demzufolge ein Verfahren zur Herstellung von Oligomeren oder Polymeren bzw. Homooligomeren oder Homopolymeren, wie zuvor beschrieben, dadurch gekennzeichnet, dass die Polymerisation in, auf odr an einem Trägermaterial stattfindet.

Die radikalische Polymerisation wird vorzugsweise bei Temperaturen von 0°C bis 80 °C durchgeführt. Besonders bevorzugt wird bei Raumtemperatur polymerisiert. Besonders bevorzugt wird bei 60°C bis 70°C polymerisiert, wenn auf ein poröses Silica-Trägermaterial polymerisiert wird.

Die Propfpolymerisation wird vorzugsweise bei Temperaturen von 20°C bis 60°C durchgeführt. Besonder bevorzugt wird bei 40°C polymerisiert.

In den Polymeren gemäß der vorliegenden Erfindung ist die Gesamtanzahl der Monomereinheiten n vorzugsweise ≥ 50, sehr bevorzugt ≥ 100, insbesondere bevorzugt ≥ 500, und vorzugsweise bis zu 5000, sehr bevorzugt bis zu 50.000, insbesondere bevorzugt bis zu 200.000, einschließlich beliebiger Kombinationen der vorgenannten unteren und oberen Grenzwerte für n.

M_{w} ist bevorzugt mindestens 5,000, vorzugsweise mindestens 28,000, besonders bevorzugt mindestens 150,000, und vorzugsweise bis zu 3,000,000, besonders bevorzugt bis zu110,000,000.

Die erfindungsgemäßen Polymere haben vorzugsweise einen mittleren Polymerisationsgrad von 25 bis 400,000, bevorzugt von 351,600. Der mittlere Polymerisationsgrad wird über das gewichtsmittlere Molekulargewicht Mw und Polydispersität mittels GPC bestimmt. Die Polydispersität oder auch als Uneinheitlichkeit U bezeichnet, ist ein Maß für die Breite der Verteilung.

Die Oligomere oder Polymere enthaltend polymerisierte Verbindungen der Formel I als Monomereinheit oder bestehend aus polymerisierten Verbindungen der Formel I als Monomereinheit, wie zuvor beschrieben, werden beispielsweise bevorzugt als Ionenaustauscher oder als Brønsted-Säure Katalysator verwendet.

Bedingt durch die vorhandenen aziden Protonen der Phosphinsäure, sind sowohl die Verbindungen der Formel I, als auch die entsprechenden Polymere und Oligomere, wie zuvor beschrieben, in der Lage, einen lonenaustausch zu bewirken oder eine Katalyse zu bewirken.

Ein weiterer Gegenstand der Erfindung ist daher die Verwendung der Verbindungen der Formel I, wie zuvor beschrieben oder als bevorzugt beschrieben, oder die Verwendung der Oligomere/Polymere, wie zuvor beschrieben, oder auch der Kompositmaterialien enthaltend Verbindungen der Formel I oder die erfindungsgemäßen Oligomere/Polymere, wie nachfolgend beschrieben, als Ionenaustauscher oder als Brønsted-Säure Katalysator.

Eine alternative Verwendung, neben der Verwendung als lonentauscher, ist beispielsweise die Verwendung in der organischen Katalyse für chemische Reaktionen.
Eine weitere alternative Verwendung der erfindungsgemäßen Verbindungen der Formel I, wie zuvor beschrieben oder als bevorzugt beschrieben, oder die Verwendung der Oligomere/Polymere, wie zuvor beschrieben, oder auch Kompositmaterialien enthaltend Verbindungen der Formel I oder die erfindungsgemäßen Oligomere/Polymere ist beispielswiese die Verwendung als Katalysatoren für die Erzeugung von Vergaserkraftstoffkomonenten zur Steigerung der Oktanzahl oder für die Wasseranlagerung an Olefine zur Erzeugung einfacher Alkohole.

Die Eignung der Oligomere/Polymere, wie zuvor beschrieben, als Ionenaustauscher kann über die Bestimmung der Ionenaustauschkapazität IEC (ion exchange capacity) bestimmt werden. Die entsprechende Verbindung wird dazu beispielsweise in wässriger Natronlauge (0.1 M NaOH) suspendiert und 24 h bei Raumtemperatur kräftig gerührt. Die resultierende überstehende basische Lösung wird anschließend mit Salzsäure (0.1 M) titriert. Weitere Details zu dieser Bestimmung sind in Beispiel 26 erläutert.

Die Eignung der Polymere, wie zuvor beschrieben, als Ionenaustauscher kann ebenfalls über die Titration des Polymermaterials mit einer Lauge, beispielsweise einer Natronlauge, belegt werden.

Durch den lonenaustausch bedingt, entstehen Salze der Verbindungen der Formel I, wie zuvor beschrieben oder als bevorzugt beschrieben, sowie ionische Polymere/Oligomere enthaltend polymerisierte Salze der Verbindungen der Formel I als Monomereinheiten, auf einem Trägermaterial oder ohne ein Trägermaterial, wie zuvor oder nachfolgend beschrieben.

Die Verbindung der Formel I ist eine starke Säure die besonders gut für die Herstellung von Salzen der Formel IV geeignet ist.

Ein weiterer Gegenstand der Erfindung sind ebenfalls die Salze der Verbindungen der Formel I, entsprechend der Formel IV, 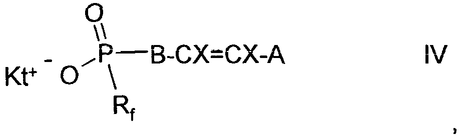 oder die entsprechenden ionischen Polymere/Oligomere, wie zuvor beschrieben, auf einem Trägermaterial oder ohne ein Trägermaterial, wobei die Kationen der Salze bzw. der ionischen Polymere/Oligomere Kt⁺ ein anorganisches oder organisches Kation sind und wobei R_{f}, A, B und X eine der zuvor angegebenen Bedeutungen oder bevorzugt angegebenen Bedeutungen haben.

In Bezug auf die Wahl des anorganischen oder organischen Kations der Salze der Formel IV oder der ionischen Polymere oder Oligomere, enthaltend polymerisierte Salze der Formel IV als monomere Einheiten auf einem Trägermaterial oder ohne ein Trägermaterial, gemäß der vorliegenden Erfindung, gibt es per se keine Einschränkungen.

Vorzugsweise handelt es sich bei den anorganischen Kationen um die Gruppe an Kationen, ausgewählt aus einem Kation eines Elements der Gruppe 1, 2, 3, 4, 5, 6, 7, 8, 9, 10, 11 und/oder 12 des Periodensystems.

Derartige Salze mit anorganischen Kationen, beispielsweise K⁺ oder Na⁺, sind insbesondere zur Herstellung von Salzen der Formel IV oder ionischen Polymeren, enthaltend polymerisierte Salze der Formel IV mit organischen Kationen oder alternativen anorganische Kationen, geeignet.

Vorzugsweise handelt es sich bei den organischen Kationen um organische Kationen ausgewählt aus der Gruppe umfassend Ammonium-, Sulfonium-, Oxonium-, Phosphonium-, Iodonium-, Tritylium-, Uronium-, Thiouronium-, Guanidiniumkationen oder um heterocyclische Kationen. Beispiele von organischen Kationen sind auch Polyammoniumionen mit einem Grad der Ladung 4.
Verbindungen der Formel IV mit organische Kationen, wie zuvor beschrieben, bilden dann sogenannte polymerisierbare ionische Flüssigkeiten. Die Anwendungen von ionischen Flüssigkeiten sind dem Fachmann hinlänglich bekannt.

Besonders geeignete organische Kationen werden ausgewählt aus der Gruppe Tetraalkylammonium, Tetraalkylphosphonium, 1,1-Dialkylpyrrolidinium, 1-Alkyl-1-alkoxyalkylpyrrolidinium oder 1,3-Dialkylimidazolium, wobei die Alkylgruppen oder die Alkoxygruppe in der Alkoxyalkylgruppe jeweils unabhängig voneinander 1 bis 10 C-Atome haben. Ganz besonders bevorzugt haben die Alkylgruppen 1 bis 6 C-Atome und die Alkoxygruppe 1 bis 3 C-Atome.

Die Alkylgruppen im Tetraalkylammonium oder im Tetraalkylphosphonium können daher gleich oder verschieden sein. Bevorzugt sind drei Alkylgruppen gleich und eine Alkylgruppe verschieden oder zwei Alkylgruppen sind gleich und die anderen beiden sind verschieden. Bevorzugte Tetraalkylammonium-Kationen sind beispielsweise Trimethyl(ethyl)ammonium, Triethyl(methyl)ammonium, Tripropyl(methyl)ammonium, Tributyl(methyl)ammonium, Tripentyl(methyl)ammonium, Trihexyl(methyl)ammonium, Triheptyl(methyl)ammonium, Trioctyl(methyl)ammonium, Trinonyl(methyl)ammonium, Tridecyl(methyl)ammonium, Trihexyl(ethyl)ammonium, Ethyl(trioctyl)ammonium, Propyl(dimethyl)ethylammonium, Butyl(dimethyl)ethylammonium, Methoxyethyl(dimethyl)ethylammonium, Methoxyethyl(diethyl)methylammonium, Methoxyethyl(dimethyl)propylammonium, Ethoxyethyl(dimethyl)ethylammonium. Besonders bevorzugte quartäre Ammoniumkationen sind Propyl(dimethyl)ethylammonium, Tributyl(methyl)ammonium und/oder Methoxyethyl(dimethyl)ethylammonium.

Bevorzugte Tetraalkylphosphonium-Kationen sind beispielsweise Trimethyl(ethyl)phosphonium, Triethyl(methyl)phosphonium, Tripropyl(methyl)phosphonium, Tributyl(methyl)phosphonium, Tripentyl(methyl)phosphonium, Trihexyl(methyl)phosphonium, Triheptyl(methyl)phosphonium, Trioctyl(methyl)phosphonium, Trinonyl(methyl)phosphonium, Tridecyl(methyl)phosphonium, Trihexyl(ethyl)phosphonium, Ethyl(trioctyl)phosphonium, Propyl(dimethyl)ethylphosphonium, Butyl(dimethyl)ethylphosphonium, Methoxyethyl(dimethyl)ethylphosphonium, Methoxyethyl(diethyl)methylphosphonium, Methoxyethyl(dimethyl)propyl phosphonium, Ethoxyethyl(dimethyl)ethyl phosphonium . Besonders bevorzugte quartäre Phosphoniumkationen sind Propyl(dimethyl)ethyl phosphonium und/oder Methoxyethyl(dimethyl)ethylphosphonium.

Bevorzugte 1,1-Dialkylpyrrolidinium-Kationen sind beispielsweise 1,1-Dimethyl-pyrrolidinium, 1-Methyl-1-ethyl-pyrrolidinium, 1-Methyl-1-propyl-pyrrolidinium, 1-Methyl-1-butyl-pyrrolidinium, 1-Methyl-1-pentyl-pyrrolidinium, 1-Methyl-1-hexyl-pyrrolidinium, 1-Methyl-1-heptyl-pyrrolidinium, 1-Methyl-1-octyl-pyrrolidinium, 1-Methyl-1-nonyl-pyrrolidinium, 1-Methyl-1-decyl-pyrrolidinium, 1,1-Diethyl-pyrrolidinium, 1-Ethyl-1-propyl-pyrrolidinium, 1-Ethyl-1-butyl-pyrrolidinium, 1-Ethyl-1-pentyl-pyrrolidinium, 1-Ethyl-1-hexyl-pyrrolidinium, 1-Ethyl-1-heptyl-pyrrolidinium, 1-Ethyl-1-octyl-pyrrolidinium, 1-Ethyl-1-nonyl-pyrrolidinium, 1-Ethyl-1-decyl-pyrrolidinium, 1,1-Dipropyl-pyrrolidinium, 1-Propyl-1-methyl-pyrrolidinium, 1-Propyl-1-butyl-pyrrolidinium, 1-Propyl-1-pentyl-pyrrolidinium, 1-Propyl-1-hexyl-pyrrolidinium, 1-Propyl-1-heptyl-pyrrolidinium, 1-Propyl-1-octyl-pyrrolidinium, 1-Propyl-1-nonyl-pyrrolidinium, 1-Propyl-1-decyl-pyrrolidinium, 1,1-Dibutyl-pyrrolidinium, 1-Butyl-1-methyl-pyrrolidinium, 1-Butyl-1-pentyl-pyrrolidinium, 1-Butyl-1-hexyl-pyrrolidinium, 1-Butyl-1-heptyl-pyrrolidinium, 1-Butyl-1-octyl-pyrrolidinium, 1-Butyl-1-nonyl-pyrrolidinium, 1-Butyl-1-decyl-pyrrolidinium, 1,1-Dipentyl-pyrrolidinium, 1-Pentyl-1-hexyl-pyrrolidinium, 1-Pentyl-1-heptyl-pyrrolidinium, 1-Pentyl-1-octyl-pyrrolidinium, 1-Pentyl-1-nonyl-pyrrolidinium, 1-Pentyl-1-decyl-pyrrolidinium, 1,1-Dihexyl-pyrrolidinium, 1-Hexyl-1-heptyl-pyrrolidinium, 1-Hexyl-1-octyl-pyrrolidinium, 1-Hexyl-1-nonyl-pyrrolidinium, 1-Hexyl-1-decyl-pyrrolidinium, 1,1-Dihexyl-pyrrolidinium, 1-Hexyl-1-heptyl-pyrrolidinium, 1-Hexyl-1-octyl-pyrrolidinium, 1-Hexyl-1-nonyl-pyrrolidinium, 1-Hexyl-1-decyl-pyrrolidinium, 1,1-Diheptyl-pyrrolidinium, 1-Heptyl-1-octyl-pyrrolidinium, 1-Heptyl-1-nonyl-pyrrolidinium, 1-Heptyl-1-decyl-pyrrolidinium, 1,1-Dioctylpyrrolidinium, 1-Octyl-1-nonyl-pyrrolidinium, 1-Octyl-1-decyl-pyrrolidinium, 1-1-Dinonyl-pyrrolidinium, 1-Nony-1-decyl-pyrrolidinium oder 1,1-Didecylpyrrolidinium. Ganz besonders bevorzugt ist 1-Butyl-1-methyl-pyrrolidinium oder 1-Propyl-1-methyl-pyrrolidinium.

Bevorzugte 1-Alkyl-1-alkoxyalkylpyrrolidinium-Kationen sind beispielsweise 1-Methoxyethyl-1-methyl-pyrrolidinium, 1-Methoxyethyl-1-ethyl-pyrrolidinium, 1-Methoxyethyl-1-propyl-pyrrolidinium, 1-Methoxyethyl-1-butyl-pyrrolidinium, 1-Ethoxyethyl-1-methyl-pyrrolidinium, 1-Ethoxymethyl-1-methyl-pyrrolidinium. Ganz besonders bevorzugt ist 1-Methoxyethyl-1-methyl-pyrrolidinium.

Bevorzugte 1,3-Dialkylimidazolium-Kationen sind beispielsweise 1-Ethyl-3-methyl-imidazolium, 1-Methyl-3-propyl-imidazolium, 1-Butyl-3-methyl-imidazolium, 1-Methyl-3-pentylimidazolium, 1-Ethyl-3-propyl-imidazolium, 1-Butyl-3-ethyl-imidazolium, 1-Ethyl-3-pentyl-imidazolium, 1-Butyl-3-propyl-imidazolium, 1,3-Dimethyl-imidazolium, 1,3-Diethyl-imidazolium, 1,3-Dipropypylimidazolium, 1,3-Dibutylimidazolium, 1,3-Dipentylimidazolium, 1,3-Dihexylimidazolium, 1,3-Diheptylimidazolium, 1,3-Dioctylimidazolium, 1,3-Dinonylimidazolium, 1,3-Didecylimidazolium, 1-Hexyl-3-methyl-imidazolium, 1-Heptyl-3-methyl-imidazolium, 1-Methyl-3-octyl-imidazolium, 1-Methyl-3-nonyl-imidazolium, 1-Decyl-3-methyl-imidazolium, 1-Ethyl-3-hexyl-imidazolium, 1-Ethyl-3-heptyl-imidazolium, 1-Ethyl-3-octyl-imidazolium, 1-Ethyl-3-nonyl-imidazolium oder 1-Decyl-3-ethyl-imidazolium. Besonders bevorzugte Kationen sind 1-Ethyl-3-methyl-imidazolium, 1-Butyl-3-methyl-imidazolium oder 1-Methyl-3-propyl-imidazolium.

Besonders bevorzugte organische Kationen der Verbindungen der Formel IV für die technischen Anwendungen von ionischen Flüssigkeiten sind demzufolge 1-Butyl-1-methylpyrrolidinium, 1-Ethyl-3-methylimidazolium, 1-Ethyl-2,3-dimethylimidazolium, 1-Butyl-2,3-dimethylimidazolium, 1-(2-Methoxyethyl)-3-methylimidazolium, 1-Butyl-3-methylimidazolium, Tributylmethylammonium, Tetra-n-butylammonium, Tributyl-methylphosphonium, Tetra-phenylphosphonium, Tetra-butylphosphonium, Diethylmethylsulfonium, S-Ethyl-N,N,N',N'-tetramethylisothiouronium, 1-Allyl-3-methylimidazolium, 1-Allyl-2,3-dimethylimidazolium, 1-Cyanomethyl-3-methylimidazolium, 1-(2-Cyanoethyl)-3-methylimidazolium, 1-Methyl-3-propinylimidazlium, 1-Butyl-4-methylpyridinum, 1,1-Dimethylpyrrolidinium.

Eine besondere Form des Ionenaustauschs ist der Austausch der Protonen durch Kationen der Seltenen Erden. Es besteht weiterhin ein Bedarf nach alternativen Verbindungen zur Extraktion von Kationen der Seltenen Erden aus Lösungen, vorzugsweise aus wässrigen Lösungen, besonders bevorzugt aus wässrigen sauren Lösungen.

Besonders bevorzugte anorganische Kationen der Verbindungen der Formel IV oder der ionischen Polymere/Oligomere enthaltend polymerisierte Verbindungen der Formel IV oder der Kompositmaterialien enthaltend Verbindungen der Formel IV oder ionische Polymere/Oligomere enthaltend polymerisierte Verbindungen der Formel IV, sind die Kationen der Seltenen Erden.
In einer bevorzugten Ausführungsform der Erfindung werden Kationen der Seltenen Erden aus der Gruppe Sc, Y, Lu, La, Ce, Pr, Nd, Pm, Sm, Eu, Gd, Tb, Dy, Ho, Er, Tm und Yb ausgewählt.

Bekanntermaßen können Seltenerdmetallkationen eine Wertigkeit von 2, 3 oder 4 haben. Bevorzugt ist die Wertigkeit des entsprechenden Kations 3 (z = 3).
In einer besonders bevorzugten Ausführungsform der Erfindung werden Kationen der Seltenen Erden aus der Gruppe Y, La, Ce, Pr, Nd, Sm, Eu, Gd und Tm extrahiert.

Ein weiterer Gegenstand der Erfindung ist daher die Verwendung der zuvor beschriebenen Verbindungen der Formel I oder der entsprechenden Polymere/Oligomere enthaltend polymerisierte Verbindungen der Formel I auf einem Trägermaterial oder ohne ein Trägermaterial zur Extraktion von Kationen der Seltenen Erden aus Lösungen, vorzugsweise aus wässrigen Lösungen, besonders bevorzugt aus wässrigen sauren Lösungen.

Die Quelle der entsprechenden Lösung ist nicht eingeschränkt. Es kann sich um eine entsprechende Lösung handeln, die bei der Aufarbeitung handelsüblicher Seltenerdminerale entsteht, beispielsweise bei der Aufarbeitung von Bastnesit, Monazit oder Xenotim. Es kann sich jedoch auch um eine Lösung handeln, die als Zwischenprodukt bei der Verarbeitung von Seltenerdmetallen bzw. Seltenerdmetalllösungen entstehen oder eine Lösung aus einem Abwasser oder eine Lösung, die bei der Wiederverwertung von technischen Geräten entsteht.

Die Lösung kann ein oder mehrere Seltenerdmetallkation(en) enthalten.

Der pH-Wert dieser Lösungen liegt vorzugsweise bei pH 0 bis 7.
Der Anteil der entsprechenden Kationen der Seltenerdmetalle in der Lösung liegt vorzugsweise bei ≤ 10 Gewichtsprozent.

Die wässrigen sauren Lösungen enthalten beispielsweise Chloridanionen, Sulfatanionen, Nitritanionen oder Nitratanionen oder ein Gemisch der genannten Anionen. Bevorzugt enthält die wässrige Lösung Chloridanionen oder ein Gemisch von Chlorid und Nitrat-Anionen.

Ein weiterer Gegenstand der Erfindung ist demzufolge auch ein Verfahren zur Extraktion von Kationen der Seltenen Erden aus Lösungen, vorzugsweise wässrigen Lösungen, besonders bevorzugt aus wässrigen sauren Lösungen, unter Verwendung einer Verbindung der Formel I, wie zuvor beschrieben oder einem Polymer/Oligomer enthaltend polymerisierte Verbindungen der Formel I wie zuvor beschrieben, oder einem Kompositmaterial enthaltend ein Polymer/Oligomer enthaltend oder bestehend aus polymerisierten Monomereinheiten der Formel I, wie nachfolgend beschrieben.

Bevorzugt wird die erfindungsgemäße Extraktion durchgeführt, indem
a) die Lösung enthaltend die Kationen der Seltenen Erden bereitgestellt wird,
b) die wässrige Lösung aus a) mit
b1) mindestens einer Verbindung der Formel I, wie zuvor beschrieben,
b2) einem Polymer oder Oligomer enthaltend polymerisierte Verbindungen der Formel I, wie zuvor beschrieben, oder
b3) einem Kompositmaterial enthaltend ein Trägermaterial und entweder eine Verbindung der Formel I oder ein Polymer oder ein Oligomer enthaltend polymerisierte Verbindungen der Formel I, wie nachfolgend beschrieben,
   gemischt wird, so dass mindestens ein Teil der aciden Protonen der Phosphinsäurefunktion mit den Kationen der Seltenen Erden ausgetauscht werden, um diese Kationen aus der Lösung zu extrahieren, wobei entsprechende Salze oder ionische Polymere/Oligomere entstehen,
c) abtrennen der Salze der Verbindungen der Formel I oder der ionischen Polymere oder Oligomere enthaltend polymerisierte Salze der Verbindungen der Formel I oder des Kompositmaterials von der wässrigen Lösung und gegebenenfalls
d) regenerieren zu Verbindungen der Formel I oder zu Polymeren oder Oligomeren enthaltend polymerisierte Verbindungen der Formel I oder des Kompositmaterials.

Die Extraktion kann diskontinuierlich im Batch-Verfahren oder kontinuierlich im Durchfluß durchgeführt werden, beispielsweise als Gleichstrom- oder Gegenstromverfahren.

Die Regenerierung der Verbindungen der Formel I, wie zuvor beschrieben, der Polymere oder Oligomere enthaltend polymerisierte Verbindungen der Formel I, wie zuvor beschrieben, oder des Kompositmaterials enthaltend eine Verbindung der Formel I oder ein Polymer oder Oligomer enthaltend polymerisierte Verbindungen der Formel I, wie nachfolgend beschrieben, erfolgt beispielsweise durch Austausch des Kations des Seltenerdmetalls mit einer Säure. Geeignete Säuren zur Regenerierung sind Chlorwasserstoffsäure, Schwefelsäure oder Salpetersäure oder ein Mischung der genannten Säuren.

Wird eine Flüssigphasenextraktion durchgeführt, so wird zunächst eine Phasentrennung durchgeführt und danach die Kationen der Seltenen Erden abgetrennt, wobei beispielsweise mit einer wässrigen Säure gespült wird. Geeignete Säuren sind zuvor gelistet. Die weitere Aufarbeitung der wässrigen Lösung enthaltend die Kationen der Seltenen Erden ist dann abhängig von der entsprechenden Anwendung.

In einer bevorzugten Ausführungsform der Erfindung wird ein Polymer enthaltend polymerisierte Verbindungen der Formel I, wie zuvor beschrieben oder als bevorzugt beschrieben, als Extraktionsmedium eingesetzt.

In einer alternativen bevorzugten Ausführungsform der Erfindung wird ein Polymer enthaltend polymerisierte Verbindungen der Formel I, wie zuvor beschrieben oder als bevorzugt beschrieben, kombiniert mit einem Trägermaterial eingesetzt. In dieser Ausführungsform eines Kompositmaterials ist die Abtrennung von der wässrigen Lösung am einfachsten.

Die Polymerisation kann innerhalb des Trägermaterials stattfinden oder lediglich an der Oberfläche des Trägermaterials. Dabei kann sich das enstehende Polymer enthaltend die polymerisierten Monomereinheiten der Formel I oder bestehend aus den polymerisierten Monomereinheiten der Formel I mit dem Trägermaterial kovalent verbinden. Die Erfindung schließt jedoch auch Trägermaterialien enthaltend Oligomere/Polymere enthaltend oder bestehend aus polymerisierten Monomereinheiten der Formel I ein, die lediglich an der Oberfläche oder in den Poren adsorbiert sind oder in denen die Polymerisation in den Poren stattfindet.

Ein weiterer Gegenstand der Erfindung ist ein Kompositmaterial enthaltend ein Trägermaterial und mindestens eine Verbindung der Formel I, wie zuvor beschrieben, oder ein Trägermaterial und ein Polymer oder Oligomer enthaltend polymerisierte Verbindungen der Formel I, wie zuvor beschrieben oder als alternativ oder bevorzugt beschrieben, oder ein entsprechendes Salz oder polymerisierte Salze der Formel IV nach erfolgreichem lonenaustausch.

Vorzugsweise enthält das Kompositmaterial ein Trägermaterial und ein Polymer enthaltend polymerisierte Verbindungen der Formel I, wie zuvor beschrieben oder als bevorzugt beschrieben.
Vorzugsweise enthält das Kompositmaterial ein Trägermaterial und ein Polymer bestehend aus polymerisierten Verbindungen der Formel I, wie zuvor beschrieben oder als bevorzugt beschrieben.

Das Kompositmaterial kann die genannten notwendigen oder optionalen Bestandteile umfassen oder enthalten, daraus im Wesentlichen bestehen oder daraus bestehen. Alle Verbindungen oder Komponenten, die in dem Kompositmaterial verwendet werden können, sind entweder bekannt und käuflich erwerbbar, können nach bekannten Verfahren synthetisiert werden oder sind zuvor oder nachfolgend beschrieben.

Als Trägermaterial ist jede Form einer Matrix geeignet, besispielsweise ein poröses Material, ein Film, eine Faser oder eine Hohlfaser. Das poröse Material kann ein Partikel oder ein monolithischer Formkörper sein.

Als Trägermaterial kommen anorganische Materialien, organische Materialien oder ein Kompositmaterial aus anorganischen und organischen Materialien in Frage.

Geeignete Trägermaterialien sind beispielsweise Polymerträgermaterialien, die ebenfalls porös sein können.

Geeignete Trägermaterialien sind Polysulfone, Polyethersulfone, Polyphenylsulfone, Polyimide, Polyamide, Polyvinylidenfluorid (PVDF), Polyacrylonitrile, Polyacrylamide, Polyacrylate, Polyanilin, Polyetherimide, Polyvinylether, Polystyrole oder Zelluloseacetat.
Ein bevorzugter Polyvinylether ist ein hydrophil quervernetzter Poyvinylether.

Ein besonders bevorzugtes Polymer als Trägermaterial ist ein hydrophiles vernetztes Polymer auf Basis eines Copolymers zumindest aus
a) mindestens einem hydrophil substituierten Alkylvinylether der Formel 1 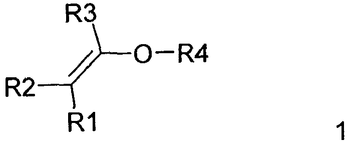 wobei R1, R2, R3 unabhängig voneinander H oder C1 bis C6 Alkyl, bevorzugt H oder -CH₃ sein können
   und R4 ein Rest ist, der zumindest eine Hydroxylgruppe trägt und
b) mindestens einem Vernetzer entsprechend Formel 2 und/oder 3 und/oder 4, mit 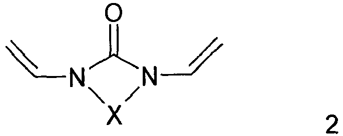 wobei X in der Formel 2 ein zweiwertiger Alkylrest mit 2 bis 5 C-Atomen, bevorzugt 2 oder 3 C-Atomen, ist, bei dem ein oder mehrere nicht benachbarte und nicht in direkter Nachbarschaft von N befindliche Methylengruppen durch O, C=O, S, S=O, SO₂, NH, NOH oder N ersetzt sein können und ein oder mehrere H-Atome der Methylengruppen unabhängig voneinander durch Hydroxylgruppen, C1-C6-Alkyl, Halogen, NH₂, C5-C10-Aryl, NH-(C1-C8)-Alkyl, N-(C1-C8)-Alkyl₂, C1-C6-Alkoxy oder C1-C6-Alkyl-OH substituiert sein können, und 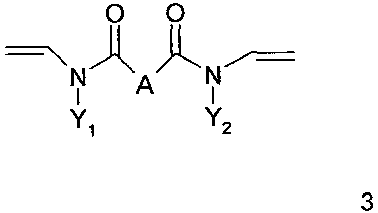 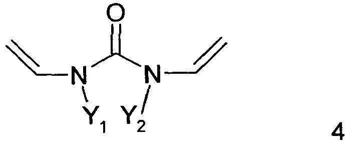
   wobei Y₁ und Y₂ in Formel 3 und 4 unabhängig voneinander C1 bis C10 Alkyl oder Cycloalkyl sind, wobei ein oder mehrere nicht benachbarte Methylengruppen oder nicht in direkter Nachbarschaft von N befindliche Methylengruppen durch O, C=O, S, S=O, SO₂, NH, NOH oder N ersetzt sein können und ein oder mehrere H der Methylengruppen unabhängig voneinander durch Hydroxygruppen, C1-C6-Alkyl, Halogen, NH₂, C5-C10-Aryl, NH(C1-C8)Alkyl, N(C1-C8)Alkyl₂, C1-C6-Alkoxy oder C1-C6-Alkyl-OH substituiert sein können,
   oder C6 bis C18 Aryl sind, wobei ein oder mehrere H in dem Arylsystem unabhängig voneinander durch Hydroxygruppen, C1-C6-Alkyl, Halogen, NH₂, NH(C1-C8)Alkyl, N(C1-C8)Alkyl₂, C1-C6-Alkoxy oder C1-C6-Alkyl-OH substituiert sein können und
   A in dieser Formel 3 ein zweiwertiger Alkylrest mit 2 bis 5 C-Atomen, bevorzugt 2 oder 3 C-Atomen, ist, bei dem ein oder mehrere nicht benachbarte Methylengruppen oder nicht in direkter Nachbarschaft von N befindliche Methylengruppen durch O, C=O, S, S=O, SO₂, NH, NOH oder N ersetzt sein können und ein oder mehrere H der Methylengruppen unabhängig voneinander durch Hydroxygruppen, C1-C6-Alkyl, Halogen, NH₂, C5-C10-Aryl, NH(C1-C8)Alkyl, N(C1-C8)Alkyl₂, C1-C6-Alkoxy oder C1-C6-Alkyl-OH substituiert sein können, wie in WO 2007/014591 beschrieben.

In einer besonders bevorzugten Ausführungsform wird als hydrophil substituierter Alkylvinylether 1,2-Ethandiolmonovinylether, 1,3-Propandiolmonovinylether, 1,4-Butandiolmonovinylether, 1,5-Pentandiolmonovinylether, 1,6-Hexandiolmonovinylether oder Diethylenglykolmonovinylether und als cycloaliphatischer Vinylether Cyclohexandimethanolmonovinylether eingesetzt.

In einer weiteren bevorzugten Ausführungsform wird als Vernetzer Divinylethylenharnstoff (1,3-Divinylimidazolin-2-on) oder Divinylpropylenharnstoff (1,3-Divinyl-tetrahydropyrimidin-2-on) eingesetzt.

In einer anderen bevorzugten Ausführungsform ist das Polymer porös mit Porengrößen zwischen 2 und 200 nm.

In einer anderen Ausführungsform liegt das Polymer in Form von Partikeln mit einem Durchmesser zwischen 3 und 300 µm vor.

Die erfindungsgemäßen Oligomere/Polymere können bevorzugt durch Pfropfpolymerisation auf dieses Polymermaterial aufgebracht werden, beispieslweise durch Pfropfpolymerisation unter Cer(IV)-Katalyse, wie in Beispiel 29 beschrieben.

Weitere bevorzugte Ausführungsformen dieses Polymermaterials als Trägermaterial und die Herstellung dieses Polymermaterials sind in WO 2007/014591 beschrieben, insbesondere in Beispiel 1.

Geeignete natürliche Trägermaterialien sind Kohlenhydratpolymere, wie beispielsweise Agarose, Cellulose, Dextran und Chitosan (A. Jungbauer, G. Carta, in: Protein Chromatography, Process Development and Scale-Up; WILEY-VCH Verlag, Weinheim (Germany) 2010).

Geeignete anorganische Trägermaterialien sind Metalloxide, beispielsweise SiO₂, einschließlich Silikaten und Silikagel, TiO₂, ZrO₂, Al₂O₃, ZnO oder deren Mischungen, wobei die anorganischen Oberflächen entsprechende freie Randgruppen besitzen müssen, die die Anbindung der Monomereinheit der Formel I erlauben. Entsprechende freie Randgruppen sind beispielsweise die OH-Gruppe oder die SH-Gruppe. In Beispiel 30 wird beispielsweise die Graft-Polymerisation an einem Mercapto-Kieselgel durchgeführt.
Von dem Begriff anorganische Trägermaterialien sind auch keramische Trägermaterialien umfasst, in denen beispielsweise eine Mischung von anorganischen Metalloxiden verwendet wird, wobei die Mischung auch eine Abfolge von unterschiedlichen Schichten von Metalloxiden auf einem Metalloxid als Substrat mit umfasst.

Geeignete anorganische Trägermaterialien sind ebenfalls Trägermaterialien basierend auf Aktivkohle.

Geeignete Trägermaterialien sind ebenfalls poröse Gläser mit Porendurchmessern von ca. 50 bis 300 Mikrometern, die gegebenenfalls durch ein Polymermaterial, wie zuvor beschrieben, funktionalisiert sind und die reaktive Gruppen tragen, an bzw. mit denen die Polymerisation mit den erfindungsgemäßen Monomereinheiten der Formel I stattfinden kann. Derartige poröse Gläser werden of als "controlled pore glass" (CPG) bezeichnet.

Die Trägermaterialien, vorzugsweise die porösen Trägermaterialien, können partikulär oder in monolithischer Form vorliegen.

Monolithische Trägermaterialien haben einen prösen Körper in dem Kanäle vorhanden sind, die durch Verbindung von Hohlräumen von einem Ende zum anderen Ende des anorganischen Trägermateirlas zustande kommen. Die Hohlräume enthalten eine Makropore und eine Mesopore, die sich an der inneren Oberfläche der Makropore ausbildet. In der Regel haben die Mesoporen eine Porengröße von 6 bis 100 nm. Weitere Details zu monolithischen Trägermaterialien werden beispielsweise in US 2011/0094955 in den Abschnitten [0019] bis [0029] beschrieben.

Bevorzugte geeignete Trägermaterialien sind poröse Materialien, in deren Poren der lonenaustausch bzw. die Extraktion stattfindet, vorzugsweise partikuläre Materialien.
Besonders bevorzugte Trägermaterialien sind partikulär.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Die folgenden Beispiele demonstrieren Synthesen von Verbindungen der Formel I und ihre Verwendung für Polymerisationsprozesse, Beispiele zur Herstellung von Polymeren und Kompositmaterialien und Beispiele von Ionentauschern sowie Beispiele zur Verwendung als Extraktionsmedium.

### Apparaturen und Materialien

Der Umgang mit gasförmigen oder leicht verdampfbaren Stoffen wird an fettfreien Glasvakuumlinien durchgeführt. Feuchtigkeitsempfindliche Feststoffe werden in einer Trockenbox (Fa. Jacomex mit dem Inertgasreinigungsmodul P(SYS)-II-P, Argonatmosphäre; H₂O und O₂ Bereich < 0.5 ppm) gelagert und gehandhabt. Organische Lösemittel werden gemäß der gängigen Standardliteratur gereinigt und getrocknet, beispielsweise wie in Wilfred L.F. Armarego, Christina L.L. Chai, Purification of Laboratory Chemicals, 5th ed.; Butterworth-Heinemann, Elsevier Science, 2003, beschrieben.

**NMR Spektroskopie:** NMR Proben werden entweder in einem 5 mm (Ø_{A}) Glas-NMR-Röhrchen oder in einem 3.7 mm (Øₐ) FEP Inliner bei 25 °C gemessen. Bei Messungen in FEP wird der Inliner in ein 5 mm (Øₐ) Präzisions-Dünnglas-NMR-Röhrchen (Wilmad 537) eingebracht. Die Locksubstanz, CD₃CN, befindet sich im Glas-NMR Röhrchen also zwischen Glas und FEP Inliner und wird im Folgenden mit Filmmessung oder Lösemittel-Film gekennzeichnet. Die Messungen erfolgen auf einem 400 MHz Bruker Avance III Spektrometer mit einem 9.3980 T Kryomagneten und einem 5 mm-BBFO Probenkopf. ¹H NMR Spektren werden im ¹H/¹⁹F Kanal bei 400.17 MHz gemessen. ¹³C, ¹⁹F und ³¹P NMR Spektren werden im Breitbandkanal bei 100.62, 376.54 und 161.99 MHz gemessen. Die ¹H NMR chemischen Verschiebungen werden auf Tetramethylsilan (TMS) bezogen und ergeben für die Lösemittel D₂O (4.81 ppm), CDCl₃ (7.24 ppm) und CD₃CN (1.96 ppm). Die ¹³C NMR chemischen Verschiebungen werden ebenfalls auf TMS bezogen und ergeben für die Lösemittel CDCl₃ (77.2 ppm) und CD₃CN (118.7 ppm). Die ¹⁹F NMR chemischen Verschiebungen werden auf CFCl₃ bezogen und ergeben für die internen Standards C₆F₆ (-162.9 ppm) oder C₆H₅CF₃ (-63.9 ppm). Die ³¹P NMR chemischen Verschiebungen werden auf H₃PO₄ (85 %) bezogen.

Die ¹⁹F NMR Spektren der unsymmetrischen Alkenbis(pentafluorethyl)phophinsäuren sind Spektren höherer Ordnung (AA'BB'). Die Analyse erlaubt daher keine direkte Zuordnung der Resonanzfrequenzen, die man als Zentrum des AA'- bzw. BB'-Teils direkt bestimmt, oder der Kopplungskonstanten *J* und *J'* bzw. *J*_{A} und *J*_{B}. Die Überprüfung der getroffenen Linienzuordnung erfolgt durch die Berechnung eines Probespektrums mit Hilfe des Programmes gNMR [Version 5.0.6.0; P. H. M. Budzelaar, IvorySoft], unter der Berücksichtigung der experimentell bestimmten Werte aus den ³¹P NMR Spektren, um auf diese Weise durch genauen Frequenz- und Intensitätsvergleich mit dem Experiment mögliche Fehlzuordnungen zu vermeiden. Die chemischen Verschiebungen wurden durch iterative Annäherungen der Parameter bestimmt.

### Fluoreszenzspektroskopie

Fluoreszenzspektroskopische Messungen werden mit einem HITACHI F-2700 Fluoreszenz Spetrophotometer durchgeführt. Der Band Pass für die Anregung die Emission beträgt 5 nm.

### GPC-Analyse

### Arbeitsbedingungen:

| | |
|---|---|
| Apparatur: | Hitachi Elite LaChrom |
| Eluent: | DMF Art. 1.03053 Ch. K44604953 |
| Probenlösemittel: | ID2013-10-31_KB01 |
| Fließgeschwindigkeit: | 1.0 mL/min |
| Druck: | 72 bar |
| Injektion: | 100 µL |
| Trennsäule: | 1 x PSS GRAM 100A 8 x 300mm SN 3090514 + 2 x PSS GRAM 3000A 8 x 300mm SN 3082811 + 3082814 |
| Säulentemperatur:40 °C | |
| Detektor: | RI Hitachi L-2490 Zellentemp. 40 °C, Polarity + |
| Auswerteverfahren: | PSS WINGPC Unity |
| EZChrom Methode: | PMMA.met |
| EZChrom Sequenz: | POLOXAMER.seq |
| WINGPC Methode: | POLOXAMER.met |
| Interner Standard: | 200 µL Ethylenglycol Art. 109621 Ch. K38533121 ad 200 mLEluent = ID2013-10-31_KB01 |

### Probenvorbereitung:

Von der Probe wurden 20 - 25 mg in 10 ml Probenlösemittel im Thermoschüttler gelöst, auf Raumtemperatur abgekühlt und je zweimal injiziert. Vor und nach den Probeninjektionen wurde je zweimal Probenlösemittel injiziert.

### Durchführung der Analysen:

Die Standard- und Probenlösungen wurden je zweimal injiziert. Vor, zwischen und nach den Standard- und Probeninjektionen wurde jeweils zweimal Probenlösemittel injiziert.

### PMMA-Standardlösung:

Als Eichlösungen wurden 20 - 25 mg PSS PMMA Eichstandards Mp 410 mmg14064, Mp 1.020 mmg19113, Mp 1.960 mmg23084, Mp 4.250 mmg24042, Mp 14.300 mmg20124, Mp 23.500 mmg15087, Mp 67.000 mmg2096, Mp 128.000 mmbs15, Mp 263.000 mml19095, Mp 579.000 mm6086, Mp 898.000 mm1086 und Mp 2.740.000 mm7086 in einen 20 ml Meßkolben genau eingewogen, mit Probenlösemittel im Thermomixer gelöst und mit Probenlösemittel bis zur Eichmarke aufgefüllt, analog analysiert und eine Kalibrierkurve mit Polynom 3 als Fit erstellt.

### Auswertung:

Eventuelle Elutionszeitverschiebungen werden über den internen Standard korrigiert.

### Beispiel 1. Synthese von Allylfluortris(pentafluorethyl)phosphoran durch Reaktion von Difluortris(pentafluorethyl)phosphoran und Allylmagnesium-bromid

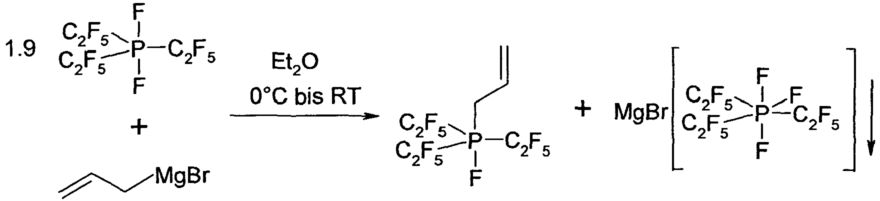

In einem 500-mL Glasrundkolben wird Difluortris(pentafluorethyl)phosphoran, (C₂F₅)₃PF₂ (82.8 g, 194 mmol), vorgelegt, gekühlt (0 °C) und in Diethylether (100 mL) emulgiert. Zu dieser Emulsion wird innerhalb einer Stunde Allylmagnesiumbromid, CH₂=CHCH₂MgBr (100 mL einer 1 mol/L Lösung in Diethylether; 100 mmol), zugegeben. Es fällt ein weißer Feststoff aus und die Reaktionsmutterlauge färbt sich gelb. Die Suspension wird 1 Stunde bei 0 °C und 1 Stunde bei Raumtemperatur gerührt. Anschließend wird die Reaktionssuspension filtriert und der Feststoff zwei Mal mit Diethylether (je 25 mL) gewaschen. Die Ether-Phasen werden vereint und Ether und überschüssiges (C₂F₅)₃PF₂ im Vakuum (10⁻¹ mbar) bei 0 °C abkondensiert. Die zurückbleibende gelbe Flüssigkeit besteht hauptsächlich aus Produkt, (C₂F₅)₃PF(CH₂CH=CH₂), und kleinen Mengen (C₂F₅)₃PF₂ und (C₂F₅)₃P=O. Durch Kondensation im Vakuum (10⁻³ mbar) bei 30 °C kann reines Allylfluortris(pentafluorethyl)phosphoran, (C₂F₅)₃PF(CH₂CH=CH₂) (37.1 g, 83 mmol), als klare und farblose Flüssigkeit mit einer Ausbeute von 83 % isoliert werden. Das isolierte Produkt wird mittels ¹H, ¹⁹F und ³¹P NMR Spektren charakterisiert.
NMR (Locksubstanz: CD₃CN-Film; δ in ppm):
¹H NMR: **3.56** m (2H), **5.32** m (2H), **5.71** m (1H)
¹⁹F NMR: **-7.3*** d, ¹*J*_{F,P} = 827 Hz (1F), **-81.9*** m (9F), **-122.0*** d, ²*J*_{F,P} = 80 Hz (6F)
³¹P NMR: **-42.0** d, sep, t, d, ¹*J*_{P,F} = 822 Hz, ²*J*_{P,F} = 78 Hz, ²*J*_{P,H} = 14 Hz, ³*J*_{P,H} = 5 Hz (1P)
   * Signale verbreitert

### Beispiel 2. Synthese von Allylpentafluorethylphosphinsäure durch Hydrolyse von Allylfluortris(pentafluorethyl)phosphoran in Wasser

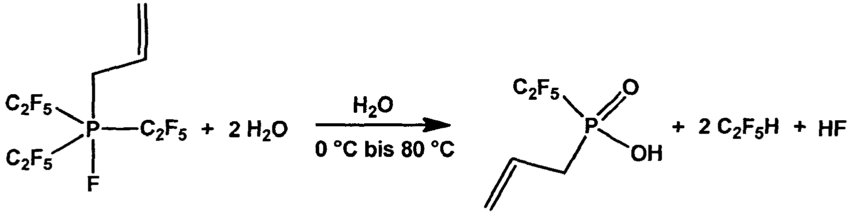

In einem 100-mL PFA-Rundkolben wird klares und farbloses Allylfluortris(pentafluorethyl)phosphoran, (C₂F₅)₃PF(CH₂CH=CH₂) (33.7 g, 75.2 mmol), vorgelegt, gekühlt (0 °C) und langsam Wasser (10 mL, ∼555 mmol) zugegeben. Die Reaktion ist sehr exotherm und wird gegebenenfalls mit Eis (0 °C) gekühlt. Die Emulsion wird 1 Stunde bei 0 °C bis 18 °C, 1.5 Stunden bei 35 °C, 1.5 Stunden bei 50 °C und schließlich 3 Stunden bei 80 °C gerührt. Es kann stetig Gasentwicklung beobachtet werden. Anschließend wird überschüssiges Wasser im Vakuum (10⁻³ mbar) bei 50 °C bis 65 °C abkondensiert. Das zurückbleibende Rohprodukt wird quantitativ in einen 100-mL Glaskolben überführt und im Vakuum (10⁻³ mbar) bei 100 °C kondensiert. Es kann Allylpentafluorethylphosphinsäure, (C₂F₅)(CH₂CH=CH₂)P(O)OH (14.2 g, 63.5 mmol), als klare und farblose Flüssigkeit mit einer Ausbeute von 84 % isoliert werden. Das isolierte Produkt wird mittels ¹H, ¹⁹F und ³¹P NMR Spektren charakterisiert.
NMR (Locksubstanz: CD₃CN-Film; δ in ppm)
¹H NMR: **2.24** m (2H), **4.74** m (2H), **5.14** m (1H).
¹⁹F NMR: **-81.9** m (3F), **-128.4** d, ²*J*_{F,P} = 73 Hz (2F).
³¹P NMR: **25.4 t,** t, d ²*J*_{P,F} = 83 Hz, ²*J*_{P,H} = 18 Hz, ³*J*_{P,H} = 5 Hz (1P).

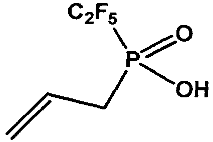

### Beispiel 3. Synthese von Allylbis(pentafluorethyl)phosphinoxid durch Hydrolyse von Allylfluortris(pentafluorethyl)phosphoran in Wasser

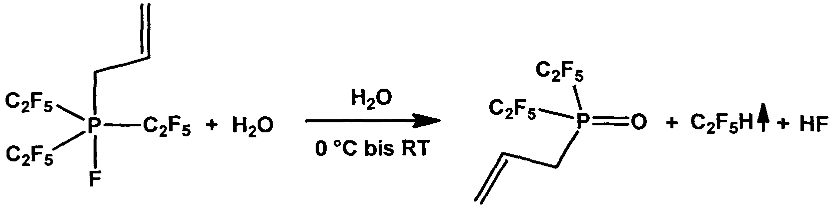

In einem 23-mm (Innendurchmesser) FEP-Reaktor wird klares und farbloses Allylfluortris(pentafluorethyl)phosphoran, (C₂F₅)₃PF(CH₂CH=CH₂) (11.45 g, 25.5 mmol), vorgelegt, gekühlt (0 °C) und mit Wasser (1.7 mL, 94 mmol) versetzt. Es bilden sich zwei Phasen und es kann Gasentwicklung beobachtet werden. Die Reaktionsemulsion wird 1.5 Stunden bei 0 °C und 30 Minuten bei Raumtemperatur gerührt. Es kann ein Umsatz von 79 % zu Allylbis(pentafluorethyl)phoshinoxid, (C₂F₅)₂P(O)(CH₂CH=CH₂), detektiert werden. Nebenverbindungen sind [H(H₂O)ₙ][(C₂F₅)₃PF₃] (21 %) und Spuren Bis(pentafluorethyl)phosphinsäure, (C₂F₅)₂P(O)OH. Die Verbindungen können mit Methoden, die dem Fachmann bekannt sind leicht voneinander getrennt werden. Für die weitere Hydrolyse kann man das Gemisch ohne weitere Reinigung verwenden (Beispiel 2). Das Produkt wird mittels ¹H, ¹⁹F und ³¹P NMR Spektren charakterisiert.
NMR (Locksubstanz: CD₃CN-Film; δ in ppm)
¹H NMR: **3.40** m (2H), **5.56** m (2H), **5.80** m (1H).
¹⁹F NMR: **-81.9** m (6F), **-122.1** d, m ²*J*_{FA,P} = 79 Hz, ²*J*_{FB,P} = 71 Hz, *J*_{FA,FB} = 341 Hz (2F_{A}), **-124.1** d, m, ²*J*_{FA',P} = 79 Hz, ²*J*_{FB',P} = 71 Hz, *J*_{FA',FB'} = 310 Hz (2F_{B}).
³¹P NMR: **36.4 t,** t ²*J*_{P,FA} = ²*J*_{P,FA'} = 79 Hz, ²*J*_{P,FB} = ²*J*_{P,FB'} = 71 Hz (1P).

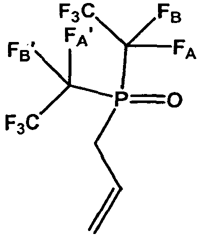

### Beispiel 4. Synthese von But-3-en-1-ylmagnesiumbromid

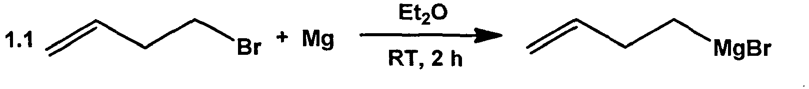

In einem 500-mL Glasrundkolben werden Magnesium-Späne (15.81 g, 650 mmol) in Diethylether (300 mL) vorgelegt und 4-Brom-1-buten (96.20 g, 713 mmol) innerhalb von 2 Stunden bei Raumtemperatur zugegeben. Die braune Suspension wird weitere 30 Minuten bei Raumtemperatur gerührt und anschließend filtriert. Es kann But-3-en-1-ylmagnesiumbromid (91 %, ∼592 mmol) in Diethylether als braune Lösung erhalten werden. Einziges Nebenprodukt ist 1,7-Octadien (9 %). Diese Lösung wird ohne weitere Reinigung verwendet. Das Produkt wird mittels ¹H und ¹³C NMR Spektren charakterisiert.
NMR (Locksubstanz: CD₃CN-Film; δ in ppm)
¹H NMR: **-0.57** t ³*J*_{H,H} = 8 Hz (2H^{a}), **2.15** t, d, d, d ³*J*_{H,H} = 8 Hz, ³*J*_{H,H} = 7 Hz, ⁴*J*_{H,H} = 1.5 Hz, ⁴*J*_{H,H} = 1.1 H_{z} (2H^{b}), **4.52** d, d, t ³*J*_{H,H}= 10 Hz, ²*J*_{H,H} = 3 Hz, ⁴*J*_{H,H} = 1.1 Hz (1H^{e}), **4.72** d, d, t ³*J*_{H,H} = 17 Hz, ²*J*_{H,H} = 3 Hz, ⁴*J*_{H,H} = 1.5 Hz (1H^{d}), **5.85** d, d, t ³*J*_{H,H} = 17 Hz, ³*J*_{H,H} = 10 Hz, ³*J*_{H,H} = 7 H_{z} (1H^{c})

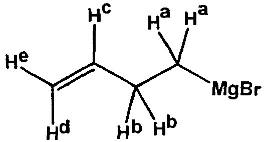

¹³C NMR: **7.5** t, m ¹*J*_{C,H} = 108 Hz, (1C^{a}), **34.1** t, d, d, d ¹*J*_{C,H} = 123 Hz, ²*J*_{C,H} = 5 Hz, ³*J*_{C,H} = 5 Hz, ³*J*_{C,H} = 5 Hz (1C^{b}), **108.7** d, d, t ¹*J*_{C,H} = 155 Hz, ¹*J*_{C,H} = 152 Hz, ³*J*_{C,H} = 6 Hz (1C^{d}), **148.3** d, t, m ¹*J*_{C,H} = 148 Hz, ²*J*_{C,H} = 6 Hz (1C^{c}).

### Beispiel 5. Synthese von Di(but-3-en-1-yl)zink durch Reaktion von But-3-en-1-ylmagnesiumbromid und Zinkchlorid

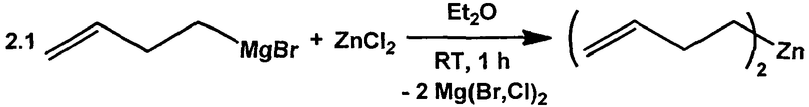

In einem 1000-mL Glasrundkolben wird Zinkchlorid (37.14 g, 272 mmol) in Diethylether (500 mL) suspendiert und die in Beispiel 4 beschriebene But-3-en-1-ylmagnesiumbromidlösung (592 mmol in Diethylether (300 mL)) innerhalb von 4 Stunden zugegeben. Es fällt ein voluminöser hellgrauer Niederschlag aus. Die Suspension wird 12 h bei Raumtemperatur gerührt und danach filtriert. Der graue Rückstand wird mit Diethylether (60 mL) gewaschen. Das gelbe Filtrat und die Waschlösung werden vereint und ein Großteil des Ethers im Vakuum (10⁻³ mbar) bei 0 °C abkondensiert. Das Produkt wird im Vakuum (10⁻³ mbar) bei 30 °C bis 40 °C aus der Suspension in eine gekühlte (-196 °C) Falle kondensiert. Reste von Diethylether und 1,7-Octadien können in einer weiteren Kondensation im Vakuum (10⁻³ mbar) bei -20 °C bis -15 °C entfernt werden. Durch erneutes Kondensieren des Produktes im Vakuum (10⁻³ mbar) bei 40 °C kann eine weitere Reinigung erreicht werden. Es kann Di(but-3-en-1-yl)zink (40.59 g, 231 mmol) als klare und farblose Flüssigkeit mit einer Ausbeute von 85 % und einer Reinheit von 99 % isoliert werden. Das isolierte Produkt wird mittels ¹H und ¹³C NMR Spektren charakterisiert.
NMR (Locksubstanz: CD₃CN-Film; δ in ppm)
¹H NMR: **0.40** t ³*J*_{H,H} = 8 Hz (4H^{a}), **2.24 t,** d, d, d ³*J*_{H,H} = 8 Hz, ³*J*_{H,H} = ⁶ Hz, ⁴*J*_{H,H} = 1.7 Hz, ⁴*J*_{H,H} = 1.2 Hz (4H^{b}), **4.84** d, d, t ³*J*_{H,H} = 10 Hz, ²*J*_{H,H} = 1.8 Hz, ⁴*J*_{H,H} = 1.2 Hz (2H^{e}), **4.94** d, d, t ³*J*_{H,H} = 17 Hz, ²*J*_{H,H} = 1.8 Hz, ⁴*J*_{H,H} = 1.7 Hz (2H^{d}), **5.92** d, d, t ³*J*_{H,H} = 17 Hz, ³*J*_{H,H} = 10 Hz, ³*J*_{H,H} = 6 Hz (2H^{c}).
¹³C NMR: **15.9** t, t, d, t ¹*J*_{C},_{H} = 121.3 Hz, ²*J*_{C,H} = 4.1 Hz, ²*J*_{C,H} = 4.0 Hz, ³*J*_{C,H} = 1.0 Hz (2C^{a}), **31.3 t,** m ¹*J*_{C,H} = 121.3 Hz (2C^{b}), **113.1** d, d, t, m ¹*J*_{C,H} = 157.5 Hz, ¹*J*_{C,H} = 152.3 Hz, ³*J*_{C,H} = 6.1 Hz (2C^{d}), **145.0** d, t, d, d, m ¹*J*_{C,H} = 121.3 Hz, ²*J*_{C,H} = 6.2 Hz, ²*J*_{C,H} = 6.2 Hz, ²*J*_{C,H} = 5.8 Hz (2C^{c}).

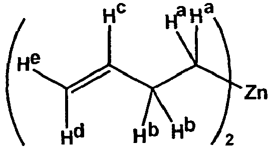

### Beispiel 6. Synthese von Bis(pentafluorethyl)trifluorphosphoran

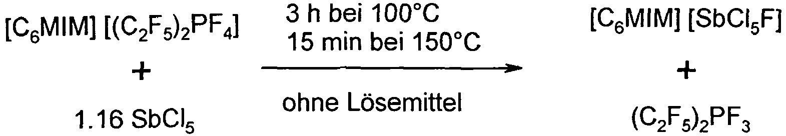

In einem 500-mL Glasrundkolben wird hellgelbes Hexylmethylimidazoliumbis(pentafluorethyl)tetrafluorophosphat, [C₆MIM][(C₂F₅)₂PF₄] (203.0 g, 396 mmol) vorgelegt, erwärmt (100 °C) und frisch destilliertes gelbes SbCl₅ (137.7 g; 460 mmol) innerhalb von 2.5 h zugetropft. Entstehendes Bis(pentafluorethyl)trifluorphosphoran, (C₂F₅)₂PF₃, (bp 46 °C) wird direkt in eine gekühlte (-78 °C) 300-mL Young-U-Falle kondensiert. Nach weiteren 30 min bei 100 °C und 15 min bei 150 °C kann Bis(pentafluorethyl)trifluorphosphoran, (C₂F₅)₂PF₃ (122.1 g; 375 mmol) als schwach gelbe Flüssigkeit in einer Ausbeute von 95 % (Reinheit 98 %) in der Falle isoliert werden. Das Phosphoran kann ohne Aufreinigung für nachfolgende Versuche verwendet werden. Das isolierte Produkt wird mittels ¹⁹F und ³¹P NMR Spektren charakterisiert.
NMR (Locksubstanz: CD₃CN-Film; δ in ppm)
¹⁹F NMR: **-55.2** d, qui, sep ¹*J*_{F,P} = 1145 Hz, ³*J*_{F,F} = 11 Hz, ⁴*J*_{F,F} = 7 Hz (3F), **-84.1** q, d ⁴*J*_{F,F} = 7 Hz, ³*J*_{F,P} = 2 Hz (6F), **-119.8** d, q ²*J*_{F,P} = 127 Hz, ³*J*_{F,F} = 11 Hz (4F)
³¹P NMR: **-40.1** q, qui, sep ¹*J*_{P,F} = 1145 Hz, ²*J*_{P,F} = 127 Hz, ³*J*_{P,F} = 2.0 Hz (1P).

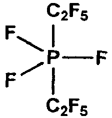

### Beispiel 7. Synthese von Bis(pentafluorethyl)(but-3-en-1-yl)difluorphosphoran durch Reaktion von Bis(pentafluorethyl)trifluorphosphoran und Di(but-3-en-1-yl)zink

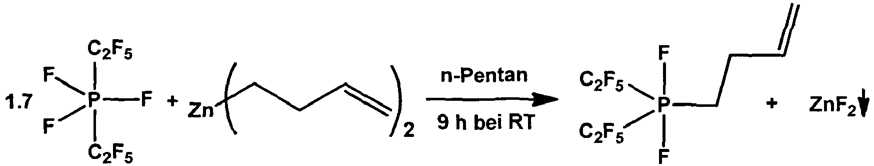

In einem 1000-mL Glasrundkolben wird Di(but-3-en-1-yl)zink (24.27 g, 138 mmol) in n-Pentan (350 mL) gelöst und Bis(pentafluorethyl)trifluorphosphoran, (C₂F₅)₂PF₃ (76.4 g, 234 mmol), innerhalb von 7.5 Stunden bei Raumtemperatur zugegeben. Es fällt ein weißer Feststoff aus. Die Suspension wird 1.5 Stunden bei Raumtemperatur gerührt und anschließend n-Pentan im Vakuum (10⁻³ mbar) bei -40 °C bis -25 °C abkondensiert. Das zurückbleibende Produkt wird im Vakuum (10⁻³ mbar) bei Raumtemperatur kondensiert. Es kann Bis(pentafluorethyl)(but-3-en-1-yl)difluorphosphoran, (C₂F₅)₂PF₂(CH₂CH₂CH=CH₂) (82.08 g, 227 mmol), als klare und farblose Flüssigkeit mit einer Ausbeute von 97 % und einer Reinheit von 91 % isoliert werden. Als Nebenprodukte werden Bis(pentafluorethyl)difluorcyclopropylmethylphosphoran, (C₂F₅)₂PF₂(CH₂-c-C₃H₅) (6 %) und Di(but-3-en-1-yl)zink (3%) detektiert. Dieses Gemisch wird ohne weitere Reinigung verwendet. Die Verunreinigungen können mit Methoden, die dem Fachmann bekannt sind, getrennt werden. Das Produkt wird mittels ¹H, ¹⁹F, ¹³C und ³¹P NMR Spektren charakterisiert.
NMR (Locksubstanz: CD₃CN-Film; δ in ppm)
¹H NMR: **2.35** m (2H^{a}), **2.47** m (2H^{b}), **5.02** d, m ³*J*_{H,H} = 10 Hz (1H^{e}), **5.05** d, m ³*J*_{H,H} = 17 Hz (1H^{d}), **5.71** d, d, t ³*J*_{H,H} = 17 Hz, ³*J*_{H,H} = 10 Hz, ³*J*_{H,H} = 6 Hz (1H^{c}) 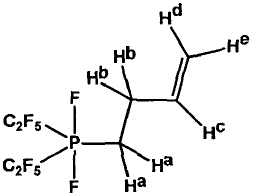 ¹³C NMR: **25.8** t, d, t, m ¹*J*_{C,H} = 133 Hz, ³*J*_{C,F} = 8 Hz, ²*J*_{C,P} = 4 Hz (1C^{b}), **29.0 t,** d, t, m ¹*J*_{C,H} = 123 Hz, ¹*J*_{C,P} = 108 Hz, ²*J*_{C,F} = 17 Hz (1C^{a}), **113.3** t, d, q, m ¹*J*_{C,F} = 284 Hz, ¹*J*_{C,P} = 86 Hz, ²*J*_{C,F} = 42 Hz (2CF₂), **116.0** d, d, t, d, m ¹*J*_{C,H} = 159 Hz, ¹*J*_{C,H} = 154 Hz, ³*J*_{C,H} = 6 Hz, ⁴*J*_{C,P} = 1.5 Hz (1C^{d}), **118.4** q, t, d, m ¹*J*_{C,F} = 286 Hz, ²*J*_{C,F} = 32 Hz, ²*J*_{C,P} = 27 Hz (2CF₃), **134.6** d, d, m ¹*J*_{C,H} = 156 Hz, ³*J*_{C,P} = 21 Hz (1C^{c})
¹⁹F NMR: **-49.7** d, t, q, m ¹*J*_{F,P} = 876 Hz, ³*J*_{F,F} = 14 Hz, ⁴*J*_{F,F} = 11 Hz (2F), **-83.6** t ⁴*J*_{F,F} = 11 Hz (6F), **-118.0** d, t ²*J*_{F,P} = 112 Hz, ³*J*_{F,F} = 14 Hz (4F)
³¹P NMR: **-31.5** t, qui, t, t ¹*J*_{P,F} = 876 Hz, ²*J*_{P,F} = 112 Hz, ²*J*_{P,H} = 18 Hz, ³*J*_{P,H} = 13 Hz (1P).

### Beispiel 8. Synthese von Bis(pentafluorethyl)(but-3-en-1-yl)phosphinoxid durch Reaktion von Bis(pentafluorethyl)(but-3-en-1-yl)difluorphosphoran und Hexamethyldisiloxan mit katalytischen Mengen H₂O

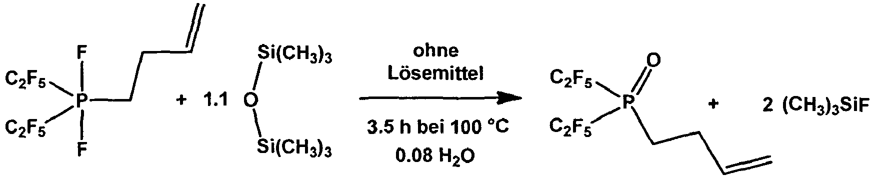

In einem 250-mL Glasrundkolben wird Bis(pentafluorethyl)(but-3-en-1-yl)difluorphosphoran, (C₂F₅)₂PF₂(CH₂CH₂CH=CH₂) aus Beispiel 7 (151.4 g, 418 mmol), enthaltend Bis(pentafluorethyl)difluorcyclopropylmethylphosphoran, (C₂F₅)₂PF₂(CH₂-c-C₃H₅) (5 %) und Di(but-3-en-1-yl)zink (3%)] mit Hexamethyldisiloxan (76.2 g, 469 mmol) und H₂O (619 mg; 34.4 mmol) versetzt und unter Gasentwicklung 3.5 Stunden bei 100 °C gerührt. Anschließend wird das Produkt im Vakuum (10⁻³ mbar) bei Raumtemperatur bis 30 °C kondensiert. Es kann Bis(pentafluorethyl)(but-3-en-1-yl)phosphinoxid, (C₂F₅)₂P(O)(CH₂CH₂CH=CH₂) (131.2 g; 386 mmol) als klare und farblose Flüssigkeit mit einer Ausbeute von 92 % isoliert werden. Nebenprodukte sind Bis(pentafluorethyl)cyclopropylmethylphosphinoxid, (C₂F₅)₂P(O)(CH₂-c-C₃H₅) (5 %, 6.8 g; 20 mmol), Trimethylfluorsilan und Hexamethyldisiloxan (13.7 g). Dieses Gemisch wird ohne weitere Reinigung verwendet. Die Verbindungen können mit Methoden, die dem Fachmann bekannt sind, getrennt werden.

Das Produkt, Bis(pentafluorethyl)(but-3-en-1-yl)phosphinoxid, (C₂F₅)₂P(O)(CH₂CH₂CH=CH₂), wird mittels ¹H, ¹³C, ¹⁹F und ³¹P NMR Spektren charakterisiert. 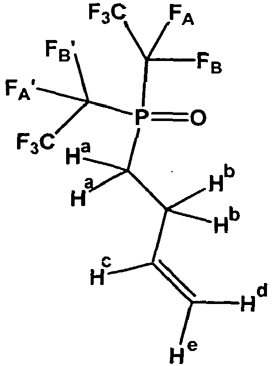 NMR (Locksubstanz: CDCl₃; δ in ppm)
¹H NMR: **2.44** m (2H^{a}), **2.56 m** (2H^{b}), **5.13** d, d, t ³*J*_{H,H} = 10 Hz, ²*J*_{H,H} = 1.2 Hz, ⁴*J*_{H,H} = 1.0 Hz (1H^{e}), **5.16** d, t, d ³*J*_{H,H} = 17 Hz, ⁴*J*_{H,H} = 1.5 Hz, ²*J*_{H,H} = 1.2 Hz (1H^{d}), **5.86** d, d, t ³*J*_{H,H} = 17 Hz, ³*J*_{H,H} = 10 Hz, ³*J*_{H,H} = 6 Hz (1H^{c})
¹³C NMR: **23.8** t, d, t, m ¹*J*_{C,H} = 133 Hz, ¹*J*_{C,P} = 64 Hz, ²*J*_{C,H} = 6 Hz (1C^{a}), **24.1** t, t, d, m ¹*J*_{C,H} = 132 Hz, ²*J*_{C,H} = 6 Hz, ²*J*_{C,H} = 5 Hz (1C^{b}), **112.9** d, d, d, q, m ¹*J*_{C,FA} = ¹*J*_{C,FA'} = 286 Hz, ¹*J*_{C,FB} = ¹*J*_{C,FB'} = ¹*J*_{C,P} = 88 Hz, ²*J*_{C,F} = 41 Hz (2CF₂), **117.3** d, d, t, d, m ¹*J*_{C,H} = 160 Hz, ¹*J*_{C,H} = 154 Hz, ³*J*_{C,H} = 6 Hz, ⁴*J*_{C,P} = 0.9 Hz (1C^{d}), **118.4** q, d, d, d, m ¹*J*_{C,F} = 287 Hz, ²*J*_{C,FA} = ²*J*_{C,FA'} = 31 Hz, ²*J*_{C,FB} = ²*J*_{C,FB'} = 30 Hz ²*J*_{C,P} = 17 Hz (2CF₃), **134.9** d, d, t, d, d ¹*J*_{C,H} = 156 Hz, ³*J*_{C,P} = 16 Hz, ²*J*_{C,H} = 6 Hz, ²*J*_{C,H} = 3 Hz, ²*J*_{C,H} = 3 Hz (1C^{c})
¹⁹F NMR: **-80.3** d, m ³*J*_{F,P} = 1.2 Hz (6F), **-121.7** d, m ²*J*_{FA,P} = 77 Hz, ²*J*_{FB,P} = 69 Hz, ²*J*_{FA,FB} = 340 Hz (2F_{A}), **-123.6** d, m²*J*_{FA',P} = 77 Hz, ²*J*_{FB',P} = 69 Hz, ²*J*_{FA',FB'} = 310 Hz (2F_{B})
³¹P NMR: **37.8** t, t, t, t, sep ²*J*_{P,FA} = ²*J*_{P,FA'} = 77 Hz, ²*J*_{P,FB} = ²*J*_{P,FB'} = 69 Hz, ²*J*_{P,H} = 10 Hz, ³*J*_{P,H} = 10 Hz, ³*J*_{P,F} = 1.2 Hz (1P).

### Beispiel 9. Synthese von (But-3-en-1-yl)(pentafluorethyl)phosphinsäure durch Hydrolyse von Bis(pentafluorethyl)(but-3-en-1-yl)phosphinoxid

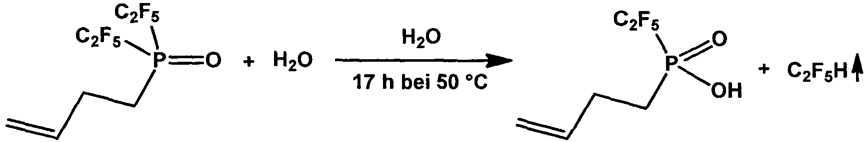

In einem 250-mL Glasrundkolben wird Bis(pentafluorethyl)(but-3-en-1-yl)phosphinoxid, (C₂F₅)₂P(O)(CH₂CH₂CH=CH₂) (130.3 g, 383 mmol) aus Beispiel 8 mit Wasser (100 mL) emulgiert und erwärmt (50 °C). Die Emulsion wird 17 Stunden bei 50 °C bei stetiger Gasentwicklung gerührt. Anschließend werden alle flüchtigen Bestandteile im Vakuum (10⁻³ mbar) bei Raumtemperatur abkondensiert. Das zurückbleibende Produkt wird im Vakuum (10⁻³ mbar) bei 130 °C destilliert. Es kann (Pentafluorethyl)(but-3-en-1-yl)phosphinsäure, (C₂F₅)(CH₂CH₂CH=CH₂)P(O)OH (89.7 g; 375 mmol), als klare und farblose Flüssigkeit (94.0 g) mit einer Ausbeute von 93% isoliert werden. Einziges Nebenprodukt ist Pentafluorethyl(cyclopropylmethyl)phosphinsäure, (C₂F₅)(CH₂-c-C₃H₅)P(O)OH (4.3 g; 18 mmol), das aus Bis(pentafluorethyl)cyclopropylmethylphosphinoxid im Startmaterial resultiert. Beide Verbindungen können mit Methoden, die dem Fachmann bekannt sind, getrennt werden. Das isolierte Produkt wird mittels ¹H, ¹³C, ¹⁹F und ³¹P NMR Spektren charakterisiert.
NMR (Locksubstanz: CDCl₃; δ in ppm)
¹H NMR: **2.02** m (2H^{a}), **2.41** m (2H^{b}), **5.06** d, t, d ³*J*_{H,H} = 10 Hz, ⁴*J*_{H,H} = 1.4 Hz, ²*J*_{H,H} = 1.1 Hz
(1H^{e}), **5.10** d, t, d ³*J*_{H,H} = 17 Hz, ⁴*J*_{H,H} = 1.4 Hz, ²*J*_{H,H} = 1.2 Hz (1H^{d}), **5.83** d, d, t ³*J*_{H,H} = 17 Hz, 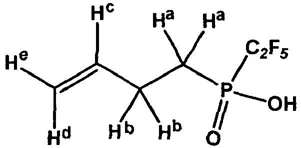 ³*J*_{H,H} = 10 Hz, ³*J*_{H,H} = 6 Hz (1H^{c}), **10.86** s Δv½ = 7 Hz (1OH)
¹³C NMR: **24.5** t, d, m ¹*J*_{C,H} = 129 Hz, ²*J*_{C,P} = 5 Hz (1C^{b}), **25.1** t, d, m ¹*J*_{C,H} = 129 Hz, ¹*J*_{C,P} = 102 Hz (1C^{a}), **111.6** t, d, q ¹*J*_{C,F} = 276 Hz, ¹*J*_{C,P} = 127 Hz, ²*J*_{C,F} = 40 Hz, (1CF₂), **116.5** d, d, t ¹*J*_{C,H} = 159 Hz, ¹*J*_{C,H} = 154 Hz, ³*J*_{C,H} = 6 Hz (1C^{d}), **119.0** q, t, d ¹*J*_{C,F} = 286 Hz, ²*J*_{C,F} = 31 Hz, ²*J*_{C,P} = 16 Hz (1CF₃), **136.3** d, d, t, d, d ¹*J*_{C,H} = 155 Hz, ³*J*_{C,P} = 17 Hz, ²*J*_{C,H} = 6 Hz, ²*J*_{C,H} = 3 Hz, ²*J*_{C,H} = 3 Hz (1C^{c})
¹⁹F NMR: **-80.8** s Δv_{½} = 5 Hz (3F), **-121.5** d ²*J*_{F,P} = 81 Hz (2F)
³¹P NMR: **34.5** t ²*J*_{P,F} = 81 Hz (1P).

### Beispiel 10. Synthese von Undec-10-en-1-ylmagnesiumbromid durch Reaktion von 11-Brom-1-undecen und Magnesium

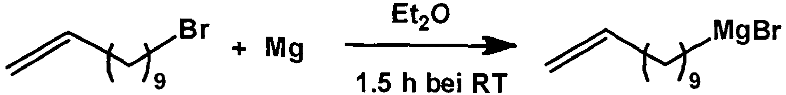

In einem 100-mL Glasrundkolben werden Magnesium-Späne (0.53 mg, 21.6 mmol) in Diethylether (20 mL) vorgelegt und 11-Brom-1-undecen (5.25 g, 22.5 mmol) in Diethylether (20 mL) innerhalb von 1 Stunde zugegeben. Die gelbe Suspension wird 30 Minuten bei Raumtemperatur gerührt und anschließend filtriert. Es kann Undec-10-en-1-ylmagnesiumbromid (83 %, -18 mmol) in Diethylether als gelbe Lösung erhalten werden. Nebenprodukt ist 1,21-Docosadien (11 mol%). Diese Lösung wird ohne weitere Reinigung verwendet. Das isolierte Produkt wird mittels ¹H und ¹³C NMR Spektren charakterisiert.
NMR (Locksubstanz: CD₃CN-Film; δ in ppm)
¹H NMR: **-0.54** t ³*J*_{H,H} = 8 Hz (2H^{a}), **1.26-1.29°** t ³*J*_{H,H} = 7 Hz (10H^{c-g}), **1.36°** t, t ³*J*_{H,H} = 7 Hz, ³*J*_{H,H} = 7 Hz (2H^{h}), **1.50** t, t 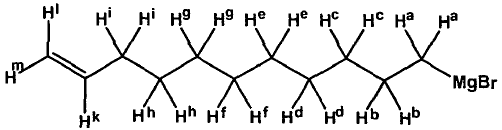 ³*J*_{H,H} = 7 Hz, ³*J*_{H,H} = 7 Hz (2H^{b}), **2.01** t, d, t ³*J*_{H,H} = 7 Hz, ³*J*_{H,H} = 7 Hz, ⁴*J*_{H,H} = 1 Hz (2Hⁱ), **4.86** d, d, t, t ³*J*_{H,H} = 10 Hz, ²*J*_{H,H} = 2 Hz, ⁴*J*_{H,H} = 1 Hz, ⁵*J*_{H,H} = 1 Hz (1H^{m}), **4.93** d, d, t ³*J*_{H,H} = 17 Hz, ²*J*_{H,H} = 2 Hz, ⁴*J*_{H,H} = 2 Hz (1H^{l}), **5.75** d, d, t ³*J*_{H,H} = 17 Hz, ³*J*_{H,H} = 10 Hz, ³*J*_{H,H} = 7 Hz (1H^{k})
¹³C{¹H} NMR: **8.5** (1C^{a}), **29.7** (1C^{b,d-h}), **29.9** (1C^{b,d-h}), **30.3°** (1C^{b,d-h}), **30.4°** (1C^{b,d-h}), **30.4°** (1C^{b,d-h}), **30.6** (1C^{b,d-h}), **34.5** (1Cⁱ), **39.0** (1C^{c}), **114.2** (1C^{l}), **139.4** (1C^{k}).
∘ Signale überlagert

### Beispiel 11. Synthese von Bis(undec-10-en-1-yl)zink durch Reaktion von Undec-10-en-1-ylmagnesiumbromid und Zinkchlorid

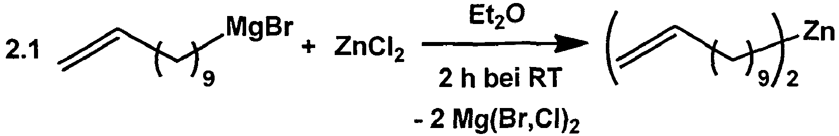

In einem 250-mL Glasrundkolben wird Zinkchlorid, ZnCl₂ (2.99 g, 21.9 mmol), in Diethylether (40 mL) suspendiert und eine Lösung von Undec-10-en-1-ylmagnesiumbromid (45.2 mmol, enthält 17 mol% 1,21-Docosadien) in Diethylether (120 mL) innerhalb von 45 Minuten zugegeben. Es fällt schnell ein voluminöser weißer Feststoff aus. Die Suspension wird unter Inertgas filtriert und der Rückstand mit Diethylether (10 mL) gewaschen. Das hellgelbe Filtrat wird zusammen mit der Waschlösung im Vakuum (10⁻³ mbar) bei Raumtemperatur eingeengt. Die entstehende voluminöse Suspension wird drei Mal mit *n*-Pentan (je 20 mL) extrahiert und inert filtriert. Anschließend werden die *n*-Pentan-Phasen vereint und *n*-Pentan im Vakuum (10⁻³ mbar) bei 40 °C abkondensiert. Es kann Di(undec-10-en-1-yl)zink (6.17 g, 16.6 mmol) als klare und gelbe Flüssigkeit mit einer Ausbeute von 76 % isoliert werden. Einziges Nebenprodukt ist 1,21-Docosadien (3.18 g, 10.4 mmol, 39 mol%). Beide Verbindungen können mit Methoden, die dem Fachmann bekannt sind, getrennt werden. Diese Lösung wird ohne weitere Reinigung verwendet. Das Produkt, Di(undec-10-en-1-yl)zink, wird mittels ¹H und ¹³C NMR Spektren charakterisiert.
NMR (Locksubstanz: CD₃CN-Film; δ in ppm) ¹H NMR: **0.39** t ³*J*_{H,H} = 8 Hz (4H^{a}), **1.26-1.28°** t ³*J*_{H,H} = 7 Hz (20H^{c-g}), **1.36°** t, t ³*J*_{H,H} = 7 Hz, ³*J*_{H,H} = 7 Hz (4H^{h}), **1.55** t, t ³*J*_{H,H} 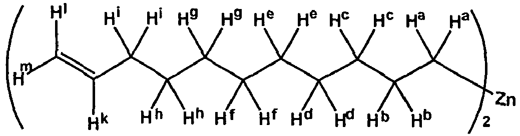 = 7 Hz, ³*J*_{H,H} = 7 Hz (4H^{b}), **2.00** t, d ³*J*_{H,H} = 7 Hz, ³*J*_{H,H} = 7 Hz (4Hⁱ), **4.87** d, d, t ³*J*_{H,H} = 10 Hz, ²*J*_{H,H} = 2 Hz, ⁴*J*_{H,H} = 1 Hz (2H^{m}), **4.93** d, d, t ³*J*_{H,H} = 17 Hz, ²*J*_{H,H} = 2 Hz, ⁴*J*_{H,H} = 2 Hz (2H^{l}), **5.73** d, d, t ³*J*_{H,H} = 17 Hz, ³*J*_{H,H} = 10 Hz, ³*J*_{H,H} = 7 Hz (2H^{k})
¹³C NMR: **16.8** t, m ¹*J*_{C,H} = 120 Hz (2C^{a}), **26.9** t, m ¹*J*_{C,H} = 124 Hz (2C^{b}), **29.5°** t, m ¹*J*_{C,H} = 126 Hz (2C^{d-h}), **29.8°** t, m ¹*J*_{C,H} = 126 Hz (2C^{d-h}), **30.2°** t, m ¹*J*_{C,H} = 126 Hz (2C^{d-h}), **30.3°** t, m ¹*J*_{C,H} = 126 Hz (2C^{d-h}), **30.4°** t, m ¹*J*_{C,H} = 126 Hz (2C^{d-h}), **34.4** t, m ¹*J*_{C,H} = 126 Hz (2Cⁱ), **37.1** t, m ¹*J*_{C,H} = 124 Hz (2C^{c}), **114.6** d, d, t ¹*J*_{C,H} = 157 Hz, ¹*J*_{C,H} = 153 Hz, ³*J*_{C,H} = 6 Hz (2C^{l}), **139.0** d, d, d, t ¹*J*_{C,H} = 150 Hz, ²*J*_{C,H} = 6 Hz, ²*J*_{C,H} = 6 Hz, ²*J*_{C,H} = 6 Hz (2C^{k}).
* Signale verbreitert
° Signale überlagert

### Beispiel 12. Synthese von Bis(pentafluorethyl)difluor(undec-10-en-1-yl)-phosphoran durch Reaktion von Di(undec-10-en-1-yl)zink und Bis(pentafluorethyl)trifluorphosphoran

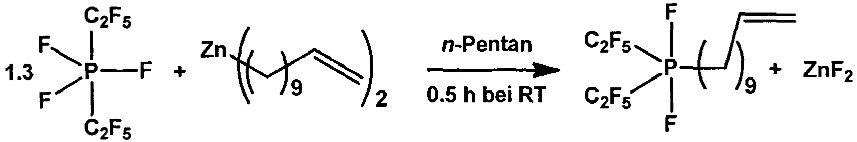

In einem 100-mL Glasrundkolben wird Di(undec-10-en-1-yl)zink (2.39 g, 6.43 mmol; enthält zudem 1.53 g 1,21-Docosadien) in n-Pentan (40 mL) gelöst. Zu dieser Lösung wird innerhalb von 10 Minuten Bis(pentafluorethyl)trifluorphosphoran, (C₂F₅)₂PF₃ (2.54 g, 7.79 mmol), zugegeben. Die Lösung wird 30 Minuten bei Raumtemperatur gerührt. Es entsteht eine Suspension. Die Umsetzung (96 %, 7.48 mmol) zu Bis(pentafluorethyl)difluor(undec-10-en-1-yl)phosphoran, (C₂F₅)₂PF₂(C₉H₁₈CH=CH₂), ist nahezu quantitativ. Einziges gebildetes Nebenprodukt ist neben ZnF₂ Bis(pentafluorethyl)(cyclopropyloctyl)difluorphosphoran, (C₂F₅)₂PF₂(C₈H₁₆-*cyclo*-C₃H₅) (4 %). Zusätzlich sind in der Suspension noch 1,21-Docosadien aus dem Edukt (siehe Beispiel 10). Die Verbindungen können mit Methoden, die dem Fachmann bekannt sind, getrennt werden. Hier wird die Suspension ohne weitere Reinigung verwendet. Das Produkt wird mittels ¹H, ¹³C{¹H}, ¹⁹F und ³¹P NMR Spektren charakterisiert.
NMR (Locksubstanz: CD₃CN-Film; δ in ppm)
¹H NMR: **1.28-1.31°** s (10H^{c-g}), **1.37°** t, t ³*J*_{H,H} = 7 Hz, ³*J*_{H,H} = 7 Hz (2H^{h}), **1.66** d, t, t ³*J*_{H,P} = 13 Hz, ³*J*_{H,H} = 7 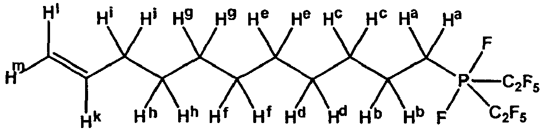 Hz, ³*J*_{H,H} = 7 Hz (2H^{b}), **2.02 t,** d, t, d ³*J*_{H,H} = 7 Hz, ³*J*_{H,H} = 7 Hz, ⁴*J*_{H,H} = 1.6 Hz, ⁴*J*_{H,H} = 1.2 Hz (2Hⁱ), **2.37** d, t, t ²*J*_{H,P} = 18 Hz, ³*J*_{H,F} = 17 Hz, ³*J*_{H,H} = 7 Hz (2H^{a}), **4.87** d, d, t, t ³*J*_{H,H} = 10 Hz, ²*J*_{H,H} = 1.9 Hz, ⁴*J*_{H,H} = 1.2 Hz, ⁵*J*_{H,H} = 0.9 Hz (1H^{m}), **4.94** d, d, t ³*J*_{H,H} = 17 Hz, ²*J*_{H,H} = 1.9 Hz, ⁴*J*_{H,H} = 1.6 Hz (1H^{l}), **5.74** d, d, t ³*J*_{H,H} = 17 Hz, ³*J*_{H,H} = 10 Hz, ³*J*_{H,H} = 7 Hz (1H^{k})
¹³C{¹H} NMR: **22.1** t, d ³*J*_{C,F} = 7 Hz, ²*J*_{C,P} = 6 Hz (1C^{b}), **29.0** d ³*J*_{C,P} = 1.7 Hz (1C^{c}), **29.3** (1C^{d-h}), **29.5°** (1C^{d-h}), **29.5°** (1C^{d-h}), **30.0°b** d, t ¹*J*_{C,P} = 91 Hz, ²*J*_{C,F} = 17 Hz (1C^{a}), **30.0°b** (1C^{d-h}), **30.1**° (1C^{d-h}), **34.1** (1Cⁱ), **114.0** (1C^{l}), **138.7** (1C^{k}), **n.b.** (2C₂F₅)
¹⁹F NMR: -**49.4** d, t, qui, sep ¹*J*_{F,P} = 875 Hz, ³*J*_{F,H} = 17 Hz, ³*J*_{F,F} = 14 Hz, ⁴*J*_{F,F} = 11 Hz (2F), **-82.7** t ⁴*J*_{F,F} = 11 Hz (6F), **-117.5** d, t ²*J*_{F,P} = 111 Hz, ³*J*_{F,F} = 14 Hz (4F)
³¹P NMR: **-30.9** t, qui, t, t ¹*J*_{P,F} = 875 Hz, ²*J*_{P,F} = 111 Hz, ²*J*_{P,H} = 18 Hz, ³*J*_{P,H} = 13 Hz (1P).
∘ Signale überlagert

### Beispiel 13. Synthese von Bis(pentafluorethyl)(undec-10-en-1-yl)phosphinoxid durch Reaktion von Bis(pentafluorethyl)(undec-10-en-1-yl)difluorphosphoran und Hexamethyldisiloxan

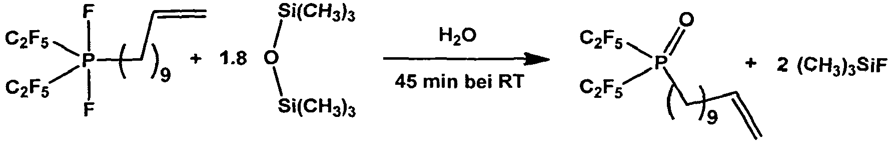

In einem 100-mL Glasrundkolben wird die Suspension aus Beispiel 12 bestehend aus Bis(pentafluorethyl)(undec-10-en-1-yl)difluorphosphoran, (C₂F₅)₂PF₂(C₉H₁₈CH=CH₂) (7.48 mmol) in *n*-Pentan (40 mL) (enthält zudem Bis(pentafluorethyl)(cycloprop-8-yl-octyl)difluorphosphoran, (C₂F₅)₂PF₂(C₈H₁₆-*cyclo*-C₃H₅) (4 %) und ZnF₂) vorgelegt und *n*-Pentan bei 80 °C abdestilliert. Anschließend wird Hexamethyldisiloxan (2.32 g, 14.3 mmol) und Wasser (2 g, 110 mmol) zugegeben und 45 Minuten bei Raumtemperatur gerührt. In der gelben Mutterlauge kann eine Umsetzung von 88% zu Bis(pentafluorethyl)(undec-10-en-1-yl)phosphinoxid, (C₂F₅)₂P(O)(C₉H₁₈CH=CH₂), detektiert werden. Nebenprodukte sind Bis(pentafluorethyl)(cycloprop-8-yloctyl)phosphinoxid, (C₂F₅)₂P(O)(C₈H₁₆-*cyclo*-C₃H₅) (4 mol%), das aus Bis(pentafluorethyl)(cycloprop-8-yl-octyl)difluorphosphoran im Startmaterial resultiert und (Pentafluorethyl)(undec-10-en-1-yl)phosphinsäure, (C₂F₅)(C₉H₁₈CH=CH₂)P(O)OH (8 mol%). Zusätzlich sind noch Undecen, ZnF₂ und 1,21-Docosadien aus dem Edukt (siehe Beispiel 11). Die Verbindungen können mit Methoden, die dem Fachmann bekannt sind, getrennt werden. Hier wird die Suspension ohne weitere Reinigung verwendet. Das Produkt wird mittels ¹H, ¹³C{¹H}, ¹⁹F und ³¹P NMR Spektren charakterisiert.
NMR (Locksubstanz: CD₃CN-Film, δ in ppm)
¹H NMR: **1.28-1.30°** s (8H^{d-g}), **1.38°** t, t ³*J*_{H,H} = 7 Hz, ³*J*_{H,H} = 7 Hz (2H^{h}), **1.47** t, t ³*J*_{H,H} = 7 Hz, ³*J*_{H,H} = 6 Hz, (2H^{c}), **1.78** d, t, t ³*J*_{H,P} = 10 Hz, ³*J*_{H,H} = 8 Hz, ³*J*_{H,H} = 8 Hz (2H^{b}), **2.02** t, d, t, d ³*J*_{H,H} = 7 Hz, ³*J*_{H,H} = 7 Hz, ⁴*J*_{H,H} = 1 Hz, ⁴*J*_{H,H} = 1 Hz (2Hⁱ), **2.29** d, t ²*J*_{H,P} = 11 Hz, ³*J*_{H,H} = 8 Hz (2H^{a}), **4.87** d, d, t, t ³*J*_{H,H} = 10 Hz, ²*J*_{H,H} = 2 Hz, ⁴*J*_{H,H} = 1 Hz, ⁵*J*_{H,H} = 1 Hz (1H^{m}), **4.94** d, d, t ³*J*_{H,H} = 17 Hz, ²*J*_{H,H} = 2 Hz, ⁴*J*_{H,H} = 2 Hz (1H^{l}), **5.74** d, d, t ³*J*_{H,H} = 17 Hz, ³*J*_{H,H} = 10 Hz, ³*J*_{H,H} = 7 Hz (1H^{k})
¹³C{¹H} NMR: **20.1** d ²*J*_{C,P} = 5 Hz (1C^{b}), **24.1** d ¹*J*_{C,P} = 61 Hz (1C^{a}), **29.1** d ⁴*J*_{C,P} = 0.8 Hz (1C^{d}), **29.2** (1C^{e-h}), **29.6** (1C^{e-h}), **30.0°b** (1C^{e-h}), **30.1°** (1C^{e-h}), **30.9** d ³*J*_{C,P} = 15 Hz (1C^{c}), **34.1** (1Cⁱ), **112.9** t, m ¹*J*_{C,F} = 286 Hz (2CF₂), **114.3** (1C^{l}), **118.4** q, m ¹*J*_{C,F} = 287 Hz (2CF₃), **138.6** (1C^{k}) 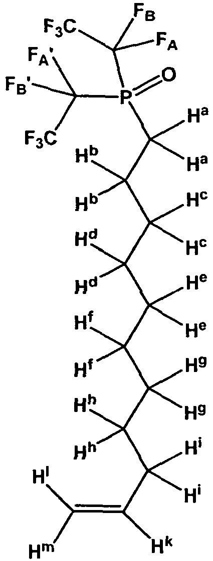 ¹⁹F NMR: **-80.0** d ³*J*_{F,P} = 3 Hz (6F), **-121.5** d, m²*J*_{FA,P} = 75 Hz, ²*J*_{FB,P} = 66 Hz, ²*J*_{FA,FB} = 340 Hz (2FA), -**123.5** d, m, ²*J*_{FA',P} = 75 Hz, ²*J*_{FB',P} = 66 Hz, ²*J*_{FA',FB'} = 310 Hz (2F_{B})
³¹P NMR: **37.6** t, t, t, t ²*J*_{P,FA} = ²*J*_{P,FA'} = 75 Hz, ²*J*_{P,FB} = ²*J*_{P,FB'} = 66 Hz, ²*J*_{P,H} = 11 Hz, ³*J*_{P,H} = 10 Hz (1P).
∘ Signale überlagert

### Beispiel 14. Synthese von Pentafluorethyl(undec-10-en-1-yl)phosphinsäure durch Hydrolyse von Bis(pentafluorethyl)(undec-10-en-1-yl)phosphinoxid

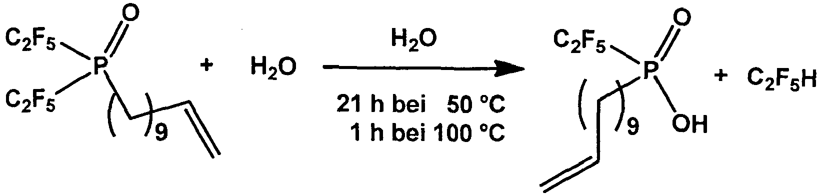

In einem 25-mL Glasrundkolben wird die Suspension aus Beispiel 13, Bis(pentafluorethyl)(undec-10-en-1-yl)phosphinoxid, (C₂F₅)₂P(O)(C₉H₁₈CH=CH₂) [enthält neben Undecen, ZnF₂ und 1,21-Docosadien zudem Bis(pentafluorethyl)(cycloprop-8-yloctyl)phosphinoxid, (C₂F₅)₂P(O)(C₈H₁₆-c-C₃H₅) (4 mol%) und Pentafluorethyl(undec-10-en-1-yl)phosphinsäure, (C₂F₅)(C₉H₁₈CH=CH₂)P(O)OH (8 mol%)] mit Wasser (7 g, 390 mmol) versetzt und erwärmt (50 °C). Diese Emulsion wird 21 Stunden bei 50 °C und 1 Stunde bei 100 °C gerührt. Die Emulsion wird anschließend mit heißem *n*-Pentan (60 mL) und *n*-Hexan (60 mL) unter Rückfluss extrahiert. Die organischen Phasen werden vereint und mit Wasser (10 mL) gewaschen. Alle flüchtigen Bestandteile aus der organische Phase werden im Vakuum (10⁻³ mbar) bei Raumtemperatur bis 90 °C entfernt. Es kann Pentafluorethyl(undec-10-en-1-yl)phosphinsäure, (C₂F₅)(C₉H₁₈CH=CH₂)P(O)OH (2.32 g, 6.9 mmol) als gelber Feststoff mit einer Ausbeute von 88 % isoliert werden. Nebenprodukte sind Pentafluorethyl(cycloprop-8-yloctyl)phosphinsäure, (C₂F₅)(C₈H₁₆-*cyclo-*C₃H₅)P(O)OH (4 %) und 1,21-Docosadien aus Beispiel 12. Die Verbindungen können mit Methoden, die dem Fachmann bekannt sind, entfernt werden. Das Produkt wird mittels ¹H, ¹³C{¹H}, ¹⁹F und ³¹P NMR Spektren charakterisiert.
NMR (Locksubstanz: Toluen-d8; δ in ppm)
¹H NMR: **1.27-1.32°** s (10H^{c-g}), **1.36°** t ³*J*_{H,H} = 7 Hz (2H^{h}), **1.83*°** s (2H^{b}), **1.99°** t, d, t, ³*J*_{H,H} = 7 Hz, ³*J*_{H,H} = 7 Hz, 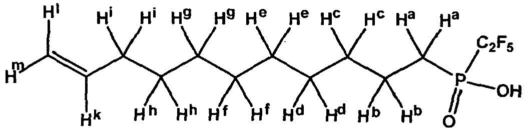 ⁴*J*_{H,H} = 1 Hz (2Hⁱ), **2.05*°** d, t ²*J*_{H,P} = 12 Hz, ³*J*_{H,H} = 7 Hz (2H^{a}), **4.97** d, d, t ³*J*_{H,H} = 10 Hz, ²*J*_{H,H} = 2 Hz, ⁴*J*_{H,H} = 1 Hz (1H^{m}), **5.02** d, d, t ³*J*_{H,H} = 17 Hz, ²*J*_{H,H} = 2 Hz, ⁴*J*_{H,H} = 2 Hz (1H^{l}), **5.78** d, d, t ³*J*_{H,H} = 17 Hz, ³*J*_{H,H} = 10 Hz, ³*J*_{H,H} = 7 Hz (1H^{k}), **13.01** s (1Hⁿ)
¹³C{¹H} NMR: **23.6*** (1C^{b}), **25.9*** d ¹*J*_{C,P} = 103 Hz (1C^{a}), **29.8°** d ⁴*J*_{C,P} = 0.9 Hz (1C^{d}), **29.8°** (1C^{e-h}), **29.9** (1C^{e-h}), **30.1** (1C^{e-h}), **30.3** (1C^{e-h}), **31.2** d ³*J*_{C,P} = 16 Hz (1C^{c}), **34.7** (1Cⁱ), **114.9** (1C^{j}), **139.5** (1C^{k}), **n.b.** (1C₂F₅)
¹⁹F NMR: **-80.5** s (3F), **-127.3** d ²*J*_{F,P} = 79 Hz (2F)
³¹P NMR: -**35.7** t, t, t ²*J*_{P,F} = 79 Hz, ²*J*_{P,H} = 12 Hz, ³*J*_{P,H} = 12 Hz (1P).
* Signale verbreitert
∘ Signale überlagert

### Beispiel 15. Synthese von 4-Styrylmagnesiumchlorid durch Reaktion von 4-Chlorstyren und Magnesium

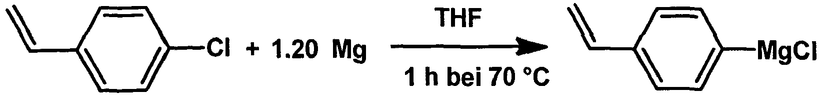

In einem 100-mL Glasrundkolben werden Magnesium-Späne (1.78 g, 73.2 mmol) in Tetrahydrofuran (20 mL) suspendiert und mit Bromethan, C₂H₅Br (1.16 g, 10.6 mmol), aktiviert. Nach 10 Minuten wird die THF Mutterlauge dekantiert. Die aktivierten Magnesium-Späne (1.52 g, 62.6 mmol) werden erneut in THF (60 mL) suspendiert, 4-Chlorstyren (7.24 g, 52.2 mmol) zugegeben und erwärmt (70 °C). Nach 1 Stunden bei 70 °C kann eine braun-schwarze Suspension erhalten werden. Der Umsatz zu 4-Styrylmagnesiumchlorid liegt bei 98 %. Die braun-schwarze THF Mutterlauge kann für einige Zeit gekühlt (0 °C) gelagert werden. Das Produkt wird mittels ¹H und ¹³C NMR Spektren charakterisiert.
NMR (Locksubstanz: CD₃CN-Film; δ in ppm)
¹H NMR: **4.96** d, d ³*J*_{H,H} = 11 Hz, ²*J*_{H,H} = 1.6 Hz (1H^{g}), **5.62** d, d ³*J*_{H,H} = 18 Hz, ²*J*_{H,H} = 1.6 Hz (1H^{f}), **6.62** d, d ³*J*_{H,H} = 18 Hz, ³*J*_{H,H} = 11 Hz (1H^{e}), **7.10** d ³*J*_{H,H} = 8 Hz (2H^{c}), **7.71** d ³*J*_{H,H} = 8 Hz (2H^{b}) 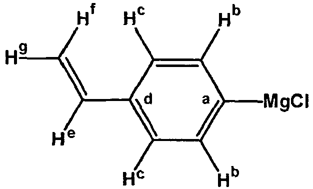 ¹³C NMR: **108.7** d, d ¹*J*_{C,H} = 159 Hz, ¹*J*_{C,H} = 154 Hz (1C^{f}), **123.4** d, d, d, d, m ¹*J*_{C,H} = 151 Hz, ³*J*_{C,H} = 5 Hz, ³*J*_{C,H} = 4 Hz, ⁴*J*_{C,H} = 4 Hz (2C^{c}), **133.1** m (1C^{d}), **139.6** d, t, d, m ¹*J*_{C,H} = 150 Hz, ³*J*_{C,H} = 5 Hz, ²*J*_{C,H} = 3 Hz (1C^{e}), **140.8** d, d, m ¹*J*_{C,H} = 151 Hz, ²*J*_{C,H} = 12 Hz (2C^{b}), **172.2** m (1C^{a}).

### Beispiel 16. Synthese von Di(4-styryl)zink durch Reaktion von 4-Styrylmagnesiumchlorid und Zinkchlorid

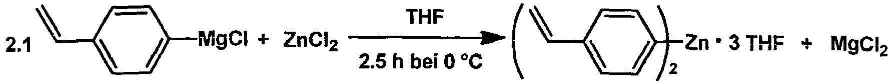

In einen 100-mL Glasrundkolben wird 4-Styrylmagnesiumchlorid (51.2 mmol) in Tetrahydrofuran (60 mL) aus Beispiel 15 vorgelegt und gekühlt (0 °C). Zu dieser THF Lösung wird Zinkchlorid, ZnCl₂ (3.35 g, 24.6 mmol), zugegeben. Die Suspension wird 2.5 Stunden bei 0 °C gerührt und anschließend zentrifugiert. Die gelbe Mutterlauge wird in einen 100-mL Glasrundkolben dekantiert und THF im Vakuum (10⁻³ mbar) bei 0 °C abkondensiert. Zurück bleibt ein weißer Feststoff. Dieser wird drei Mal mit Toluen (je 50 mL) extrahiert. In einem 250-mL Glasrundkolben wird Toluen der vereinten Toluen-Phasen im Vakuum (10⁻³ mbar) bei 0 °C abkondensiert. Da im resultierenden weißen Feststoff noch THF detektiert werden kann, werden zwei weitere Male in Toluen (je 20 mL) suspendiert. Anschließend werden alle flüchtigen Verbindungen erneut im Vakuum (10⁻³ mbar) bei 0 °C abkondensiert. Es kann Distyrylzink·3THF (6.84 g, 14.0 mmol) als weißer Feststoff mit einer Ausbeute von 57 % isoliert werden. Das isolierte Produkt wird mittels ¹H und ¹³C NMR Spektren charakterisiert.
NMR (Locksubstanz: CD₃CN; δ in ppm)
¹H NMR: **5.11** d ³*J*_{H,H} = 11 Hz (2H^{g}), **5.73** d ³*J*_{H,H} = 18 Hz (2H^{f}), **6.71** d, d ³*J*_{H,H} = 18 Hz, ³*J*_{H,H} 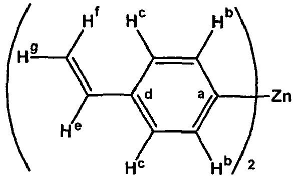 = 11 Hz (2H^{e}), **7.25** d ³*J*_{H,H} = 8 Hz (4H^{c}), **7.59** d ³*J*_{H,H} = 8 Hz (4H^{b})
¹³C NMR: **111.7** d, d ¹*J*_{C,H} = 159 Hz, ¹*J*_{C,H} = 155 Hz (2C^{f}), **125.0** d ¹*J*_{C,H} = 153 Hz (4C^{c}), **133.9** m (2C^{d}), **139.2** d ¹*J*_{C,H} = 152 Hz (2C^{e}), **139.6** d, d ¹*J*_{C,H} = 156 Hz, ²*J*_{C,H} = 11 Hz (4C^{b}), **160.5** m (2C^{a}).

### Beispiel 17. Synthese von Pentafluorethyl)tetrafluorphosphoran

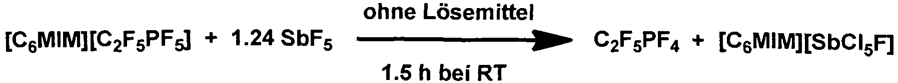

In einem 10-mL Glasreaktor mit J. Young-Hahn wird hellgelbes Hexylmethylimidazoliumpentafluorethylpentafluorphosphat, [C₆MIM][C₂F₅PF₅] (10.52 g, 25.52 mmol) vorgelegt, gekühlt (-78 °C) und mit Antimonpentafluorid, SbF₅ (6.88 g, 31.74 mmol) versetzt. Die Reaktionslösung wird erwärmt (RT) wobei sich eine Emulsion bildet. Nach 1.5 h bei RT wird quantitativ Pentafluorethyltetrafluorphosphoran, C₂F₅PF₄, als sehr flüchtige klare und farblose Flüssigkeit gebildet. Das Produkt wird direkt ohne Reinigung für nachfolgende Versuche verwendet. Isoliertes Produkt kann mittels ¹⁹F und ³¹P NMR Spektren charakterisiert werden.
NMR (Locksubstanz: CD₃CN-Film; δ in ppm)
¹⁹F NMR: **-60.1** d, t, q ¹*J*_{F,P} = 1090 Hz, ³*J*_{F,F} = 8 Hz, ⁴*J*_{F,F} = 6 Hz (4F), **-84.7** qui, d ⁴*J*_{F,F} = 6 Hz, ³*J*_{F,P} = 4 Hz (3F), **-120.7** d, qui ²*J*_{F,P} = 125 Hz, ³*J*_{F,F} = 8 Hz (2F) 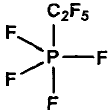 ³¹P NMR: **-61.2** qui, t ¹*J*_{P,F} = 1091 Hz, ²*J*_{P,F} = 125 Hz (1P).

### Beispiel 18. Synthese von Pentafluorethyl-(4-styryl)trifluorphosphoran durch Reaktion von Di(4-styryl)zink und Pentafluorethyltetrafluorphosphoran

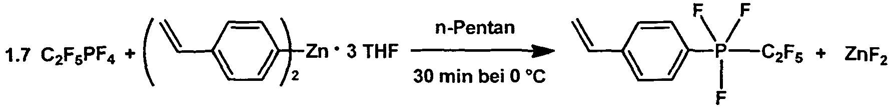

In einem 250-mL Glasrundkolben mit anschließenden gekühltem (-80 °C) Kondensationskühler wird Di(4-styryl)zink·3THF (6.60 g, 13.5 mmol) in *n-*Pentan (100 mL) suspendiert und gekühlt (0 °C). Zu dieser Suspension wird Pentafluorethyltetrafluorphosphoran, C₂F₅PF₄ (5.06 g, 22.4 mmol), innerhalb von 15 Minuten einkondensiert. Die gelbe Suspension wird weitere 15 min bei 0 °C gerührt und nach vollständigem Umsatz auf Raumtemperatur erwärmt. Anschließend wird die Suspension zentrifugiert und die rosafarbene Mutterlauge dekantiert. Die Ausbeute an Pentafluorethyl-(4-styryl)trifluorphosphoran, C₂F₅PF₃(C₆H₄CH=CH₂), in *n-*Pentan beträgt 49 %. Das Produkt wird in *n*-Pentan mittels ¹H, ¹³C, ¹⁹F und ³¹P NMR Spektren charakterisiert.
NMR (Locksubstanz: CD₃CN-Film; δ in ppm)
¹H NMR: **5.41** d ³*J*_{H,H} = 11 Hz (1H^{g}), **5.88** d ³*J*_{H,H} = 18 Hz (1H^{f}), **6.70** d, d ³*J*_{H,H} = 18 Hz, ³*J*_{H,H} = 11 Hz (1H^{e}), **7.47** d, d ³*J*_{H,H} = 8 Hz, ⁴*J*_{H,P} = 6 Hz (2H^{c}), **8.04** d, d, m ³*J*_{H,P} = 15 Hz, ³*J*_{H,H} = 8 Hz (2H^{b})
¹³C NMR: **118.5** d, d ¹*J*_{C,H} = 162 Hz, ¹*J*_{C,H} = 155 Hz (1C^{f}), **127.3** d, d, d, d ¹*J*_{C,H} = 161 Hz, ³*J*_{C,P} = 19 Hz, ²*J*_{C,H} = 6 Hz, ³*J*_{C,H} = 6 Hz (2C^{c}), **136.0** d, m ¹*J*_{C,H} = 157 Hz (1C^{e}), **138.8** d, d, q, m ¹*J*_{C,H} = 166 Hz, ²*J*_{C,P} = 15 Hz, ³*J*_{C,F} = 7 Hz (2C^{b}), **145.8** m (1C^{d}), **n.b.** (1C^{a}), **n.b.** (1C₂F₅)
¹⁹F NMR: **-70.5*** s (3F), **-82.3** t, d, q ⁴*J*_{F,F} = 7 Hz, ³*J*_{F,P} = 7 Hz, ³*J*_{F,F} = 2 Hz (3F), **-118.6** d, q, q ²*J*_{F,P} = 116 Hz, 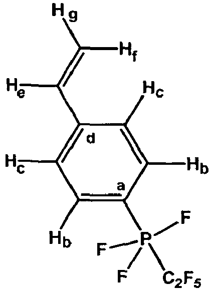 ³*J*_{F,F} = 12 Hz, ³*J*_{F,F} = 2 Hz (2F)
³¹P NMR: **-40.5** q, t, t, t, ¹*J*_{P,F} = 965 Hz, ²*J*_{P,F} = 116 Hz, ³*J*_{P,H} = 15 Hz, ⁴*J*_{P,H} = 6 Hz (1P).
* Signale verbreitert

### Beispiel 19. Synthese von Pentafluorethyl-(4-styryl)phosphinsäure durch Hydrolyse von Pentafluorethyl-(4-styryl)trifluorphosphoran mit Hexamethyldisiloxan und Wasser

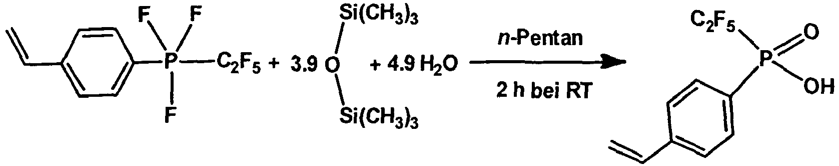

In einem 250-mL Glasrundkolben wird Pentafluorethyl-(4-styryl)trifluorphosphoran, (C₂F₅)(4-C₆H₄CH=CH₂)PF₃ (11.2 mmol), in *n-*Pentan (100 mL) aus Beispiel 18 mit Hexamethyldisiloxan (7.35 g, 45.3 mmol) und Wasser (1.02 g, 56.6 mmol) versetzt. Es resultierte eine farblose Emulsion. Nach 2.5 Stunden bei Raumtemperatur enthielt die obere n-Pentan-Phase weder (C₂F₅)(4-C₆H₄CH=CH₂)PF₃ noch Produkt. Die *n-*Pentan-Phase wurde dekantiert, die untere Phase in Wasser (10 mL) suspendiert und zwei Mal mit n-Pentan (je 10 mL) gewaschen. Der geringe Anteil an Feststoff wird abfiltriert und alle flüchtigen Bestandteile der Mutterlauge im Vakuum (10⁻³ mbar) bei Raumtemperatur abkondensiert. Es kann Pentafluorethyl-(4-styryl)phosphinsäure, (C₂F₅)(CH₂=CH-C₆H₄)P(O)OH·0.5H₂O (3.32 g, 11.2 mmol), als beiger klebriger Feststoff mit quantitativer Ausbeute isoliert werden. Das isolierte Produkt wird mittels ¹H und ¹³C NMR Spektren charakterisiert.
NMR (Locksubstanz: CD₃CN; δ in ppm)
¹H NMR: **5.49** d ³*J*_{H,H} = 11 Hz (1H^{g}), **6.00** d ³*J*_{H,H} = 18 Hz (1H^{f}), **6.83** d, d ³*J*_{H,H} = 18 Hz, ³*J*_{H,H} = 11 Hz (1H^{e}), **7.63** d, d ³*J*_{H,H} = 8 Hz, ⁴*J*_{H,P} = 4 Hz(2H^{c}), **7.84** d, d, m ³*J*_{H,P} = 13 Hz, ³*J*_{H,H} = 8 Hz (2H^{b}), **9.51** s (OH) 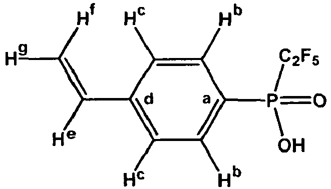 ¹³C NMR: **112.6** t, d, q ¹*J*_{C,F} = 276.6 Hz, ¹*J*_{C,P} = 136.7 Hz, ²*J*_{C,F} = 38.7 Hz (1CF₂), **118.8** d, d ¹*J*_{C,H} = 161 Hz, ¹*J*_{C,H} = 155 Hz (1C^{f}), **120.0** q, t, d ¹*J*_{C,F} = 285.9 Hz, ²*J*_{C,F} = 31.1 Hz, ²*J*_{C,P} = 16.5 Hz (1CF₃), **124.9** d, t, m ¹*J*_{C,P} = 150.8 Hz, ³*J*_{C,H} = 7.6 Hz (1C^{a}) **127.6** d, d, d, d, m ¹*J*_{C,H} = 161.5 Hz, ³*J*_{C,P} = 14.7 Hz, ²*J*_{C,H} = 5.8 Hz, ³*J*_{C,H} = 5.6 Hz (1C^{c}), **134.5** d, d, d, m ¹*J*_{C,H} = 167.0 Hz, ²*J*_{C,P} = 11.1 Hz, ²*J*_{C,H} = 6.8 Hz (1C^{b}), **136.6** d, d, d, d, m ¹*J*_{C,H} = 156.9 Hz, ³*J*_{C,H} = 4.4 Hz, ³*J*_{C,H} = 4.4 Hz, ⁵*J*_{C,P} = 1.5 Hz (1C^{e}), **144.6** m (1C^{d})
¹⁹F NMR: **-80.9** t, d ³*J*_{F,F} = 1.8 Hz, ³*J*_{F,P} = 1.0 Hz (3F), **-127.1** d, q ²*J*_{F,P} = 80.0 Hz, ³*J*_{F,F} = 1.8 Hz (2F)
³¹P NMR: **17.5** t, t, t ²*J*_{P,F} = 79.9 Hz, ³*J*_{P,H} = 12.4 Hz, ⁴*J*_{P,H} = 3.7 Hz (1P).

### Beispiel 20. Synthese von Bis(pentafluorethyl)difluor-3,4,4-trifluorbut-3-en-1-ylphosphoran aus Bis(pentafluorethyl)trifluorphosphoran und 3,4,4-Trifluorbut-3-en-1-ylmagnesiumbromid

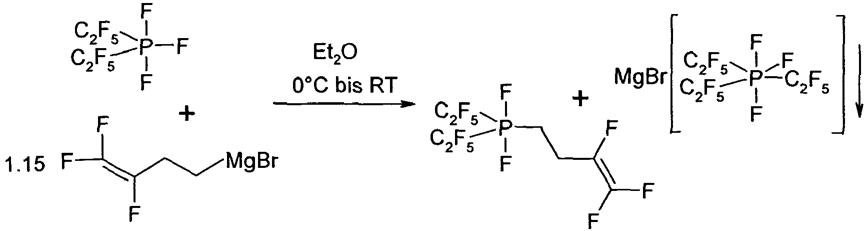

In einem 100-mL Glasrundkolben wird eine kalte (-50 °C) gelbe Diethylether-Lösung aus 3,4,4-Trifluorbut-3-en-1-ylmagnesiumbromid, CF₂=CFCH₂CH₂MgBr (33 mmol in 50 mL, enthält zudem 1,1,2,7,8,8-Hexafluorocta-1,7-dien und 1,1,2-Trifluorbut-1-en), mit Bis(pentafluorethyl)trifluorphosphoran, (C₂F₅)₂PF₃ (9.40 g, 28.8 mmol), umgesetzt. Es fällt ein weißer Feststoff aus. Die Suspension wird 1 Stunde bei -50 °C bis -40 °C gerührt. Anschließend wird die Reaktionssuspension bei -30 °C filtriert, der Feststoff mit Diethylether (5 mL) gewaschen und anschließend im Vakuum (10⁻³ mbar) bei RT umkondensiert. Es kann Bis(pentafluorethyl)difluor-3,4,4-trifluorbut-3-en-1-ylphosphoran, (C₂F₅)₂(CF₂=CFCH₂CH₂)PF₂ (17.4 mmol), als klare und farblose Diethylether-Lösung mit einer Ausbeute von 60 % isoliert werden.
NMR (Locksubstanz: CD₃CN-Film; δ in ppm)
¹H-NMR: **2.70** d, d, m ³*J*_{H,F} = 20 Hz, ³*J*_{H,P} = 18 Hz (2H^{b}), **2.89** d, m ²*J*_{H,P} = 18 Hz (2H^{a}).
¹⁹F-NMR: **-49.1** d, t, q, m ¹*J*_{F,P} = 880 Hz, ³*J*_{F,F} = 14 Hz, ⁴*J*_{F,F} = 10 Hz (2F), **-82.6** t ⁴*J*_{F,F} = 10 Hz (6F), **-105.4** d, d, t, m ²*J*_{F,F} = 83 Hz, ³*J*_{F,F} = 34 Hz, ⁴*J*_{F,H} = 3 Hz (1F^{e}), **-117.4** d, t ²*J*_{F,P} = 113 Hz, ³*J*_{F,F} = 14 Hz (4F), **-123.6** d, d, t, m ³*J*_{F,F} = 115 Hz, ²*J*_{F,F} = 83 Hz, ⁴*J*_{F,H} = 3 Hz (1F^{d}), **-179.3** d, d, t, m ³*J*_{F,F} = 115 Hz, ³*J*_{F,F} = 34 Hz, ³*J*_{F,H} = 20 Hz (1F^{c}).
³¹P-NMR: **-31.5** t, qui, t, t ¹*J*_{P,F} = 880 Hz, ²*J*_{P,F} = 113 Hz, ²*J*_{P,H} = 18 Hz , ³*J*_{P,H} = 18 Hz (1P).

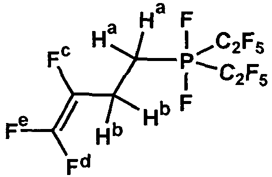

### Beispiel 21. Synthese von Bis(pentafluorethyl)-3,4,4-trifluorbut-3-en-1-ylphosphinoxid durch Reaktion von Bis(pentafluorethyl)difluor-3,4,4-trifluorbut-3-en-1-ylphosphoran und Hexamethyldisiloxan mit katalytischen Mengen H₂O

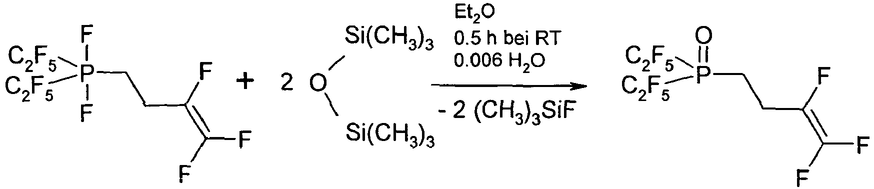

In einem 100-mL Glasrundkolben wird eine klare und farblose Etherlösung mit Bis(pentafluorethyl)difluor-3,4,4-trifluorbut-3-en-1-ylphosphoran, (C₂F₅)₂(CF₂=CFCH₂CH₂)PF₂ (17.4 mmol, enthält zudem 1,1,2,7,8,8-Hexafluorocta-1,7-dien und 1,1,2-Trifluorbut-1-en), aus Beispiel 1 mit Hexamethyldisiloxan, ((CH₃)₃Si)₂O (5.75 g, 35.4 mmol) und Wasser (2 mg, 0.11 mmol) unter Gasentwicklung 0.5 Stunden bei RT gerührt. Die flüchtigen Bestandteile werden im Vakuum (10⁻³ mbar) bei -40 bis -10 °C entfernt. Es kann Bis(pentafluorethyl)-3,4,4-trifluorbut-3-en-1-ylphosphinoxid (6.42 g, 16.3 mmol) als hellgelbe Flüssigkeit mit einer Ausbeute von 94 % und einer Reinheit von 99 % isoliert werden.
NMR (Locksubstanz: CDCl₃; δ in ppm)
¹H-NMR: **2.57** d, t ²*J*_{H,P} = 10 Hz, ³*J*_{H,H} = 6 Hz (2H^{a}), **2.77** d, d, t, d, d ³*J*_{H,F} = 19 Hz, ³*J*_{H,P} = 19 Hz, ³*J*_{H,H} = 6 Hz, ⁴*J*_{H,F} = 3 Hz, ⁴*J*_{H,F} = 3 Hz (2H^{b}).
¹³C-NMR: **17.5** t, d, m ¹*J*_{C,H} = 133 Hz, ²*J*_{C,P} = 23 Hz (1C^{b}), **20.5** t, d, m ¹*J*_{C,H} = 132 Hz, ¹*J*_{C,P} = 62 Hz (1C^{a}), **112.8** d, d, d, q, m ¹*J*_{C,F_{A}} = ¹*J*_{C,F_{B}} = 288 Hz, ¹*J*_{C,F_{A'}} = ¹*J*_{C,F_{B'}} = 283 Hz ¹*J*_{C,P} = 92 Hz, ²*J*_{C,F} = 42 Hz (2CF₂), **118.3** q, t, d, m ¹*J*_{C,F} = 286 Hz, ²*J*_{C,F} = 30 Hz, ²*J*_{C,P} = 17 Hz (2CF₃), **126.4** d, d, d, d, t, t ¹*J*_{C,F} = 234 Hz, ²*J*_{C,F} = 54 Hz, ²*J*_{C,F} = 18 Hz ³*J*_{C,P} = 16 Hz, ²*J*_{C,H} = 7 Hz ³*J*_{C,H} = 3 Hz (1C^{c}), **153.3** d, d, d, t, d ¹*J*_{C,F} = 288 Hz, ¹*J*_{C,F} = 275 Hz, ²*J*_{C,F} = 45 Hz, ³*J*_{C,H} = 3 Hz, ⁴*J*_{C,P} = 1.3 Hz (1C^{d}).
¹⁹F-NMR: **-80.9** m (6F), **-104.3** d, d, t ²*J*_{F,F} = 83 Hz, ³*J*_{F,F} = 33 Hz, ⁴*J*_{F,H} = 3 Hz (1F^{e}), **-122.1** d, m ²*J*_{FA,FB} = 340 Hz (2F_{A}), ²*J*_{F_{A},P} = 79 Hz, ²*J*_{FB,P} = 70 Hz, **-122.8** d, d, t ³*J*_{F,F} = 115 Hz, ²*J*_{F,F} = 83 Hz, ⁴*J*_{F,H} = 3 Hz (1F^{d}), **-124.2** d, m ²*J*_{F_{A},F_{B'}} = 342 Hz, ²*J*_{FA',P} = 79 Hz, ²*J*_{F_{B'},P} = 70 Hz, **-179.0** d, d, t, m ³*J*_{F,F} = 115 Hz, ³*J*_{F,F} = 34 Hz, ³*J*_{F,H} = 19 Hz (1F^{c}).
³¹P-NMR: **36.1** t, t, t, t ²*J*_{P,F_{A}} = ²*J*_{P,F_{A'}} = 79 Hz, ²*J*_{P,F_{B}} = ²*J*_{P,F_{B'}} = 70 Hz, ²*J*_{P,H} = 19 Hz, ³*J*_{P,H} = 10 Hz (1P).

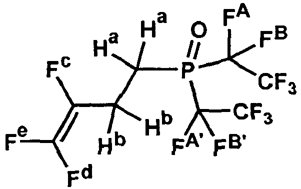

### Beispiel 22. Synthese von Pentafluorethyl-3,4,4-trifluorbut-3-en-1-ylphosphinsäure durch Hydrolyse von Bis(pentafluorethyl)-3,4,4-trifluorbut-3-en-1-ylphosphinoxid

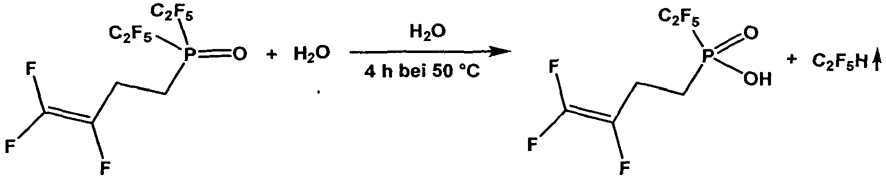

In einem 25-mL Glasrundkolben wird hellgelbes Bis(pentafluorethyl)-3,4,4-trifluorbut-3-en-1-ylphosphinoxid, (C₂F₅)₂(CF₂=CFCH₂CH₂)P=O (5.75 g, 14.6 mmol) aus Beispiel 2, in Wasser (5 mL) emulgiert und erwärmt (50 °C). Die Emulsion wird 4 h bei 50 °C gerührt. Anschließend werden alle flüchtigen Bestandteile im Vakuum (10⁻³ mbar) bei RT bis 50 °C entfernt. Es kann Pentafluorethyl-3,4,4-trifluorbut-3-en-1-ylphosphinsäure (4.12 g, 14.1 mmol) als hellgelbe Flüssigkeit mit einer Ausbeute von 97 % und einer Reinheit von 99 % isoliert werden.
NMR (Locksubstanz: CDCl₃; δ in ppm)
¹H-NMR: **2.25** d, t ²*J*_{H,P} = 13 Hz, ³*J*_{H,H} = 8 Hz (2H^{a}), **2.72** d, d, t, d, d ³*J*_{H,F} = 20 Hz, ³*J*_{H,P} = 12 Hz, ³*J*_{H,H} = 8 Hz, ⁴*J*_{H,F} = 4 Hz, ⁴*J*_{H,F} = 2 Hz (2H^{b}), **13.26** s Δv_{½} = 2 Hz (1OH).
¹³C-NMR: **17.8** t, d, m ¹*J*_{C,H} = 133 Hz, ²*J*_{C,P} = 23 Hz (1C^{b}), **21.8** t, d, m ¹*J*_{C,H} = 131 Hz, ¹*J*_{C,P} = 104 Hz (1C^{a}), **111.1** t, d, q, m ¹*J*_{C,F} = 277 Hz, ¹*J*_{C,P} = 133 Hz, ²*J*_{C,F} = 40 Hz (CF₂), **118.5** q, t, d, m ¹*J*_{C,F} = 286 Hz, ²*J*_{C,F} = 31 Hz, ²*J*_{C,P} = 17 Hz (CF₃), **126.7** d, d, d, d, m ¹*J*_{C,F} = 235 Hz, ²*J*_{C,F} = 53 Hz, ²*J*_{C,F} = 17 Hz ³*J*_{C,P} = 16 Hz (1C^{c}), **153.0** d, d, d, t ¹*J*_{C,F} = 288 Hz, ¹*J*_{C,F} = 275 Hz, ²*J*_{C,F} = 46 Hz, ³*J*_{C,H} = 3 Hz (1C^{d}).
¹⁹F-NMR: **-80.7** s Δv_{½} = 4 Hz (3F), **-103.0** d, d, t, m ²*J*_{F,F} = 83 Hz, ³*J*_{F,F} = 33 Hz, ⁴*J*_{F,H} = 2 Hz (1F^{e}), **-121.9** d, d, t ³*J*_{F,F} = 115 Hz, ²*J*_{F,F} = 83 Hz, ⁴*J*_{F,H} = 4 Hz (1F^{d}), **-127.3** d ²*J*_{F,P} = 84 Hz (2F), **-176.9** d, d, t ³*J*_{F,F} = 115 Hz, ³*J*_{F,F} = 33 Hz, ³*J*_{F,H} = 20 Hz (1F^{c}).
³¹P-NMR: **33.8** t, t, t ²*J*_{P,F} = 84 Hz, ²*J*_{P,H} = 13 Hz, ³*J*_{P,H} = 12 Hz (1P).

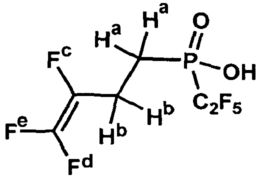

### Beispiel 23. Synthese von Bis(pentafluorethyl)difluor-1,2,2-trifluorvinylphosphoran aus Bis(pentafluorethyl)trifluorphosphoran und 1,2,2-Trifluorvinylzinkchlorid

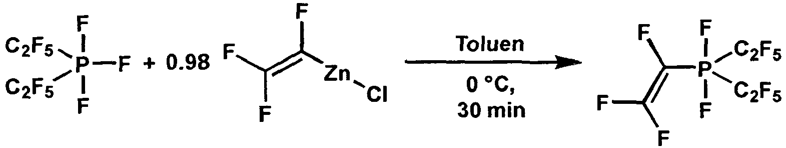

In einem 25-mL Glasrundkolben wird eine kalte (0 °C) dunkelbraune Lösung aus Trifluorvinylzinkchlorid, CF₂=CFZnCl (795 mg; 4.37 mmol, enthält zudem 1.46 mmol Et₂O und 2.24 mmol C₆H₅CF₃ als internen Standard), in Toluen (10 mL) mit Bis(pentafluorethyl)trifluorphosphoran, (C₂F₅)₂PF₃ (1.46 g; 4.48 mmol), innerhalb von 15 min umgesetzt. Der Umsatz zu (C₂F₅)₂(CF₂=CF)PF₂ (714 mg; 1.84 mmol) wird mithilfe des internen Standards zu 42 % berechnet. Die braunschwarze Suspension wird zunächst bei RT und anschließend das Kondensat bei -40 °C bis -25 °C im Vakuum (10⁻³ mbar) umkondensiert. Das resultierende farblose Kondensat enthält das Produkt in Toluen (10 mL) und 1.72 mmol C₆H₅CF₃. Diese klare und farblose Flüssigkeit wird ohne weitere Reinigung verwendet.
NMR (Locksubstanz: CD₃CN; δ in ppm)
¹⁹F-NMR: **-55.8** d, d, qui, d, hep, d ¹*J*_{F,P} = 920 Hz, ⁴*J*_{F,F} = 54 Hz, ³*J*_{F,F} = 14 Hz, ⁴*J*_{F,F} = 11 Hz, ⁴*J*_{F,F} = 9 Hz, ³*J*_{F,F} = 5 Hz (2F), **-58.8** d, d, d, t ³*J*_{F,F} = 40 Hz, ³*J*_{F,P} = 22 Hz, ²*J*_{F,F} = 17 Hz, ⁴*J*_{F,F} = 11 Hz (1F^{a}), **-81.6** d, t, d, d ³*J*_{F,F} = 113 Hz, ⁴*J*_{F,F} = 54 Hz, ²*J*_{F,F} = 17 Hz, ³*J*_{F,P} = 16 Hz (1F^{b}), **-82.4** t ⁴*J*_{F,F} = 9 Hz (6F), **-117.2** d, t ²*J*_{F,P} = 120 Hz, ³*J*_{F,F} = 14 Hz (4F), **-185.5** d, d, d, t ³*J*_{F,F} = 113 Hz, ²*J*_{F,P} = 83 Hz, ³*J*_{F,F} = 40 Hz, ³*J*_{F,F} = 5 Hz (1F^{c}). 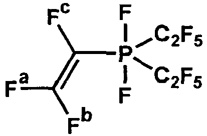 ³¹P-NMR: **-54.1** t, qui, d, d, d ¹*J*_{P,F} = 920 Hz, ²*J*_{P,F} = 120 Hz, ²*J*_{P,F} = 83 Hz, ³*J*_{P,F} = 22 Hz, ³*J*_{P,F} = 16 Hz (1P).

### Beispiel 24. Synthese von Bis(pentafluorethyl)(1,2,2-trifluorvinyl)phosphinoxid aus Bis(pentafluorethyl)difluor-1,2,2-trifluorvinylphosphoran und Hexamethyldisiloxan

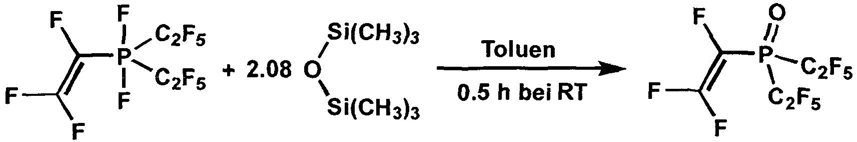

In einem 25-mL Glasrundkolben wird eine farblose Lösung aus Bis(pentafluorethyl)difluortrifluorvinylphosphoran, (C₂F₅)₂(CF₂=CF)PF₂ (714 mg; 1.84 mmol), in Toluen (10 mL, enthält 1.72 mmol C₆H₅CF₃ als internen Standard) aus Beispiel 4 mit Hexamethyldisiloxan, ((CH₃)₃Si)₂O (620 mg; 3.82 mmol) umgesetzt. Die Reaktionslösung wird 30 min bei RT gerührt. Nach 30 min bei RT ist der Umsatz quantitativ. Mithilfe des internen Standards wird die Menge an Bis(pentafluorethyl)trifluorvinylphosphinoxid (655 mg, 1.79 mmol) bestimmt und die Lösung ohne weitere Reinigung verwendet.
NMR (Locksubstanz: CD₃CN; δ in ppm)
¹⁹F-NMR: **-63.6** d, d, d ³*J*_{F,F} = 29 Hz, ³*J*_{F,P} = 11 Hz (1F^{a}), ²*J*_{F,F} = 7 Hz, **-80.4** s Δv_{½} = 6 Hz (6F), - **93.7** d, d, d ³*J*_{F,F} = 121 Hz, ³*J*_{F,P} = 15 Hz, ²*J*_{F,F} = 7 Hz (1F^{b}), **-121.1** d, m ²*J*_{F_{A},F_{B}} = 327 Hz, ²*J*_{F_{A},P} = ²*J*_{F_{B},P} = 83 Hz (2FA), **-122.9** d, m ²*J*_{F_{A'},F_{B'}} = 340 Hz, ²*J*_{F_{A'},P} = ²*J*_{F_{B'},P} = 83 Hz (2F_{B}), **-199.4** d, d, d ³*J*_{F,F} = 121 Hz, ²*J*_{F,P} = 44 Hz, ³*J*_{F,F} = 29 Hz (1F^{c}).
³¹P-NMR: **7.7** t, t, d, d, d ²*J*_{P,F_{A}} = ²*J*_{P,F_{B}} = 83 Hz, ²*J*_{P,F_{A'}} = ²*J*_{P,F_{B'}} = 83 Hz, ²*J*_{P,F} = 44 Hz, ³*J*_{P,F} = 15 Hz, ³*J*_{P,F} = 11 Hz (1P).

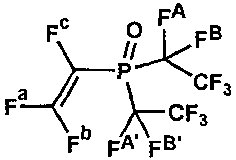

### Beispiel 25. Synthese von Pentafluorethyl-1,2,2-trifluorvinylphosphinsäure aus Bis(pentafluorethyl)(1,2,2-trifluorvinyl)phosphinoxid und Wasser

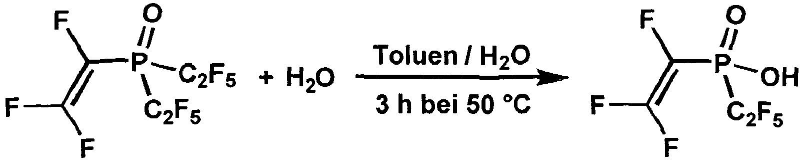

In einem 25-mL Glasrundkolben wird eine farblose Lösung aus Bis(pentafluorethyl)trifluorvinylphosphinoxid, (C₂F₅)₂(CF₂=CF)P=O (655 mg, 1.79 mmol), in Toluen (10 mL, enthält noch C₆H₅CF₃, ((CH₃)₃Si)₂O und (CH₃)₃SiF) in Wasser (15 mL) emulgiert und erwärmt (50 °C). Die Emulsion wird 3 h bei 50 °C gerührt. Nach 3 h bei RT ist der Umsatz quantitativ. Alle flüchtigen Bestandteile werden im Vakuum (10⁻³ mbar) bei RT entfernt. Es kann Pentafluorethyltrifluorvinylphosphinsäure (410 mg, 1.76 mmol) als farblose Flüssigkeit mit einer Ausbeute von 98 % isoliert werden.
NMR (Lösemittel: CD₃CN; δ in ppm)
¹H-NMR: **13.00** s Δv_{½} = 7 Hz (1OH)
¹⁹F-NMR: **-75.9** d, d, d ³*J*_{F,F} = 30 Hz, ²*J*_{F,F} = 24 Hz, ³*J*_{F,P} = 15 Hz (1F^{a}), **-81.9** s Av_{½} = 6 Hz (3F), **-97.4** d, d, d ³*J*_{F,F} = 120 Hz, ²*J*_{F,F} = 24 Hz, ³*J*_{F,P} = 15 Hz (1F^{b}), 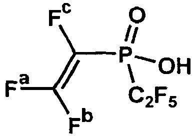 **-128.9** d ²*J*_{F,P} = 90 Hz (2F), **-195.0** d, d, d ³*J*_{F,F} = 120 Hz, ²*J*_{F,P} = 65 Hz, ³*J*_{F,F} = 30 Hz (1F^{c})
³¹P-NMR: **0.6** t, d, d, d ²*J*_{P,F} = 90 Hz, ²*J*_{P,F} = 65 Hz, ³*J*_{P,F} = 15 Hz, ³*J*_{P,F} = 15 Hz (1P).

### Beispiel 26. Polymerisation von Pentafluorethyl-(4-styryl)phosphinsäure mit AIBN

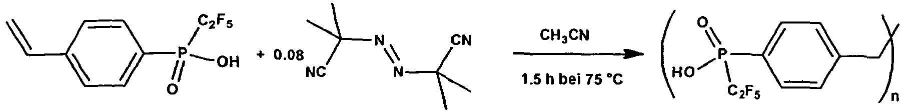

In einem 25-mL Glasrundkolben wird Pentafluorethyl-(4-styryl)phosphinsäure, (C₂F₅)(4-styryl)P(O)OH·0.5H₂O (1.12 g; 3.79 mmol) mit Azobisisobutyronitril (AIBN)(50 mg; 0.30 mmol) unter kräftigem Rühren in CH₃CN (20 mL) gelöst und erwärmt (75 °C). Es kann sofort eine Trübung beobachtet werden. Nach 1.5 h bei 75 °C wird die milchig-trüben Suspension mit CH₃CN (5 mL) in einen 100-mL Glasrundkolben überführt. Alle flüchtigen Substanzen werden im Vakuum (10⁻³ mbar) bei RT entfernt und der weiße pulvrige Feststoff weitere 2 h getrocknet. Es kann polymeres Material als weißes Pulver mit einer Ausbeute von 96 % isoliert werden. Das Polymer beinhaltet noch 0.3 Äquivalent von CH₃CN und 0.1 Äquivalent von H₂O (Elementaranalyse) und noch etwa 5 mol% nicht polymerisiertes (C₂F₅)(4-styryl)P(O)OH (NMR). Der mittlere Polymerisationsgrad (351600 Formeleinheiten) wurde über die gewichtsmittlere Molare Masse und Polydispersität mittels GPC bestimmt.
Verunreinigungen wie CH₃CN kann man entfernen bei Trocknung (50-60° C) im Hoch-Vakuum für 1 Tag.

### Analysenergebnis (GPC):

| | **Mw** | **Mp** | **D** |
|---|---|---|---|
| Poly(pentafluorethyl-4-styrylphosphinsäure) | 94.522.300 | 5.143.990 | 4.338,20 |
| | 100.648.000 | 5.179.390 | 2.905,77 |

| | | | |
|---|---|---|---|
| Bemerkungen: Gesamte Polymerverteilung gewertet | | | |

| | **Mw** | **Mp** | **D** |
|---|---|---|---|
| Poly(pentafluorethyl-4-styrylphosphinsäure) | 17.487.700 | 5.143.990 | 2,92 |
| | 17.387.700 | 5.179.390 | 2,80 |

| | | | |
|---|---|---|---|
| Bemerkungen: Nur Maximum gewertet **Mw** ist die gewichtsmittlere molare Masse, berechnet über den gesamten Peak. **Mp** ist die Molmasse im Peakmaximum. **D** (Polydispersität) ist eine Aussage darüber, wie breit die Massenverteilung des Peaks ist. Je höher dieser Wert ist, umso breiter ist die Massenverteilung. | | | |

Die Analyse zeigt eine sehr weite Massenverteilung mit einem Maxima bei ∼5.200.000 Da.

Folgendes Experiment demonstriert dessen Anwendbarkeit.

### Bestimmung der lonenaustauschkapazität (IEC = ion exchange capacity):

In einem Glasrundkolben (25-mL) wird das Polymer [(C₂F₅)(4-styryl)P(O)OH]ₙ (214 mg; 0.748 mmol) in 0.1 M NaOH_{(aq)} (10 mL, Titer: 1.0019) suspendiert und 24 h bei RT kräftig gerührt. Die resultierende Lösung wird mit 0.1 M HCl_{(aq)} (Titer: 1.0185) titriert. Der Verbrauch an 0.1 M HCl_{(aq)} am Äquivalenzpunkt beträgt 2.752 mL. Daraus resultiert unter Berücksichtigung der Titer eine Menge von 0.720 mmol acider Protonen im polymeren Material. Somit ergibt sich für die IEC ein Wert von 3.36 meq/g (theor.: 3.49 meq/g). Unter Berücksichtigung der Verunreinigungen wie CH₃CN, beträgt die gemessene Ionenaustauschkapazität IEC des Polymers >99% des theoretischen Wertes.

### Beispiel 27. Extraktion von Europiumchlorid mit polypentafluorethyl-4-styrylphosphinsäure

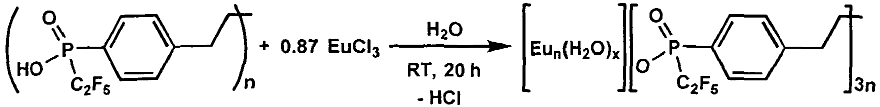

In einem FEP Reaktor (Øᵢ = 8 mm) wird eine Lösung von EuCl₃ (159 mg; 0.616 mmol) in H₂O (2 mL) mit Polypentafluorethyl-4-styrylphosphinsäure, [(C₂F₅)(4-styryl)P(O)OH·0.5H₂O]ₙ (210 mg; 0.712 mmol), versetzt und bei RT gerührt. Nach 20 h wird die hellgelbe Suspension mit feinem Niederschlag (**A**) zentrifugiert, die Mutterlauge dekantiert und der weiße Feststoff (**A**) mit H₂O (3 x 2 mL) gewaschen. Die vereinten Mutterlaugen werden im Vakuum (10⁻³ mbar) bei RT eingeengt und der resultierende weiße und feste Rückstand (**B**) (157 mg) weitere 5 h im Vakuum (10⁻³ mbar) bei RT getrocknet. Der weiße Feststoff (**B**) fluoreszierte bei Bestrahlung mit UV-Licht (λ = 366 nm) intensiv rot (EuCl₃). Mittels Karl-Fischer-Titration konnte der Wassergehalt des Feststoffes zu 45 mg (2.5 mmol) bestimmt werden. Die Elementaranalyse des Feststoffes zeigt noch wenig Verunreinigung von CH₃CN (3 mg; 0,07 mmol) aus dem Edukt. Durch die Röntgen-Fluoreszenz-Analyse konnte im Polymer (**A**) kein Chlorid detektiert werden. Das Verhältnis von Europium zu Phosphor beträgt 0.30 zu 1.00. Es kann EuCl₃ (157 mg - 45 mg (H₂O) - 3 mg (CH₃CN) = 109 mg (0.422 mmol)) als weißer Feststoff (**A**) zurückgewonnen werden. Es werden Eu³⁺ (0.194 mmol) im Polymer durch H⁺ ausgetauscht. Das Verhältnis von Europium zu Phosphor beträgt somit 0.272 zu 1.00, was einem Austausch von 82% der sauren Protonen im Polymer (**A**) entspricht. Bei Bestrahlung mit UV-Licht bei λ = 366 nm zeigt das Polymer eine fahl orangefarbene Fluoreszenz, während es bei λ = 254 nm intensiv pink fluoresziert. Mit Hilfe der Fluoreszenzspektroskopie wird eine Quantenausbeute von 3.6 % bestimmt. Durch Anregung bei λ = 250.0 nm erfolgt maximale Absorption mit Emissionsmaxima bei λ = 590.0 nm (Δv_{½} = 9.8 nm) und 610.5 nm (Δv_{½} = 9.7 nm).

### Beispiel 28. Extraktion von Terbiumchlorid mit Polypentafluorethyl-4-styrylphosphinsäure

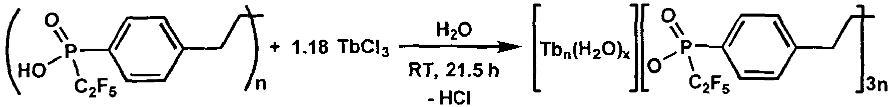

In einem FEP Reaktor (Øᵢ = 8 mm) wird eine Lösung von TbCl₃ (55 mg; 0.207 mmol) in H₂O (1 mL) mit Polypentafluorethyl-4-styrylphosphinsäure, [(C₂F₅)(4-styryl)P(O)OH·0.5H₂O]ₙ (52 mg; 0.176 mmol), versetzt und bei RT gerührt. Nach 22 h wird die weiße Suspension mit voluminösem Niederschlag (**A**) zentrifugiert, die Mutterlauge dekantiert und der weiße Feststoff (**A**) mit H₂O (2 x 1 mL) gewaschen. Die vereinten Mutterlaugen werden im Vakuum (10⁻³ mbar) bei RT eingeengt und der resultierende weiße und feste Rückstand (**B**) (62 mg) weitere 2 h im Vakuum (10⁻³ mbar) bei RT getrocknet. Der weiße Feststoff (**B**) fluoreszierte bei Bestrahlung mit UV-Licht (λ = 254 nm) gelbgrün (TbCl₃). Analog zu dem Versuch mit Europium (Beispiel 6) kann auch hier der Rückstand als Hexaaquakomplex, [Tb(H₂O)₆]Cl₃, angenommen werden. Der Wassergehalt wird zu 18 mg (1.0 mmol) abgeschätzt. Die Elementaranalyse des Feststoffes zeigt noch wenig Verunreinigung von CH₃CN (1 mg; 0,02 mmol) aus dem Edukt. Durch die Röntgen-Fluoreszenz-Analyse konnte im Polymer (**A**) kein Chlorid detektiert werden. Das Verhältnis von Terbium zu Phosphor beträgt 0.33 zu 1.00. Es kann TbCl₃ (62 mg - 18 mg (H₂O) - 1 mg (CH₃CN) = 43 mg (0.162 mmol)) als weißer Feststoff (**A**) isoliert werden. Es werden Tb³⁺ (0.045 mmol) im Polymer durch H⁺ ausgetauscht. Das Verhältnis von Terbium zu Phosphor beträgt somit 0.26 zu 1.00, was einem Austausch von 77% der sauren Protonen im Polymer (**A**) entspricht. Bei Bestrahlung mit UV-Licht bei λ = 254 nm fluoresziert das Polymer (**A**) ebenfalls gelbgrün.

### Beispiel 29. Pfropfpolymerisation von (C₂F₅)(CH₂=CHCH₂CH₂)P(O)OH auf einen porösen Polymerträger (hydrophiler quervernetzter Polyvinylether) mit [NH₄]₂Cer[NO₃]₆ in H₂O bei 40 °C

In einem 500-mL 3-Halsrundkolben mit Rückflusskühler, Tropftrichter und KPG-Rührwerk wird weißes und festes Polymergel (∼20 g) (filtriert aus H₂O-Suspension) vorgelegt und eine wässrige (C₂F₅)(CH₂=CHCH₂CH₂)P(O)OH-Lösung (18.77 g in 100 mL Wasser) zugegeben. Als Starter wird eine wässrige [NH₄]₂Cer[NO₃]₆ (2.41 g)/HNO₃ (65%, 1.44 g)-Lösung (20 mL) in den Tropftrichter gegeben. Die gesamte Apparatur wird im Membranpumpenvakuum (100 mbar) entgast und mit N₂ geflutet. Die Reaktionssuspension wird erwärmt (40 °C) und anschließend die Startersubstanz zugegeben. Die nun gelbe Suspension wird 22 h bei 40 °C gerührt. Anschließend wird filtriert und der Filterkuchen mit Wasser (2 x 100 mL) gewaschen. Das schwachgelbe Polymermaterial wird mit Wasser (3 x 100 mL) und einer H₂SO₄ (konzentriert, 25 g)/Ascorbinsäure(17.6 g)-Lösung (500 mL)(5 x 100 mL) gewaschen. Anschließend wird noch mehrere Male mit einer NaHPO₄/NaOH-Pufferlösung (pH 7, 50 mM) und Wasser (insgesamt 1000 mL) neutralgewaschen. Das leicht beigefarbene Polymermaterial wird unter Millipur-Wasser im Kühlschrank bei 0 °C aufbewahrt. Es entsteht ein Polymermaterial, bei dem 0.9 g der eingesetzten Phosphinsäure an 1 g Polymer gebunden ist.

Das erhaltene Polymermaterial wird zudem Festkörper- und Flüssig-NMRspektroskopisch untersucht. Die detektierten Signale sich vergleichbar mit denen der But-3-en-1-ylpentafluorethylphosphinsäure und können der Struktureinheit 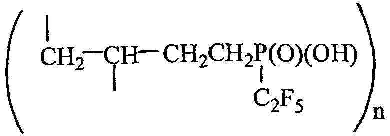 zugeordnet werden.

### Beispiel 30. Polymerisation in Gegenwart eines Kieselgel-Trägermaterials

### Stufe 1: Herstellung von Mercapto-Kieselgel

**Aufgabe:** Synthese von LiChroprep Mercapto aus LiChroprep Si 100; 15µm -25µm. LiChroprep Si 100 hat eine mittlere Porengröße von 10 nm.

LiChroprep Si 100 ist ein traditionell hergestelltes irreguläres SiO₂-Sorbtionsmittel (Kieselgel) mit einer mittleren Porengröße von 10 nm und einer mittleren Partikelgröße von 15µm bis 25µm. LiChroprep Si ist lediglich eine Warenbezeichnung. Die Herstellung derartiger Kieselgele erfolgt nach dem Stand der Technik und sind dem Fachmann bekannt.

**Geräte** : 1L 3-Halskolben, KPG Rührer, Rückflusskühler, Ölbadheizung 90°C, Stickstoffzuleitung, 50 mL Tropftrichter, 1x Rührwerk, 2x Glasfilternutsche 1L Por. 4 1x 2000 mL Dreihalskolben, 2x 2L Saugflasche, 1x Porzellanschale

**Tabelle 1: Verwendete Chemikalien:**

| Menge | Chemikalie | Art. Nr. | Charge | Eigenschaft |
|---|---|---|---|---|
| 100,1g | LiChroprep Si 100 (15-25µm) | | F553395 | S_{BET}=**282,2** m²/g |
| 4,1086 g | Natriumacetat | 1.06268 | A0472968 322 | 0,1M |
| 43,1 g | Mercaptopropylmethyl-dimethoxysilan w=95% | AB111217 | 1068410 | 180,34 g/mol |
| 43,1 mL | | ABCR | | |
| | Dest. Wasser | ------- | --------- | |
| 1,3 L | Methanol | 1.06009.5000 | I734309416 | |

### Durchführung:

Es werden 100,1 g LiChroprep Si100 in einem 1000 mL Dreihalskolben vorgelegt und in 0,1 molare Natriumacetatlösung bei 250 rpm suspendiert. Das Mercaptopropylmethyldimethoxysilan sollte innerhalb von 10 bis 15 Minuten unter Rühren zugetropft werden.
Die Suspension wird 3 Stunden unter Rückfluss (90 °C) erhitzt.

Nach 3 Stunden Erhitzen wird die Suspension langsam unter Rühren auf Raumtemperatur heruntergekühlt.

Danach wird dass Gel auf einer 1 L Por4 Fritte abgenutscht, mit 1 L VE-Wasser erneut aufgeschlämmt und abgesaugt. Das Gel wird in einen 2L Dreihalskolben überführt und mit 1 L Methanol versetzt.

Die Suspension wird 30 Minuten bei 65-69°C erhitzt. Nach dem Abkühlen auf Raumtemperatur wird das Reaktionsgemisch auf einer 1L Por4 Fritte abgesaugt, 2mal mit 100 mL Methanol nachgewaschen und 1 Stunde über Vakuum getrocknet.

Es wird über Nacht ohne Vakuum im Abzug stehen gelassen und am nächsten Tag nochmal für 3 Stunden unter Vakuum getrocknet. Elementaranalyse: C = 6,3 %, S = 4,0 %

### 2. Stufe Addition von But-3-en-1-yl(pentafluoroethyl)phosphinsäure

Charge des Produktes: ScW14FE002

### Geräte:

- 2x 250 mL Dreihalskolben
- Kühler
- KPG Rüher und Rührhülse
- Heizplatte
- Thermometer und Ölbad
- 1000µL Eppendorf Pipette Equi Nr.: 70221348
- Analysenwaage Equ Nr.: 70081915
- 125 mL Por.4 Fritte

**Tabelle 2: Chemikalien:**

| | **Chemikalie** | **Artikelnummer/Charge** | **Stoff menge** | **Equiva lenz- milimol** | **Masse/Volumen** |
|---|---|---|---|---|---|
| | Mercapto-Kieselgel | ScW14FE001 | 1,2699mmol /g 5,77mmol | 4,5µmol/m ² | 4,4990 g |
| | But-3-en-1-yl(pentafluorethyl)-phosphinsäure | | 13,71 mmol | 2,4 | 3,2562 g |
| | Eisessig | K28057163032 | 9 mmol | 2mmol / g | 0,540g |
| | | 1.00063.1000 | | Silica | 0,515 mL |
| | V65 | | 1,1142 mmol | 20%mol | 0,2836g |
| | Methanol | I734309416 | | | 90 mL |
| | | 1.06009.5000 | | | |

### Durchführung:

Das Mercapto-Kieselgel (ScW14FE001) wurde mit 40mL Methanol in einem Dreihalskolben vorgelegt und unter Stickstoff suspendiert. Danach wurden die 3-Butenylpentafluorethylphosphinsäure, der Eisessig und das V65 dazugegeben. Die Gefäße in denen sich die Einwaagen befanden wurden 2-mal mit einer geringen Menge Methanol ausgespült. Das Reaktionsgemisch wurde bei Badtemperatur von 67°C 6h unter Stickstoff gekocht. Die handwarme Reaktionslösung über eine 125 mL Por.4 Fritte abgesaugt.

Das Gel wurde in einen anderen 250 mL Dreihalskolben überführt, mit ca. 50 mL Methanol unter Rühren für 5min gekocht und abgesaugt. Dieser Waschschritt wurde 3mal wiederholt.

Das Gel wurde erst über Nacht im Abzug und danach für 16 Stunden bei 30°C im Vakuumtrockenschrank getrocknet.

### Elementaranalyse:

### 3. Bestimmung der Terbium chlorid-Bindungskapazität Geräte:

- 10, 25 und 100 mL Messkolben
- UV-Spektrometer Ultrospec 4000, Pharmacia Biotech, Inv-nr. 59485
- Ultraschallbad
- Analysenwaage Sartorius BP221 F Equ Nr:70098279
- Zentrifuge 5804 Eppendorf, Equ Nr.: EM 2363

**Tabelle 3: verwendete Chemikalien**

| | **Chemikalie** | **Artikelnummer/ Charge** | **Molare Masse oder S_{BET}** |
|---|---|---|---|
| | Terbium chlorid - Hexahydrat (TbCl3*6 H2O) | 1315353 | 265,29 |
| | LiChroprep Si 100, 15-25 µm | F553395 | |
| | Mercapto-Kieselgel | ScW14FE001 | |
| | Kieselgel aus Stufe 2 | ScW14FE002 | |
| | Wasser, MilliQ | | |

Es wird eine Kallibrationskurve der Adsorption von Terbium chlorid - Hexahydrat in Wasser bei 220 nm im Bereich von 0,018 bis 1,832 mg/ml aufgenommen. Die Augleichsgrade folgte der Geradengleichen y = 0,8502 x + 0,009 mit R² = 0,999.

Ca 200 mg (exakt gewogen) des jeweiligen Kieselgels, wie in Tabelle 4 angegeben, werden in einem verschlossenen Glasgefäß mit je 10 ml einer Stammlösung von 0,521 mg TbCl₃ * 6 H₂O in Wasser versetzt und parallel für 10 min im Ultraschallbad belassen. Je 5 ml der Lösung werden anschliessend bei 5000 rpm für 5 min zentrifugiert und die Adsorption des Überstandes bei 220 nm vermessen.

**Tabelle 4: Ergebnisse:**

| Probe | Adsorption (220 nm) des Überstandes |
|---|---|
| Stammlösung (0,521 mg TbCl₃ * 6 H₂O in Wasser) | 0,437 |
| Kieselgel LiChroprep Si 100, 15-25 µm | 0,401 |
| Kieselgel aus Stufe 2 | 0,148 |

Die Messung der TbCl₃-Adsorption zeigt eine Abnahme um 70%, was der gebundenen Menge an Tb-Kationen entspricht.

## Patentansprüche

1. Verbindungen der Formel I 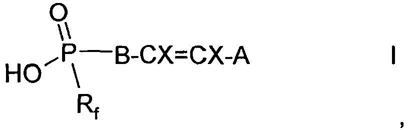 wobei
R_{f} eine geradkettige oder verzweigte Perfluoralkylgruppe mit 1 bis 12 C-Atomen bedeutet,
A H, F, Cl oder eine geradkettige oder verzweigte Alkylgruppe mit 1 bis 12 C-Atomen bedeutet,
B -(CR₁R₂)ₙ-, [-(CR₁R₂)ₘ-O-(CR₁R₂)ₘ₁-]ₘ₂, Arylen oder substituiertes Arylen bedeutet,
X H, F und/oder Cl bedeutet,
n eine ganze Zahl von 0 bis 20 bedeutet,
m eine ganze Zahl von 1 bis 20 bedeutet,
m₁ eine ganze Zahl von 0 bis 8 bedeutet,
m₂ eine ganze Zahl von 1 bis 20 bedeutet und
R₁ oder R₂ jeweils unabhängig voneinander H, F, Cl oder eine geradkettige oder verzweigte Alkylgruppe mit 1 bis 12 C-Atomen bedeuten.

2. Verbindungen nach Anspruch 1, **dadurch gekennzeichnet, dass** Rf eine geradkettige oder verzweigte Perfluoralkylgruppe mit 1 bis 8 C-Atomen bedeutet.

3. Verbindungen nach Anspruch 1 oder 2, **dadurch gekennzeichnet, dass** A und X gleich sind.

4. Verbindungen nach einem oder mehreren der Ansprüche 1 bis 3, **dadurch gekennzeichnet, dass** B -(CR₁R₂)ₙ-, Arylen oder substituiertes Arylen bedeutet.

5. Verfahren zur Herstellung von Verbindungen der Formel I nach einem der Ansprüche 1 bis 4, **dadurch gekennzeichnet, dass**
a) eine Verbindung der Formel II
(F)ₓ(R_{f})₄₋ₓP-B-CX=CX-A II
wobei Rf, A, B und X eine in einem oder mehreren der Ansprüche 1 bis 4 angegebene Bedeutung haben und x 1 oder 2 bedeutet, hydrolysiert wird, wobei eine Zwischenverbindung der Formel IIIa intermediär entsteht 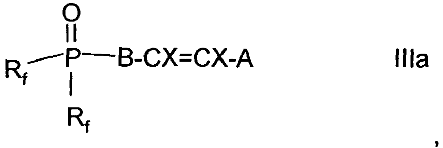 wobei Rf, A, B und X eine in Formel II angegebene Bedeutung haben, oder
b) eine Verbindung der Formel II
(F)ₓ(R_{f})₄₋ₓP-B-CX=CX-A II,
wobei Rf, A, B und X eine in einem oder mehreren der Ansprüche 1 bis 4 angegebene Bedeutung haben und x 1, 2 oder 3 bedeutet, mit einem Hexaalkyldisiloxan ohne oder in Gegenwart einer katalytischen Menge Wasser umgesetzt wird,
wobei die Alkylgruppen des Hexaalkyldisiloxans jeweils unabhängig voneinander eine geradkettige oder verzweigte Alkylgrupe mit 1 bis 4 C-Atomen bedeuten, so dass eine Zwischenverbindung der Formel III, 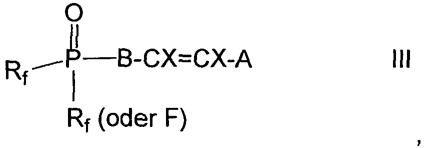 entsteht, wobei Rf, A, B und X eine in Formel II angegebene Bedeutung haben, die anschließend hydrolysiert wird.

6. Verbindungen der Formel IIIa, 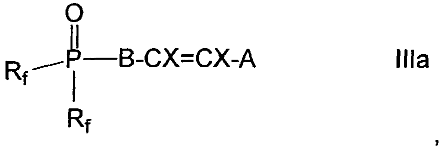 wobei Rf, A, B und X eine in einem der Ansprüche 1 bis 4 angegebene Bedeutung haben.

7. Verwendung von Verbindungen der Formel I nach einem oder mehreren der Ansprüche 1 bis 4 zur Herstellung von Oligomeren oder Polymeren.

8. Oligomer oder Polymer enthaltend polymerisierte Verbindungen der Formel I, nach einem oder mehreren der Ansprüche 1 bis 4, als Monomereinheiten.

9. Verfahren zur Herstellung von Oligomeren oder Polymeren nach Anspruch 8, **dadurch gekennzeichnet, dass** Verbindungen der Formel I, wie in einem oder mehreren der Ansprüche 1 bis 4 beschrieben, gegebenenfalls zusammen mit weiteren Monomeren und gegebenenfalls in Anwesenheit eines Vernetzungsmittels, polymerisiert werden.

10. Verfahren nach Anspruch 9, **dadurch gekennzeichnet, dass** die Polymerisation radikalisch durchgeführt wird.

11. Verfahren nach Anspruch 9 oder 10, **dadurch gekennzeichnet, dass** ein Homopolymer hergestellt wird.

12. Verfahren nach einem oder mehreren der Ansprüche 9 bis 11, **dadurch gekennzeichnet, dass** ohne Vernetzungsmittel polymerisiert wird.

13. Verfahren nach einem oder mehrern der Ansprüche 9 bis 12, **dadurch gekennzeichnet**, das die Polymerisation in, auf oder an einem Trägermaterial stattfindet.

14. Kompositmaterial enthaltend ein Trägermaterial und mindestens eine Verbindung nach Anspruch 1 oder Verbindungen nach Anspruch 8.

15. Verwendung der Verbindungen nach einem oder mehreren der Ansprüche 1 bis 4, nach Anspruch 6, nach Anspruch 8 oder nach Anspruch 14 als Ionenaustauscher oder als Brønsted-Säure Katalysator.

16. Verwendung der Verbindungen nach einem oder mehreren der Ansprüche 1 bis 4, nach Anspruch 6, nach Anspruch 8 oder nach Anspruch 14 zur Extraktion von Kationen der Seltenen Erden aus Lösungen.

17. Salze der Verbindungen nach Anspruch 1 der Formel I entsprechend der Formel IV, 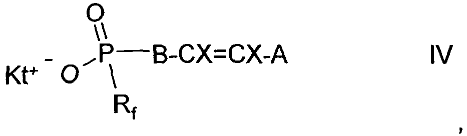 oder ionische Verbindungen nach Anspurch 8 enthaltend polymerisierte Salze der Formel IV oder ionische Verbindungen nach Anspruch 14 enthaltend ein Trägermaterial und mindestens ein Salz der Formel IV oder ionische Polymere oder Oligomere enthaltend polymerisierte Salze der Formel IV, wobei die Kationen Kt+ in Formel IV ein anorganisches oder organisches Kation bedeuten und wobei Rf, A, B und X eine in einem der Ansprüche 1 bis 4 angegebene Bedeutung haben.

## Claims

1. Compounds of the formula I 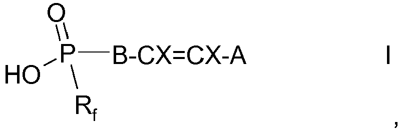 where
R_{f} denotes a straight-chain or branched perfluoroalkyl group having 1 to 12 C atoms,
A denotes H, F, Cl or a straight-chain or branched alkyl group having 1 to 12 C atoms,
B denotes -(CR₁R₂)ₙ-, [-(CR₁R₂)ₘ-O-(CR₁R₂)ₘ₁-]ₘ₂, arylene or substituted arylene,
X denotes H, F and/or Cl,
n denotes an integer from 0 to 20,
m denotes an integer from 1 to 20,
m₁ denotes an integer from 0 to 8,
m₂ denotes an integer from 1 to 20 and
R₁ or R₂ each, independently of one another, denote H, F, Cl or a straight-chain or branched alkyl group having 1 to 12 C atoms.

2. Compounds according to Claim 1, **characterised in that** R_{f} denotes a straight-chain or branched perfluoroalkyl group having 1 to 8 C atoms.

3. Compounds according to Claim 1 or 2, **characterised in that** A and X are identical.

4. Compounds according to one or more of Claims 1 to 3, **characterised in that** B denotes -(CR₁R₂)ₙ-, arylene or substituted arylene.

5. Process for the preparation of compounds of the formula I according to one of Claims 1 to 4, **characterised in that**
a) a compound of the formula II
(F)ₓ(R_{f})₄₋ₓP-B-CX=CX-A II
where Rf, A, B and X have a meaning indicated in one or more of Claims 1 to 4 and x denotes 1 or 2, is hydrolysed, giving an intermediate compound of the formula IIIa as intermediate, 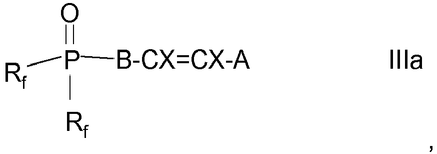 where Rf, A, B and X have a meaning indicated in formula II,
or
b) a compound of the formula II
(F)ₓ(R_{f})₄₋ₓP-B-CX=CX-A II
where Rf, A, B and X have a meaning indicated in one or more of Claims 1 to 4 and x denotes 1, 2 or 3, is reacted with a hexaalkyldisiloxane without or in the presence of a catalytic amount of water,
where the alkyl groups of the hexaalkyldisiloxane each, independently of one another, denote a straight-chain or branched alkyl group having 1 to 4 C atoms, giving an intermediate compound of the formula III, 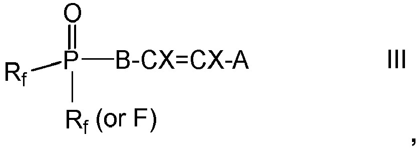 where Rf, A, B and X a have a meaning indicated in formula II, which is subsequently hydrolysed.

6. Compounds of the formula IIIa, 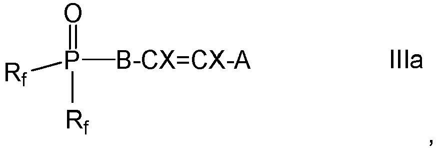 where Rf, A, B and X have a meaning indicated in one of Claims 1 to 4.

7. Use of compounds of the formula I according to one or more of Claims 1 to 4 for the preparation of oligomers or polymers.

8. Oligomer or polymer containing polymerised compounds of the formula I, according to one or more of Claims 1 to 4, as monomer units.

9. Process for the preparation of oligomers or polymers according to Claim 8, **characterised in that** compounds of the formula I, as described in one or more of Claims 1 to 4, are polymerised, optionally together with further monomers and optionally in the presence of a crosslinking agent.

10. Process according to Claim 9, **characterised in that** the polymerisation is carried out by means of free radicals

11. Process according to Claim 9 or 10, **characterised in that** a homopolymer is prepared.

12. Process according to one or more of Claims 9 to 11, **characterised in that** the polymerisation is carried out without crosslinking agents.

13. Process according to one or more of Claims 9 to 12, **characterised in that** the polymerisation is carried out in, on or at a support material.

14. Composite material comprising a support material and at least one compound according to Claim 1 or compounds according to Claim 8.

15. Use of the compounds according to one or more of Claims 1 to 4, according to Claim 6, according to Claim 8 or according to Claim 14 as ion exchanger or as Bronsted acid catalyst.

16. Use of the compounds according to one or more of Claims 1 to 4, according to Claim 6, according to Claim 8 or according to Claim 14 for the extraction of cations of the rare earths from solutions.

17. Salts of the compounds according to Claim 1 of the formula I corresponding to the formula IV, 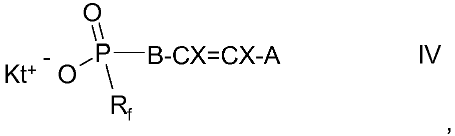 or ionic compounds according to Claim 8 containing polymerised salts of the formula IV or ionic compounds according to Claim 14 containing a support material and at least one salt of the formula IV or ionic polymers or oligomers containing polymerised salts of the formula IV, where the cations Kt⁺ in formula IV denote an inorganic or organic cation and where Rf, A, B and X have a meaning indicated in one of Claims 1 to 4.

## Revendications

1. Composés de formule I 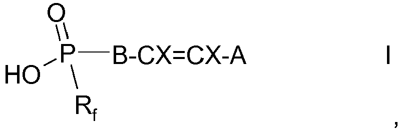 dans lesquels
R_{f} désigne un groupement perfluoroalkyle à chaîne linéaire ou ramifiée ayant de 1 à 12 atomes de C,
A désigne H, F, Cl ou un groupement alkyle à chaîne linéaire ou ramifiée ayant de 1 à 12 atomes de C,
B désigne -(CR₁R₂)ₙ-, [-(CR₁R₂)ₘ-O-(CR₁R₂)ₘ₁-]ₘ₂, arylène ou arylène substitué,
X désigne H, F et/ou Cl,
n désigne un nombre entier allant de 0 à 20,
m désigne un nombre entier allant de 1 à 20,
m₁ désigne un nombre entier allant de 0 à 8,
m₂ désigne un nombre entier allant de 1 à 20 et
R₁ ou R₂ désignent chacun, indépendamment l'un de l'autre, H, F, Cl ou un groupement alkyle à chaîne linéaire ou ramifiée ayant de 1 à 12 atomes de C.

2. Composés selon la revendication 1, **caractérisés en ce que** R_{f} désigne un groupement perfluoroalkyle à chaîne linéaire ou ramifiée ayant de 1 à 8 atomes de C.

3. Composés selon la revendication 1 ou 2, **caractérisés en ce que** A et X sont identiques.

4. Composés selon l'une ou plusieurs parmi les revendications 1 à 3, **caractérisés en ce que** B désigne -(CR₁R₂)ₙ-, arylène ou arylène substitué.

5. Procédé de préparation de composés de formule I selon l'une des revendications 1 à 4, **caractérisé en ce que**
a) un composé de formule II
(F)ₓ(R_{f})₄₋ₓP-B-CX=CX-A II
où R_{f}, A, B et X revêtent une signification indiquée selon l'une ou plusieurs parmi les revendications 1 à 4 et x désigne 1 ou 2, est hydrolysé, donnant un composé intermédiaire de formule IIIa comme intermédiaire, 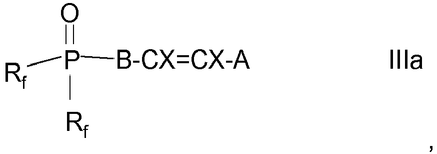 où R_{f}, A, B et X revêtent une signification indiquée selon la formule II, ou
b) un composé de formule II
(F)ₓ(R_{f})₄₋ₓP-B-CX=CX-A II
où R_{f}, A, B et X revêtent une signification indiquée selon l'une ou plusieurs parmi les revendications 1 à 4 et x désigne 1, 2 ou 3, est réagi avec un hexaalkyldisiloxane sans ou en présence d'une quantité catalytique d'eau,
où les groupements alkyle de l'hexaalkyldisiloxane désignent chacun, indépendamment les uns des autres, un groupement alkyle à chaîne linéaire ou ramifiée ayant de 1 à 4 atomes de C, donnant un composé intermédiaire de formule III, 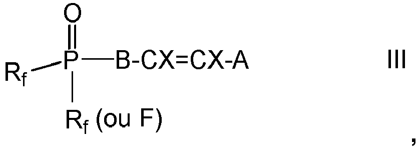 où R_{f}, A, B et X a revêtent une signification indiquée selon la formule II, qui est ensuite hydrolysé.

6. Composés de formule IIIa, 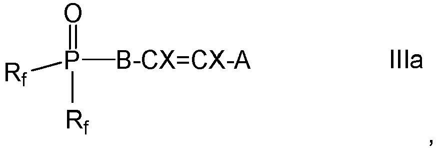 dans lesquels R_{f}, A, B et X revêtent une signification indiquée selon l'une des revendications 1 à 4.

7. Utilisation de composés de formule I selon l'une ou plusieurs parmi les revendications 1 à 4, pour la préparation d'oligomères ou de polymères.

8. Oligomère ou polymère contenant des composés de formule I polymérisés, selon l'une ou plusieurs parmi les revendications 1 à 4, comme motifs monomères.

9. Procédé de préparation d'oligomères ou de polymères selon la revendication 8, **caractérisé en ce que** des composés de formule I, tels que décrits selon l'une ou plusieurs parmi les revendications 1 à 4, sont polymérisés, éventuellement conjointement avec d'autres monomères et éventuellement en présence d'un agent de réticulation.

10. Procédé selon la revendication 9, **caractérisé en ce que** la polymérisation est effectuée au moyen de radicaux libres.

11. Procédé selon la revendication 9 ou 10, **caractérisé en ce qu'**un homopolymère est préparé.

12. Procédé selon l'une ou plusieurs parmi les revendications 9 à 11, **caractérisé en ce que** la polymérisation est effectuée sans agents de réticulation.

13. Procédé selon l'une ou plusieurs parmi les revendications 9 à 12, **caractérisé en ce que** la polymérisation est effectuée dans, sur ou au niveau d'un matériau support.

14. Matériau composite comprenant un matériau support et au moins un composé selon la revendication 1 ou des composés selon la revendication 8.

15. Utilisation des composés selon l'une ou plusieurs parmi les revendications 1 à 4, selon la revendication 6, selon la revendication 8 ou selon la revendication 14, comme échangeur d'ions ou comme catalyseur de type acide de Brønsted.

16. Utilisation des composés selon l'une ou plusieurs parmi les revendications 1 à 4, selon la revendication 6, selon la revendication 8 ou selon la revendication 14, pour l'extraction de cations de terres rares à partir de solutions.

17. Sels des composés selon la revendication 1 de formule I, correspondant à la formule IV, 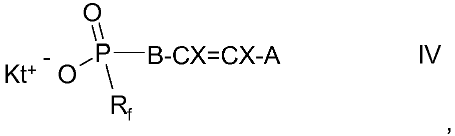 ou composés ioniques selon la revendication 8 contenant des sels polymérisés de formule IV ou composés ioniques selon la revendication 14 contenant un matériau support et au moins un sel de formule IV ou polymères ou oligomères ioniques contenant des sels polymérisés de formule IV, où les cations Kt⁺ selon la formule IV désignent un cation inorganique ou organique et où Rf, A, B et X revêtent une signification indiquée selon l'une des revendications 1 à 4.
